# EUROPEAN PATENT SPECIFICATION

(11) **EP 3 161 398 B1**
(45) Date of publication and mention of the grant of the patent: **10.03.2021**
(21) Application number: 15837497.5
(22) Date of filing: 05.08.2015
(51) Int. Cl.: F25D 29/00, F25D 25/02

(54) **REFRIGERATOR AND CONTROLLING METHOD THEREOF**
KÜHLSCHRANK UND STEUERUNGSVERFAHREN DAFÜR
RÉFRIGÉRATEUR ET SON PROCÉDÉ DE COMMANDE

(30) Priority: 04.09.2014 KR 20140118099; 27.10.2014 KR 20140146107; 19.06.2015 KR 20150087195
(43) Date of publication of application: 03.05.2017
(73) Proprietor: Samsung Electronics Co., Ltd., Gyeonggi-do 16677 (KR)
(72) Inventor: HWANG, Sung Chul, Suwon-si, Gyeonggi-do 16682 (KR); YI, Seung Hee, Yongin-si, Gyeonggi-do 16951 (KR); CHOI, Yoon Ho, Seoul 04428 (KR); KIM, Yoon Young, Suwon-si, Gyeonggi-do 16707 (KR); KIM, Jung Yeob, Suwon-si, Gyeonggi-do 16548 (KR)
(74) Representative: Walaski, Jan Filip
(86) International application number: PCT/KR2015/008177
(87) International publication number: WO 2016/036015

(56) References cited:
- EP-A1- 2 696 314
- EP-A2- 0 249 974
- WO-A1-2005/091236
- JP-A- 2002 081 848
- JP-A- 2003 227 676
- JP-A- 2003 276 809
- JP-A- 2006 284 111
- KR-A- 20110 010 413
- KR-B1- 100 844 626
- NL-C2- 1 010 254
- US-A1- 2007 162 357
- US-A1- 2007 191 983
- US-A1- 2007 191 983
- US-A1- 2014 126 829

## Description

The present disclosure relates to a refrigerator and a method of controlling the same, and more particularly, to a refrigerator that is capable of accommodating a storage container in which a food item is stored, and a method of controlling the same.

In general, a refrigerator is a home appliance that includes a storage compartment in which foods are stored, and a cold air supplying unit for supplying cold air to the storage compartment to keep foods fresh.

Refrigerators for keeping particular food in addition to keeping general food under refrigeration have been recently developed. For example, a fermented food refrigerator for keeping fermented food in an optimum state, and a wine refrigerator for keeping wine in an optimum state have been released.

In particular, since storage temperatures of wine are different from each other according to types of wine, wine may be separately kept according to the types of wine.

However, in a wine refrigerator of the related art, a user should determine the types of wine by himself/herself and store wine in different storage compartments according to the types of wine.

JP2006-284111A1 describes a refrigerator comprising an information tag attached to the refrigerator, an information tag transmitting/receiving part for transmitting/receiving information to/from the information tag, and a stock detecting part for determining stock when there is no communication of the information tag transmitting/receiving part with the information tag. Thus, stock detection is carried out without pasting the information tag to a food container.

JP 2002-081848 describes a refrigerator having antennas buried and arranged in the rear surface of insulating material and rack plate of the side wall of a refrigerator main body to communicate with the wireless tags in foods received in respective room units of a refrigerating chamber, a vegetable chamber, a switching chamber or a freezing chamber. A control device detects the position of food by specifying food information received by a reader and an antenna receiving the food information, and indicates the position via an indicating device.

WO 2005/091236 describes an electrically operated system that facilitates human interaction with food and beverage containers and their contents. Electrically operable indicators (e.g. LED's) facilitate human insertion/retrieval of wine bottles to/from wine storage systems (e.g. wine cellar, wine rack).

The present disclosure is directed to providing a refrigerator that is capable of identifying a food item and displaying a storage space in which the identified food item can be stored, and a method of controlling the same.

The present disclosure is also directed to providing a refrigerator that is capable of displaying a storage space in which a food item selected by a user is stored, and a method of controlling the same.

One aspect of the present disclosure provides a refrigerator according to claim 1 and a method of controlling the refrigerator according to claim 11.

The present disclosure also describes a refrigerator including: a storage compartment in which a plurality of accommodation spaces are disposed; a detection unit that detects a storage container accommodated in the plurality of accommodation spaces; a display unit that displays accommodation information regarding the plurality of accommodation spaces; and a controller that controls the display unit to display the accommodation spaces in which a new storage container may be accommodated, based on a result of detection of the detection unit.

According to an embodiment, the refrigerator may further include a communication unit that communicates with an external device, wherein the controller may control the display unit to display an accommodation space in which a storage container in which a food item is stored, may be accommodated, based on information about the food item received from the external device and the detection result of the detection unit.

According to an embodiment, when the storage container is accommodated, the controller may transmit information regarding the accommodation space in which the storage container is accommodated, to the external device.

According to an embodiment, the refrigerator may further include a communication unit that communicates with an external device, wherein the controller may control the display unit to display an accommodation space in which a storage container in which a food item is stored, is accommodated, based on information about the food item received from the external device.

According to an embodiment, when the storage container accommodated in the accommodation space is unloaded, the controller may transmit information regarding the accommodation space from which the storage container is unloaded, to the external device.

According to an embodiment, the detection unit may include a plurality of micro-switches installed in a position corresponding to the plurality of accommodation spaces.

According to an embodiment, the controller may determine the accommodation space in which the storage container is accommodated, based on a micro-switch that outputs container detection signals among the plurality of micro-switches.

According to an embodiment, the detection unit may include a plurality of infrared sensors installed in positions corresponding to the plurality of accommodation spaces.

According to an embodiment, the display unit may include a plurality of light-emitting diodes installed in positions corresponding to the plurality of accommodation spaces.

According to an embodiment, the controller may control the display unit so that a light-emitting diode module corresponding to the accommodation space in which the storage container is accommodated, emits light.

According to an embodiment, the controller may control the display unit so that a light-emitting diode module corresponding to the accommodation space in which the storage container may be accommodated, emits light.

According to an embodiment, the refrigerator may further include an image acquisition unit that acquires an image, wherein, when an image of the storage container is acquired by the image acquisition unit, the controller may identify the food item stored in the storage container based on the acquired image.

According to an embodiment, the controller may control the display unit to display an accommodation space in which the storage container of the identified food item may be accommodated.

According to an embodiment, the refrigerator may further include an image display unit that displays the image acquired by the image acquisition unit.

The present disclosure also describes a method of controlling a refrigerator including a plurality of accommodation spaces having different storage temperature ranges, the method including: identifying a food item stored in a storage container based on a label of the storage container; detecting the storage container stored in each of the plurality of accommodation spaces; and displaying an accommodation space in which the storage container is to be stored, based on the detection of the storage container.

According to an embodiment, the detecting of the storage container stored in each of the plurality of accommodation spaces may include determining whether the storage container is accommodated, using a plurality of micro-switches installed to correspond to the plurality of accommodation spaces.

According to an embodiment, the displaying of the accommodation space in which the storage container is to be stored, may include displaying the accommodation space in which the storage container may be accommodated, using a plurality of light-emitting diode modules installed to correspond to the plurality of accommodation spaces.

According to an embodiment, the identifying of the food item stored in the storage container may include: transmitting an image of the storage container to an external device; and receiving identification information about the food item from the external device.

According to an embodiment, the method may further include: receiving information of a food item to be unloaded from an user; and displaying an accommodation space in which a storage container of the food item to be unloaded is accommodated.

According to an embodiment, the displaying of the accommodation space in which the storage container of the food item to be unloaded is accommodated, may include displaying an accommodation space in which the storage container is accommodated, using a plurality of light-emitting diode modules installed to correspond to the plurality of accommodation spaces.

The present disclosure also describes a food management system including: a label detection unit that detects a label of a storage container; a keeping unit including a plurality of keeping spaces for keeping the storage container; a detection unit that is installed in the plurality of keeping spaces and detects whether the storage container is kept in the plurality of keeping spaces; a display unit installed in each of the plurality of keeping spaces; and a display device that displays information about keeping the storage container in the plurality of keeping spaces, wherein a keeping space in which a new storage container is to be kept, may be displayed by the display unit and the display device based on a result of detection of the label detection unit and the information about keeping the storage container.

The present disclosure also describes a refrigerator including: a main body in which a storage compartment is formed; and a shelf assembly that is disposed in the storage compartment, forms a plurality of accommodation spaces and includes a container detection sensor for detecting a storage container accommodated in each of the plurality of accommodation spaces and a display for displaying accommodation information regarding the storage container.

According to an embodiment, the shelf assembly may be disposed to protrude from the storage compartment or to be inserted into the storage compartment.

According to an embodiment, the container detection sensor may include a reed switch including a moving member that generates a magnetic field and moves between a first position and a second position depending on whether the storage container is accommodated, and a fixed member that outputs container detection signals depending on whether the magnetic field is detected.

According to an embodiment, the container detection sensor may include an infrared sensor module including an infrared radiating device that radiates infrared light and an infrared detector that is disposed on a side opposite to the infrared radiating device based on the accommodation space and outputs container detection signals depending on whether the infrared light is detected.

According to an embodiment, the display may include light-emitting devices that are disposed to correspond to the plurality of accommodation spaces and display accommodation information indicating whether the storage container is accommodated in each of the plurality of accommodation spaces.

According to an embodiment, the refrigerator may further include a processor that is disposed in the main body and displays the accommodation information on the display based on a detection result of the container detection sensor.

According to an embodiment, the shelf assembly may include: electric wires that transmit electrical signals between the container detection sensor, the display, and the processor; and a chain cable that guides the electric wires from the shelf assembly to the main body.

According to an embodiment, the chain cable may be expanded or contracted in a movement direction of the shelf assembly, and movement of the chain cable in a direction perpendicular to the movement direction of the shelf assembly may be limited.

### Advantageous Effects of Invention

As described above, a refrigerator can identify a food item using an image of a storage container, determine a storage space in which the food item can be stored, using a container detection unit, and display the storage space in which the food item can be stored, using an accommodation space display unit.

In addition, the refrigerator can determine the storage space in which the food item selected by the user is stored, display the storage space in which the food item selected by the user is stored, and determine whether the food item selected by the user is unloaded, using the container detection unit.

### Brief Description of Drawings

FIG. 1 is a view of an example of operations of a refrigerator and a portable terminal device according to an embodiment of the present invention.
FIGS. 2 and 3 are views of an exterior of the refrigerator according to an embodiment of the present invention.
FIGS. 4 and 5 are views of an interior of the refrigerator according to an embodiment of the present invention.
FIG. 6 is a view of a shelf assembly included in the refrigerator according to an embodiment of the present invention.
FIG. 7 is a view of a control configuration of the refrigerator according to an embodiment of the present invention.
FIG. 8A is a view of a control panel that is included in the refrigerator according to an embodiment of the present invention disposed in a first rotation position.
FIG. 8B is a view of a left side surface of a control panel illustrated in FIG. 8A.
FIG. 9A is a view of the control panel that is included in the refrigerator according to an embodiment of the present invention disposed in a second rotation position.
FIG. 9B is a view of a left side surface of a control panel illustrated in FIG. 9A.
FIG. 10 is a view of a container detection unit included in the refrigerator according to an embodiment of the present invention.
FIG. 11 is an enlarged view of a region C illustrated in FIG. 10.
FIGS. 12 and 13 are views of a portable terminal device that is capable of communicating with the refrigerator according to an embodiment of the present invention, according to an embodiment of the present invention.
FIG. 14 is a view of an example of a storage container accommodating operation of the refrigerator and the portable terminal device according to an embodiment of the present invention.
FIGS. 15 through 17 are views of an example of a screen displayed on the portable terminal device.
FIGS. 18 and 19 are views of an example in which the portable terminal device identifies a food item.
FIGS. 20 and 21 are views of another example of the screen displayed on the portable terminal device.
FIG. 22 is a view of a case where the refrigerator according to an embodiment of the present invention displays an accommodation space in which the storage container may be accommodated
FIG. 23 is a view of an example of the screen displayed on the portable terminal device after a storage container is accommodated in the refrigerator according to an embodiment of the present invention.
FIG. 24 is a view of an example of a storage container unloading operation of the refrigerator and the portable terminal device according to an embodiment of the present invention.
FIGS. 25 and 26 are views of an example of the screen displayed on the portable terminal device so as to unload the storage container from the refrigerator according to an embodiment of the present invention.
FIG. 27 is a view of a case where the refrigerator according to an embodiment of the present invention displays an accommodation space in which the storage container is to be unloaded from the refrigerator.
FIGS. 28 and 29 are views of an example of the screen displayed on the portable terminal device after the storage container is unloaded from the refrigerator according to an embodiment of the present invention.
FIG. 30 is a view of another example of the storage container unloading operation of the refrigerator and the portable terminal device according to an embodiment of the present invention.
FIG. 31 is a view of an example of an item reloading operation of the refrigerator and the portable terminal device according to an embodiment of the present invention.
FIG. 32 is a view of the screen displayed on the refrigerator according to an embodiment of the present invention when the item is reloaded.
FIG. 33 is a view of a case where the refrigerator according to an embodiment of the present invention displays the accommodation space in which the storage container may be accommodated, when the item is reloaded.
FIG. 34 is a view of an example of an operation of a refrigerator according to another embodiment of the present invention.
FIG. 35 is a view of a control configuration of the refrigerator according to another embodiment of the present invention.
FIG. 36 is a view of an example of a storage container accommodating operation of the refrigerator according to another embodiment of the present invention.
FIG. 37 is a view of a case where image acquisition instructions for acquiring an image of a storage container are input using the refrigerator according to another embodiment of the present invention.
FIGS. 38 and 39 are views of an example of a screen displayed on the refrigerator according to another embodiment of the present invention.
FIG. 40 is a view of an example in which the refrigerator according to another embodiment of the present invention acquires an image of the storage container and displays the image.
FIG. 41 is a view of an example in which the refrigerator according to another embodiment of the present invention acquires the image of the storage container.
FIGS. 42 and 43 are views of another example of the screen displayed on the refrigerator according to another embodiment of the present invention.
FIG. 44 is a view of an example of a storage container unloading operation of the refrigerator according to another embodiment of the present invention.
FIG. 45 is a view of an example of an item reloading operation of the refrigerator according to another embodiment of the present invention.
FIG. 46 is a view of an exterior of a refrigerator according to still another embodiment of the present invention.
FIG. 47 is a view of a shelf assembly included in the refrigerator according to yet another embodiment of the present invention.
FIG. 48 is an exploded view of the shelf assembly illustrated in FIG. 47.
FIG. 49 is a view of a display unit included in the shelf assembly illustrated in FIG. 47.
FIG. 50 is a cross-sectional view taken along line D-D' illustrated in FIG. 49.
FIG. 51 is a view of an example of a storage container detection unit included in the shelf assembly illustrated in FIG. 47.
FIGS. 52 and 53 are cross-sectional views taken along line A-A' illustrated in FIG. 47.
FIG. 54 is a view of another example of a storage container detection unit included in the shelf assembly illustrated in FIG. 47.
FIGS. 55 and 56 are cross-sectional views taken along line B-B' illustrated in FIG. 54.
FIG. 57 is a view of still another example of a storage container detection unit included in the shelf assembly illustrated in FIG. 47.
FIGS. 58 and 59 are cross-sectional views taken along line C-C' illustrated in FIG. 57.
FIG. 60 is a view of the arrangement of electrical wires of the shelf assembly illustrated in FIG. 47.
FIG. 61 is a view of a chain cable included in the shelf assembly illustrated in FIG. 47.
FIGS. 62A and 62B are views of the protruding shelf assembly illustrated in FIG. 47.

### Mode for the Invention

Embodiments described in the present specification and configurations illustrated in the drawings are just exemplary embodiments of the present invention, and there may be various modifications that may replace embodiments and the drawings of the present specification at the time of filing the present application.

In addition, like reference numerals or marks in drawings of the present specification refer to like components or elements that perform substantially the same functions.

In addition, the terms used in the present specification are merely used to describe particular embodiments, and are not intended to limit and/or restrict the present invention. An expression used in the singular encompasses the expression of the plural, unless it has a clearly different meaning in the context. In the present specification, it is to be understood that the terms such as "including" or "having," etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

In addition, it will be understood that, although the terms including ordinal numbers, such as "first", "second" etc., may be used herein to describe various elements, these elements should not be limited by these terms. These terms are only used to distinguish one element from another element. For example, a first element could be termed a second element, and similarly, a second element could also be termed a first element without departing from the teachings of exemplary embodiments. The term "and/or" includes any and all combinations of one or more of the associated listed items.

In addition, "touch" may be generated by one among fingers including a thumb or a touchable input unit, for example, a stylus. Touch may include hovering by one among fingers including a thumb or a touchable input unit. In addition, "touch" may include single touch and multi-touch.

Hereinafter, exemplary embodiments of the present invention will be described in detail with reference to the accompanying drawings.

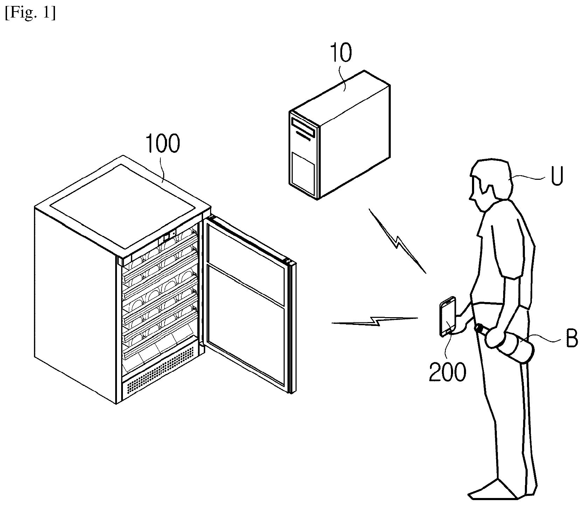

FIG. 1 is a view of an example of operations of a refrigerator and a portable terminal device according to an embodiment of the present invention.

Referring to FIG. 1, a refrigerator 100 and a portable terminal device 200 may manage a food item to be stored in the refrigerator 100 in cooperation with each other.

In detail, the portable terminal device 200 may acquire an image of a storage container B in which the food item is stored, and may identify the food item based on the acquired image. In this case, the portable terminal device 200 may use a food item database stored in an external server 10 or a food item database stored in the portable terminal device 200 so as to identify the food item.

Also, the portable terminal device 200 may display information about the identified food item based on the image of the storage container B. The portable terminal device 200 may use the food item database stored in the external server 10 or the food item database stored in the portable terminal device 200 so as to display the information about the food item.

If the food item is identified, the portable terminal device 200 may transmit the information about the identified food item to the refrigerator 100 according to user's instructions.

The refrigerator 100 that receives the information about the identified food item determines whether the food item is loaded into an accommodation space. In other words, the refrigerator 100 determines whether the storage container B of the food item is loaded into a storage compartment. If the food item is loaded into the accommodation space, the refrigerator 100 may store storage information indicating that the food item is stored in the accommodation space, accommodation space information about the space in which the food item is stored, and the information about the food item.

Subsequently, if the user selects a food item so as to unload the food item, the refrigerator 100 may determine the accommodation space in which the food item is stored, based on the accommodation space information and may display the accommodation space in which the food item selected by the user is stored.

As described above, the refrigerator 100 may manage the food item stored in the refrigerator 100 in cooperation with the portable terminal device 200.

Hereinafter, configurations of the refrigerator 100 and the portable terminal device 200 will be first described, and then detailed operations of the refrigerator 100 and the portable terminal device 200 will be described.

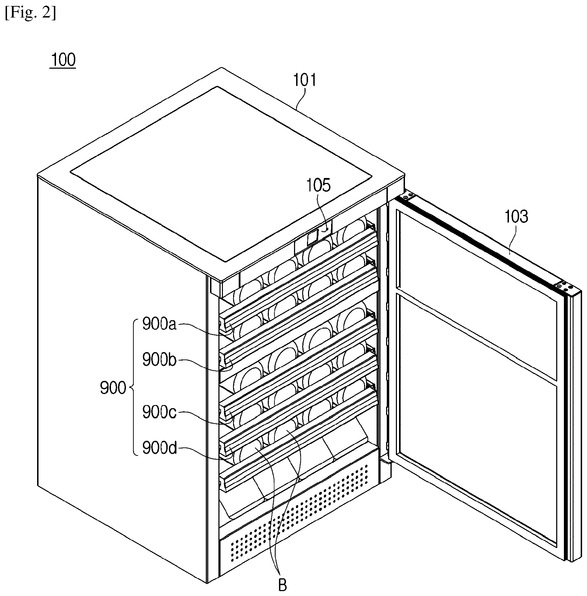

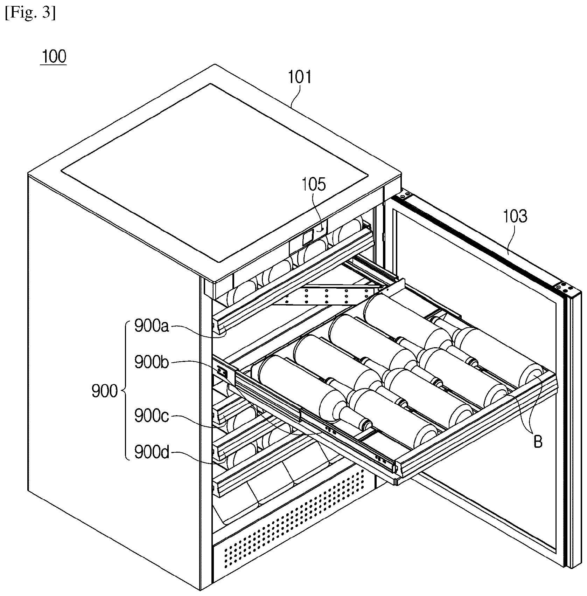

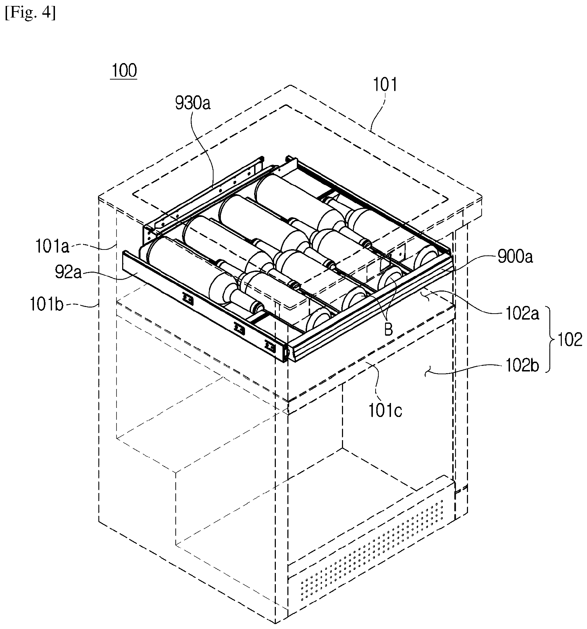

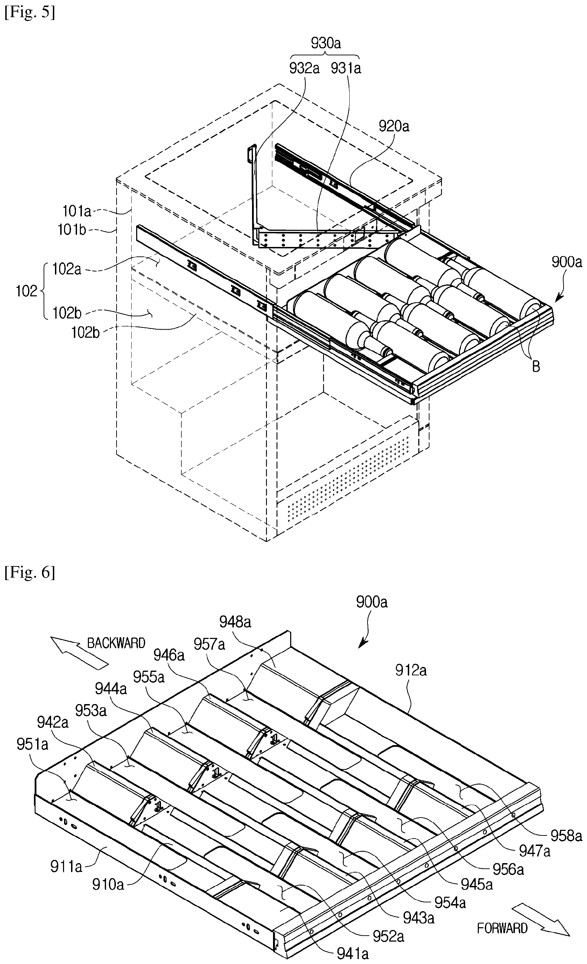

FIGS. 2 and 3 are views of an exterior of the refrigerator according to an embodiment of the present invention, and FIGS. 4 and 5 are views of an interior of the refrigerator according to an embodiment of the present invention. FIG. 6 is a view of a shelf assembly included in the refrigerator according to an embodiment of the present invention.

The exterior and internal structure of the refrigerator 100 according to an embodiment of the present invention will be described with reference to FIGS. 2 through 6.

The refrigerator 100 may include a refrigerator main body 101 that constitutes the exterior of the refrigerator 100, a storage compartment 102 formed in the refrigerator main body 101, and a door 103 that shields the storage compartment 102.

The refrigerator main body 101 may include an inner case 101a that forms the storage compartment 102, an outer case 101b that is coupled to an outside of the inner case 101a and forms the exterior of the refrigerator 100, and an insulating material that is disposed between the inner case 101a and the outer case 101b and insulates the storage compartment 102.

The refrigerator main body 101 may form the exterior of the refrigerator 100 and may accommodate various components that constitute the refrigerator 100.

Also, the refrigerator main body 101 is opened at the front of the refrigerator 100 so that an opening is formed in the refrigerator main body 101, and the storage compartment 102 is disposed in the opening. Also, a door 103 may be disposed at the front of the refrigerator main body 101 so as to shield the storage compartment 102 from the outside.

The door 103 is rotatably coupled to the refrigerator main body 101 using a hinge. Also, a gasket that controls cold air of the storage compartment 102 by sealing the door 103 and the refrigerator main body 101 when the door 103 is closed, may be disposed at an edge of a rear side of the door 103.

In addition, a micro-switch may be disposed at one side of the refrigerator main body 101 so as to detect whether the door 103 is opened or closed. For example, when the door 103 is opened, the micro-switch may output a door open signal.

The storage compartment 102 may be partitioned into an upper, first storage compartment 102a and a lower, second storage compartment 102b using a partition wall 101c. The storage container B in which the food item is stored, may be accommodated in the storage compartment 102.

The first storage compartment 102a and the second storage compartment 102b may be maintained at different temperatures. For example, an inside of the first storage compartment 102a may be maintained at the temperature of about 16°C, and an inside of the second storage compartment 102b may be maintained at the temperature of about 10°C.

In this way, the refrigerator 100 is partitioned into the first storage compartment 102a and the second storage compartment 102b and the first storage compartment 102a and the second storage compartment 102b are maintained at different temperatures to store various food items. In detail, the first storage compartment 102a may store a food item that belongs to a first group, and the second storage compartment 102b may store a food item that belongs to a second group.

For example, it is known that red wine is preferably kept at about 14°C to 18°C so as to maintain its scent and taste and white wine is preferably kept at about 8°C to 13°C so as to maintain its scent and taste. Thus, red wine may be stored in the first storage compartment 102a, and white wine may be stored in the second storage compartment 102b.

A plurality of shelf assemblies 900 for accommodating storage containers B in which food items are stored, may be disposed in the first storage compartment 102a and the second storage compartment 102b.

For example, as illustrated in FIG. 2, a first shelf assembly 900a and a second shelf assembly 900b may be disposed in the first storage compartment 102a, and a third shelf assembly 900c and a fourth shelf assembly 900d may be disposed in the second storage compartment 102b.

The first through fourth shelf assemblies 900a through 900d may protrude forward from the refrigerator main body 101, as illustrated in FIG. 3.

In this way, the plurality of shelf assemblies 900 are disposed to protrude forward from the refrigerator main body 101 so that the user may easily accommodate the storage container B in which the food item is stored, in the shelf assemblies 900. Also, when the user unloads the storage container B in which a particular food item is stored, from the refrigerator 100, the user may confirm a label attached to an outer surface of the storage container B after causing the shelf assemblies 900 to protrude forward from the refrigerator 100, and may easily unload the storage container B in which a desired food item is stored, from the refrigerator 100.

In order to describe the structure of the shelf assemblies 900, the first shelf assembly 900a will now be described. Also, the structures of the second through fourth shelf assemblies 900b through 900d are the same as that of the first shelf assembly 900a and thus, a separate description thereof will be omitted.

The first shelf assembly 900a may include a shelf plate 910a in which the storage container B of the food item is accommodated, a slide rail 920a that movably supports the shelf plate 910a, and a folding arm 930a that limits a movement range of the shelf plate 910a, as illustrated in FIGS. 4 through 6.

A plurality of shelf partitioning members 941a through 948a that partition the shelf plate 910a into a plurality of accommodation spaces 951a through 958a, as illustrated in FIG. 6, are disposed in the shelf plate 910a.

In order to effectively dispose the storage container B of the food item, the plurality of accommodation spaces 951a through 958a may be disposed to be dispersed in the front of the shelf plate 910a and the rear of the shelf plate 910a.

For example, as illustrated in FIG. 6, the first shelf partitioning member 941a, the third shelf partitioning member 943a, the fifth shelf partitioning member 945a, and the seventh shelf partitioning member 947a may be disposed in the front of the shelf plate 910a, and the second shelf partitioning member 942a, the fourth shelf partitioning member 944a, the sixth shelf partitioning member 946a, and the eighth shelf partitioning member 948a may be disposed in the rear of the shelf plate 910a.

The accommodation spaces 951a through 958a may be formed by the plurality of shelf partitioning members 941a through 948a.

For example, as illustrated in FIG. 6, the first accommodation space 951a may be formed between a left wall 911a of the shelf plate 910a and the second shelf partitioning member 942a, and the second accommodation space 952a may be formed between the first shelf partitioning member 941a and the third shelf partitioning member 943a. The third accommodation space 953a may be formed between the second shelf partitioning member 942a and the fourth shelf partitioning member 944a, and the fourth accommodation space 954a may be formed between the third shelf partitioning member 943a and the fifth shelf partitioning member 945a.

Also, the fifth accommodation space 955a may be formed between the fourth shelf partitioning member 944a and the sixth shelf partitioning member 946a, and the sixth accommodation space 956a may be formed between the fifth shelf partitioning member 945a and the seventh shelf partitioning member 947a. The seventh accommodation space 957a may be formed between the sixth shelf partitioning member 946a and the eighth shelf partitioning member 948a, and the eighth accommodation space 958a may be formed between the seventh shelf partitioning member 947a and a right wall 912a of the shelf plate 910a.

The slide rail 920a guides advance and retreat movement in which the shelf plate 910a protrudes from an inside of the storage compartment 102. In other words, the shelf plate 910a may protrude from the storage compartment 102 along the slide rail 920a or may be inserted into the storage compartment 102.

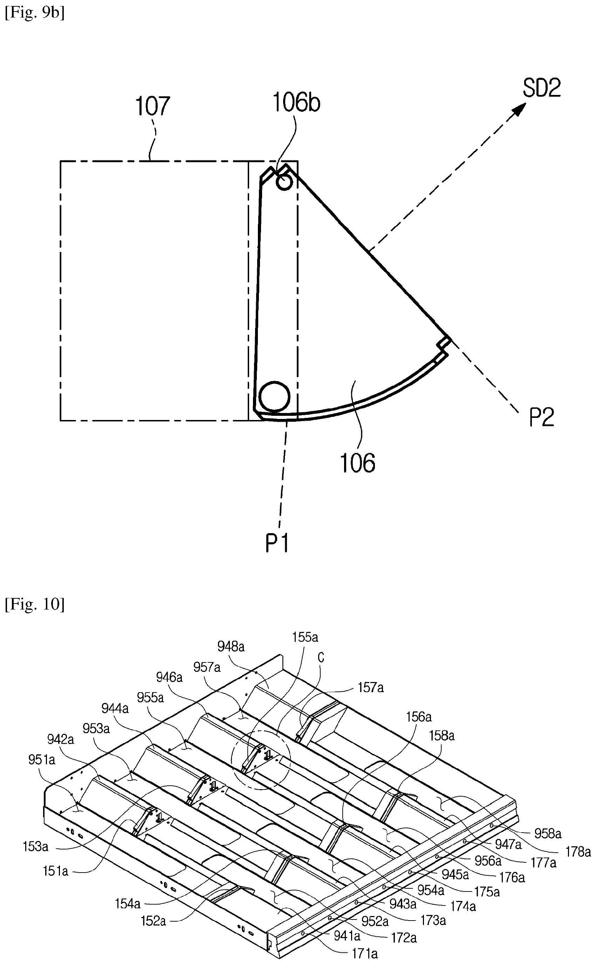

The folding arm 930a limits movement of the shelf plate 910a so that the shelf plate 910a may not be separated from the storage compartment 102. Also, the folding arm 930a may accommodate electric wires for receiving detection signals from a plurality of micro-switch modules 151a through 158a (see FIG. 10) that will be described below and for supplying control signals to a plurality of light-emitting diode modules 171a through 178a (see FIG. 10).

The folding arm 930a may include a first arm 931a and a second arm 932a, as illustrated in FIG. 5.

One end of the first arm 931a is rotatably coupled to an outer wall of the shelf plate 910a, and the other end of the first arm 931a is rotatably coupled to the second arm 932a. Also, one end of the second arm 932a is rotatably coupled to an inner wall of the storage compartment 102, and the other end of the second arm 932a is rotatably coupled to the first arm 931a.

In this way, the first arm 931a and the second arm 932a are rotatably coupled to each other so that the folding arm 930a may be unfolded or folded according to advance and retreat of the shelf plate 910a. In other words, an inner angle between the first arm 931a and the second arm 932a may be decreased or increased according to advance and retreat of the shelf plate 910a.

Also, the range of the inner angle between the first arm 931a and the second arm 932a is limited so that the folding arm 930a may limit the movement range of the shelf plate 910a.

Also, a torsion spring may be disposed between the first arm 931a and the second arm 932a of the folding arm 930a. The folding arm 930a may cause the shelf plate 910a to easily protrude from the storage compartment 102 using an elastic force of the torsion spring.

Also, a motor and a gear may be disposed between the first arm 931a and the second arm 932a of the folding arm 930a. The folding arm 930a may cause the shelf plate 910a to automatically protrude from the storage compartment 102 or to be automatically inserted into the storage compartment 102 using the motor and the gear.

As described above, the shelf assemblies 900a through 900d may protrude from the storage compartment 102 and may include the plurality of accommodation spaces 951a and 958a in which the storage container B may be accommodated.

However, the shape of the shelf assembly in which the storage container B of the food item is accommodated, is not limited to the first shelf assembly 900a illustrated in FIGS. 4 through 6. The shelf assembly may employ various structures in which the storage container B may be effectively accommodated and may be easily loaded into or unloaded from the refrigerator 100.

A control panel 105 may be disposed in an upper portion of the front side of the refrigerator main body 101. The control panel 105 may receive control instructions from the user and may display operation information of the refrigerator 100.

The configuration and operation of the control panel 105 will now be described in detail.

The exterior and structure of the refrigerator 100 according to an embodiment of the present invention have been described above. However, the above-described refrigerator 100 is merely one example of the refrigerator 100 to which the present invention may be applied, and embodiments of the present invention are not limited to the refrigerator 100 described above.

Hereinafter, a control configuration for controlling the refrigerator 100 according to an embodiment of the present invention will be described.

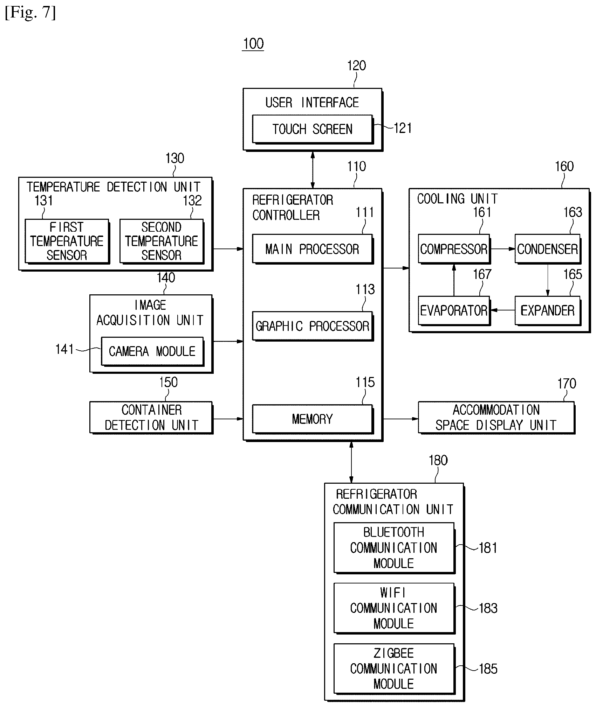

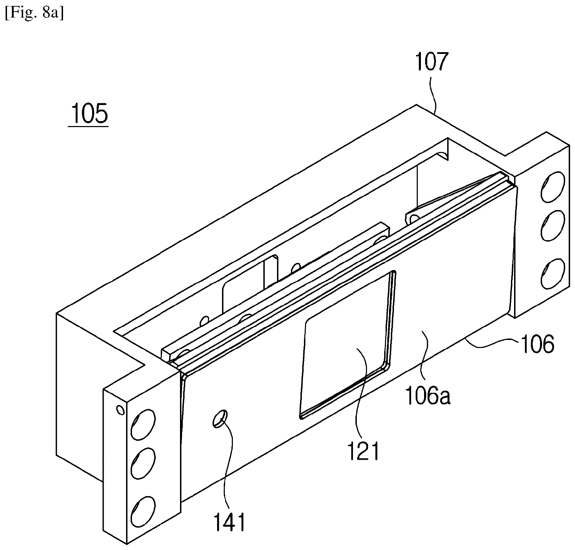

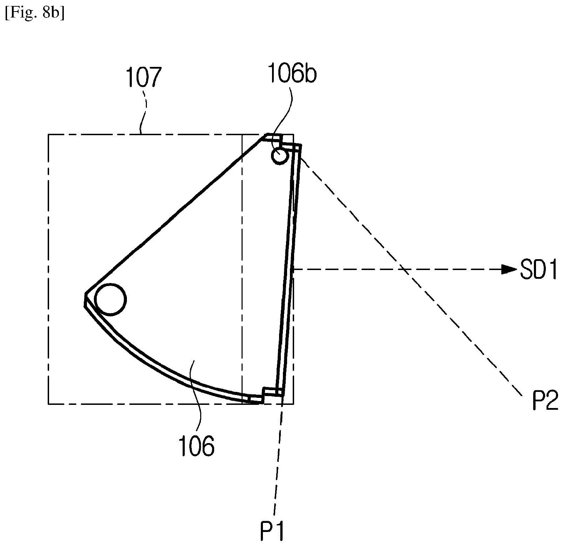

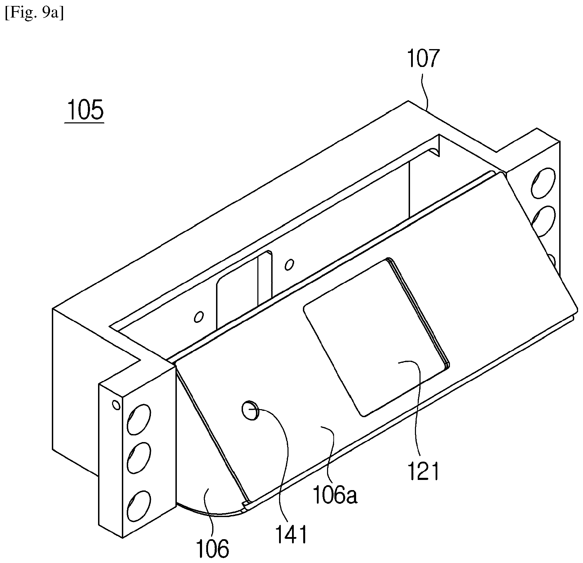

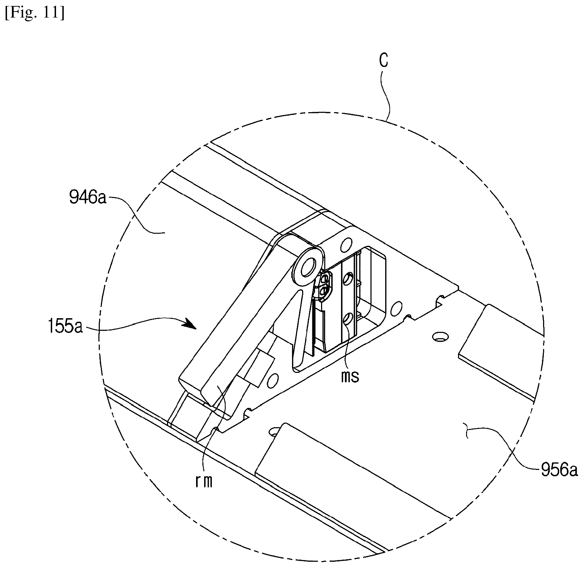

FIG. 7 is a view of a control configuration of the refrigerator according to an embodiment of the present invention. FIG. 8A is a view of a control panel that is included in the refrigerator according to an embodiment of the present invention disposed in a first rotation position, and FIG. 8B is a view of a left side surface of a control panel illustrated in FIG. 8A. FIG. 9A is a view of the control panel that is included in the refrigerator according to an embodiment of the present invention disposed in a second rotation position, and FIG. 9B is a view of a left side surface of a control panel illustrated in FIG. 9A. FIG. 10 is a view of a container detection unit included in the refrigerator according to an embodiment of the present invention, and FIG. 11 is an enlarged view of a region C illustrated in FIG. 10.

Referring to FIGS. 7 through 11, the refrigerator 100 may include a user interface 120 that interacts with the user, a temperature detection unit 130 that detects the temperature of an inside of the storage compartment 102, an image acquisition unit 140 that acquires an image of the storage container B, a container detection unit 150 that detects the storage container B disposed in the storage compartment 102, a cooling unit 160 that supplies cold air to the storage compartment 102, an accommodation space display unit 170 that displays the accommodation spaces 951a through 958a of the storage compartment 102, a refrigerator communication unit 180 that performs communication with an external device, and a refrigerator controller 110 that controls overall operations of the refrigerator 100.

The user interface 120 may receive the user's instructions from the user and may display a variety of pieces of information to the user. In detail, the user interface 120 may include an input unit that receives the user's instructions from the user, and a display unit that displays a variety of pieces of information to the user according to the user's instructions.

For example, the user interface 120 may include a touch screen 121 that receives a touch input from the user and displays operation information corresponding to the user's touch input.

The touch screen 121 may include a touch panel that detects touch input coordinates with which a part of the user's body comes into contact, and a display panel that displays a variety of pieces of information according to the user's touch input.

The touch panel may be disposed at a front side of the display panel and may be formed of a transparent material so as to prevent a displayed image from being distorted. Also, the touch panel may detect whether the part of the user's body comes into contact with the touch panel and may also detect the touch input coordinates with which the part of the user's body comes into contact.

A capacitive touch panel that detects a change in capacities caused by the user's contact, and a resistive touch panel that detects pressure caused by the user's contact may be employed as the touch panel.

The display panel displays the user's instructions that may be input by the user, and displays a variety of pieces of information according to the user's touch input. For example, the display panel may display whether the refrigerator 100 operates or not, the operation information of the refrigerator 100, such as the temperature of the storage compartment 102, and general information, such as weather or time.

A liquid crystal display (LCD) panel, a light emitting diode (LED) panel, or an organic light emitting diode (OLED) panel may be employed as the display panel.

The touch screen 121 may be installed in the control panel 105 disposed in the upper portion of the front side of the refrigerator main body 101.

The control panel 105 may protrude from the refrigerator main body 101 for the user's convenience.

The control panel 105 may include a panel member 106 in which various devices including the touch screen 121 are installed, and a panel housing 107 that rotatably supports the panel member 106.

The panel member 106 may be a polygonal column having a bottom surface of a fan shape, as illustrated in FIGS. 8B and 9B, and may be disposed so that one side included in the polygonal column may face forward. In other words, one side of the polygonal column is a front surface 106a of the panel member 106.

The touch screen 121 described above and a camera module 141 of the image acquisition unit 140 that will be described below may be installed in the front surface 106a of the panel member 106.

The panel housing 107 is fixedly disposed in the refrigerator main body 101 and accommodates the panel member 106 in the panel housing 107. In particular, the panel housing 107 may rotatably support a top end of the panel member 106, and the panel member 106 may be rotated about a rotation shaft 106b disposed on the top end of the panel member 106 in the panel housing 107.

In detail, the panel member 106 may be rotated and moved between a first rotation position P1 illustrated in FIGS. 8A and 8B and a second rotation position P2 illustrated in FIGS. 9A and 9B.

For example, when the user presses the panel member 106 disposed in the first rotation position P1 backward, as illustrated in FIGS. 8A and 8B, the panel member 106 may be rotated about the rotation shaft 106b and disposed in the second rotation position P2, as illustrated in FIGS. 9A and 9B.

Also, when the user presses the panel member 106 disposed in the second rotation position P2 backward, the panel member 106 may be rotated about the rotation shaft 106b and may be disposed in the first rotation position P1.

When the panel member 106 is disposed in the first rotation position P1, the front surface 106a of the panel member 106 faces forward from the refrigerator main body 101, as illustrated in FIG. 8B, and the touch screen 121 of the user interface 120 also faces forward from the refrigerator main body 101. Also, when the panel member 106 is disposed in the second rotation position P2, the front surface 106a of the panel member 106 faces upward and forward from the control panel 105, as illustrated in FIG. 9B, and the touch screen 121 of the user interface 120 also faces upward and forward from the refrigerator main body 101.

In general, the user's eye height is in a higher position than the control panel 105 of the refrigerator 100. Thus, when the panel member 106 is disposed in the second rotation position P2, the user may easily confirm a screen of the touch screen 121 compared to a case in which the panel member 106 is disposed in the first rotation position P1.

The cooling unit 160 may supply cold air to the storage compartment 102.

In detail, the cooling unit 160 may maintain the temperature of the storage compartment 102 in a predetermined range using evaporation of a refrigerant.

The cooling unit 160 may include a compressor 161 that compresses a gaseous refrigerant, a condenser 163 that changes the compressed gaseous refrigerant into a state of a liquid refrigerant, an expander 165 that decompresses the liquid refrigerant, and an evaporator 167 that changes the decompressed liquid refrigerant into a gaseous state.

In particular, the cooling unit 160 may supply cold air to the storage compartment 102 using a phenomenon in which the decompressed liquid refrigerant is changed into a liquid state and absorbs thermal energy of ambient air.

However, the configuration of the cooling unit 160 is not limited to the compressor 161, the condenser 163, the expander 165, and the evaporator 167.

For example, the cooling unit 160 may also include a Peltier element using the Peltier effect. The Peltier effect is an effect in which, when a current flows through a contact surface between different types of metals, heat dissipation occurs in one metal and heat absorption occurs in another metal.

The cooling unit 160 may also supply cold air to the storage compartment 102 using the Peltier element.

As another example, the cooling unit 160 may include a magneto-cooling device using the magneto-caloric effect. The magneto-caloric effect is an effect in which a particular material (magneto-caloric material) dissipates heat when magnetized and the particular material (magneto-caloric material) absorbs heat when demagnetized.

The cooling unit 160 may also supply cold air to the storage compartment 102 using the magneto-cooling device.

The temperature detection unit 130 may be disposed in the storage compartment 102 and may detect the temperature inside the storage compartment 102. Also, the temperature detection unit 130 may include a first temperature sensor 131 that detects the temperature inside the first storage compartment 102a and a second temperature sensor 132 that detects the temperature of the second storage compartment 102b.

Each of the first temperature sensor 131 and the second temperature sensor 132 may include a thermistor, an electrical resistance of which changes according to temperature.

The image acquisition unit 140 may include a camera module 141 that acquires an image and outputs electrical signals corresponding to the acquired image.

The camera module 141 may be installed in the front surface 106a of the panel member 106 included in the control panel 105. Also, the camera module 141 may include a lens that focuses light diverged or reflected from the front of the refrigerator main body 101, and an image sensor that converts the focused light into electrical signals. Here, a complementary metal oxide semiconductor (CMOS) sensor or a charge coupled device (CCD) sensor may be employed as the image sensor.

Also, a shooting direction of the camera module 141 may change according to the position of the panel member 106 included in the control panel 105.

For example, when the panel member 106 is disposed in the first rotation position P1, as illustrated in FIGS. 8A and 8B, the front surface 106a of the panel member 106 faces forward, and the shooting direction of the camera module 141 is a first shooting direction SD1. In other words, the camera module 141 may acquire an image of an object disposed in front of the control panel 105.

Also, when the panel member 106 is disposed in the second rotation position P2, as illustrated in FIGS. 9A and 9B, the front surface 106a of the panel member 106 faces upward and forward from the control panel 105, and the shooting direction of the camera module 141 is a second shooting direction SD2. In other words, the camera module 141 may acquire the image of the object disposed above and in front of the control panel 105.

In particular, the camera module 141 may acquire an image of the label attached to the outside of the storage compartment B. In order to identify the food item stored in the storage container B, the user may capture the image of the label of the storage compartment B using the camera module 141.

The container detection unit 150 is installed in the plurality of accommodation spaces 951a through 958a formed in the shelf assembly 900 and detects whether the storage container B is accommodated in each of the accommodation spaces 951a through 958a.

The container detection unit 150 may detect whether the storage container B is accommodated, using various methods.

For example, the container detection unit 150 may include a plurality of micro-switch modules installed to correspond to the plurality of accommodation spaces 951a through 958a.

In order to describe the micro-switch modules, the micro-switch modules 151a through 158a installed in the first shelf assembly 900a will be described. The micro-switch modules installed in the second through fourth shelf modules 900b through 900d have the same structures as those of the micro-switch modules 151a through 158a installed in the first shelf assembly 900a.

The plurality of micro-switch modules 151a through 158a may be installed in sides of the plurality of shelf partitioning members 941a through 948a, as illustrated in FIG. 10. In detail, the plurality of micro-switch modules 151a through 158a may be installed in the plurality of shelf partitioning members 941a through 948a to correspond to the plurality of accommodation spaces 951a through 958a.

The first micro-switch module 151a that detects the storage container B accommodated in the first accommodation space 951a may be installed in the second shelf partitioning member 942a that is adjacent to the first accommodation space 951a, and the second micro-switch module 152a that detects the storage container B accommodated in the second accommodation space 952a may be installed in the first shelf partitioning member 941a that is adjacent to the second accommodation space 952a.

Also, the third micro-switch module 153a that detects the storage container B accommodated in the third accommodation space 953a may be installed in the fourth shelf partitioning member 944a that is adjacent to the third accommodation space 953a, and the fourth micro-switch module 154a that detects the storage container B accommodated in the fourth accommodation space 954a may be installed in the third shelf partitioning member 943a that is adjacent to the fourth accommodation space 954a.

In the same way, the fifth micro-switch module 155a may be installed in the sixth shelf partitioning member 946a, the sixth micro-switch module 156a may be installed in the fifth shelf partitioning member 945a, the seventh micro-switch module 157a may be installed in the eighth shelf partitioning member 948a, and the eighth micro-switch module 158a may be installed in the seventh shelf partitioning member 947a.

Each of the micro-switch modules 151a through 158a may include a rotary member rm and a microswitch ms, as illustrated in FIG. 11.

The rotary member rm transfers pressure generated when the storage container B is accommodated in the accommodation spaces 951a through 958a, to the micro-switch ms, and the micro-switch ms converts the pressure transferred from the rotary member rm into electrical signals.

In this way, the micro-switch modules 151a through 158a may supply storage container detection signals to the refrigerator controller 110 when the storage container B is accommodated in the accommodation spaces 951a through 958a.

The container detection unit 150 including the plurality of micro-switch modules 151a through 158a has been described above. However, the micro-switch modules 151a through 158a are merely one example of the container detection unit 150, and embodiments of the present invention are not limited thereto.

For example, the container detection unit 150 may include an infrared sensor module that radiates infrared light toward the plurality of accommodation spaces 951a through 958a and detects light reflected from the storage container B, and a laser sensor module that radiates laser toward the plurality of accommodation spaces 951a through 958a and detects the laser reflected from the storage container B.

As another example, the container detection unit 150 may also include an image sensor module that captures an image of the shelf assembly 900a and determines whether the storage container B is accommodated in each of the accommodation spaces 951a through 958a based on the captured image of the shelf assembly 900a.

Also, as another example, a radio frequency identification (RFID) tag may be attached to each storage container B, and the container detection unit 150 may include an RFID reader. The container detection unit 150 may receive information about the food item from the RFID tag attached to the storage container B using the RFID reader and may determine a position in which the storage container B is loaded.

The accommodation space display unit 170 displays empty accommodation spaces 951a through 958a or displays the accommodation spaces 951a through 958a in which the storage container B is accommodated.

In detail, when the user accommodates the storage container B in the refrigerator 100, the accommodation space display unit 170 may display the empty accommodation spaces 951a through 958a. Also, when the user unloads the storage container B from the refrigerator 100, the accommodation space display unit 170 may display the accommodation spaces 951a through 958a in which the storage container B is accommodated.

For example, the accommodation space display unit 170 may include a plurality of light-emitting diode modules installed to correspond to the plurality of accommodation spaces 951a through 958a.

In order to describe light-emitting diode modules, light-emitting diode modules 171a through 178a installed in the first shelf assembly 900a will be described. Light-emitting diode modules installed in the second through fourth shelf assemblies 900b through 900d have the same structures as those of the light-emitting diode modules 171a through 178a installed in the first shelf assembly 900a.

The plurality of light-emitting diode modules 171a through 178a may be installed in a front wall 913a of the shelf plate 910a, as illustrated in FIG. 10. In detail, the plurality of light-emitting diode modules 171a through 178a may be installed in the front wall 913a of the shelf plate 910a to correspond to the plurality of accommodation spaces 951a through 958a.

For example, a first light-emitting diode module 171a may be installed in a position corresponding to a first accommodation space 951a, and a second light-emitting diode module 172a may be installed in a position corresponding to a second accommodation space 952a. In this way, third through eighth light-emitting diode modules 173a through 178a may be installed in positions corresponding to third through eighth accommodation spaces 953a through 958a.

When the user loads the storage container B into the refrigerator 100, a light-emitting diode module corresponding to an accommodation space in which the storage container B is not accommodated, among the plurality of light-emitting diode modules 171a through 178a may emit light. Also, when the user unloads the storage container B from the refrigerator 100, a light-emitting diode module corresponding to an accommodation space in which the user's desired storage container B was accommodated, may emit light.

Also, the function of the plurality of light-emitting diode modules 171a through 178a is not limited to displaying the accommodation space in which the storage container B may be accommodated, or displaying the accommodation space in which the user's desired storage container B is accommodated.

The plurality of light-emitting diode modules 171a through 178a may display a variety of pieces of information using various colors.

For example, the light-emitting diode modules 171a through 178a may display the type of food item stored in the storage container B using various colors. Also, the light-emitting diode modules 171a through 178a may also display a period in which the storage container B is accommodated in the refrigerator 100, using various colors.

The refrigerator communication unit 180 may transmit data to the external device, such as the portable terminal device 200, or may receive the data from the external device, using various communication protocols.

The refrigerator communication unit 180 may include a Bluetooth communication module 181 that communicates with a single external device one-to- one or communicates with a small number of external devices several-to-one, a wireless fidelity (WiFi) communication module 183 that has access to a local area network (LAN) using a wireless access point, and a Zigbee communication module 185 that forms a local communication network between a plurality of electronic devices (mainly, home appliances).

However, communication modules included in the refrigerator communication unit 180 are not limited to the Bluetooth communication module 181, the WiFi communication module 183, and the Zigbee communication module 185. The refrigerator communication unit 180 may include communication modules that perform communication based on various communication protocols.

The refrigerator controller 110 controls the overall operation of the refrigerator 100.

The refrigerator controller 110 may include a main processor 111, a graphic processor 113, and a memory 115.

The memory 115 may store a control program or control data for controlling the operation of the refrigerator 100 or may temporarily store control instruction data output by the main processor 111 or image data output by the graphic processor 113.

The memory 115 may include a volatile memory, such as a static random access memory (SRAM) or a dynamic random access memory (DRAM), and a flash memory, or a nonvolatile memory, such as a read only memory (ROM), an erasable programmable ROM (EPROM), or an electrically erasable programmable read only memory (EEPROM).

In detail, the nonvolatile memory may store the control program or control data for controlling the operation of the refrigerator 100, and the volatile memory may read the control program and the control data from the nonvolatile memory and may temporarily store them, or may temporarily store the control instruction data output by the main processor 111 or the image data output by the graphic processor 113.

The graphic processor 113 may convert image data transmitted by the main processor 111, image data stored in the memory 115, or image data obtained by the image acquisition unit 140 into image data having a format in which the image data may be displayed on the touch screen 121, and may transmit the converted image data to the touch screen 121.

The main processor 111 processes data stored in the memory 115 according to the control program stored in the memory 115.

For example, the main processor 111 may process the user's instructions input through the user interface 120, a storage compartment temperature received from the temperature detection unit 130, storage container detection signals received from the container detection unit 150, and communication data received from the refrigerator communication unit 180.

Also, the main processor 111 may generate the image data to be displayed on the touch screen 121 of the user interface 120, cooling control signals for controlling the cooling unit 160, and display control signals for controlling the accommodation space display unit 170.

The refrigerator controller 110 may control the cooling unit 160 based on the result of detection of the temperature detection unit 130 so that the temperature of the storage compartment 102 may be maintained at a constant level.

When the user loads the storage container B into the refrigerator 100, the refrigerator controller 110 may control the accommodation space display unit 170 based on the communication data received by the refrigerator communication unit 180 so as to display the accommodation spaces 951a through 958a in which the storage container B may be accommodated, a storage container image obtained by the image acquisition unit 140, and the detection result of the container detection unit 150.

Also, when the user unloads the storage container B from the refrigerator 100, the refrigerator controller 110 may control the accommodation space display unit 170 based on the communication data received by the refrigerator communication unit 180 so as to display the accommodation spaces 951a through 958a in which the storage container B is stored, and the detection result of the container detection unit 150.

In this way, the refrigerator controller 110 controls operations of various configurations included in the refrigerator 100.

Also, the operations of the refrigerator 100 that will be described below will be regarded as being performed by the control operation of the refrigerator controller 110.

The refrigerator 100 according to an embodiment of the present invention has been described above.

Hereinafter, a portable terminal device that may communicate with the refrigerator 100 according to an embodiment of the present invention will be described.

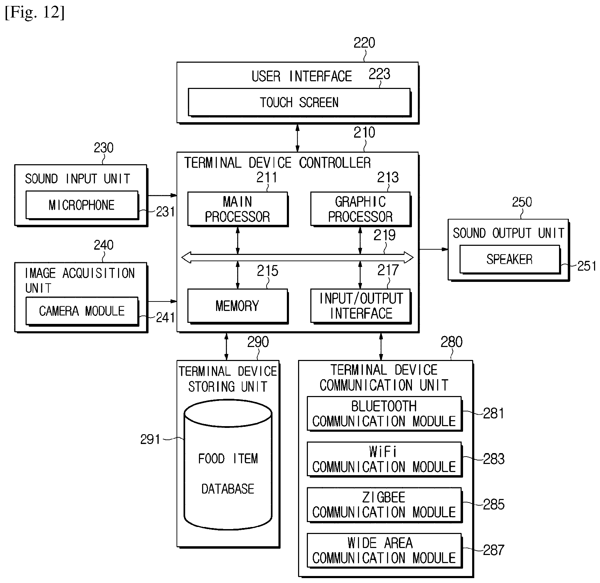

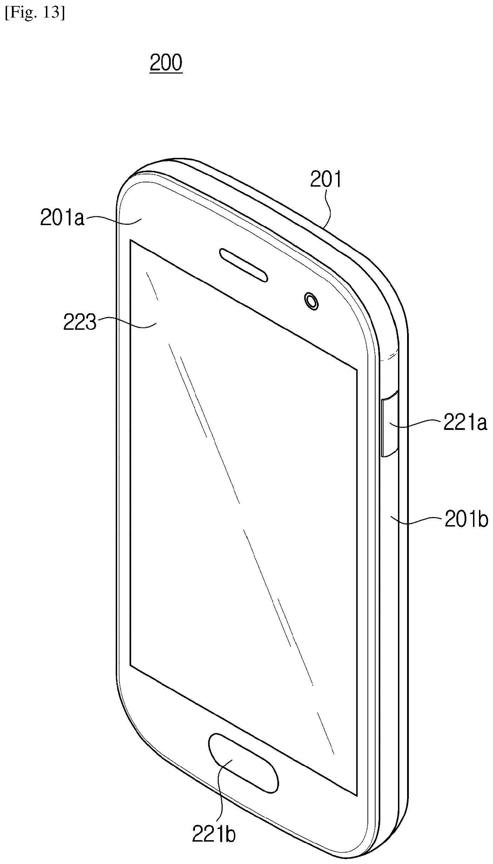

FIGS. 12 and 13 are views of a portable terminal device that is capable of communicating with the refrigerator according to an embodiment of the present invention, according to an embodiment of the present invention.

Referring to FIGS. 12 and 13, the portable terminal device 200 may include a user interface 220 that interacts with the user, a sound acquisition unit 230 that acquires a sound, an image acquisition unit 240 that acquires an image, a sound output unit 250 that outputs the sound, a terminal device communication unit 280 that communicates with the external device, such as the refrigerator 100, and a terminal device controller 210 that controls the overall operation of the portable terminal device 200. Also, the portable terminal device 200 may include a terminal device storing unit 290 that optionally stores a program and data relating to the operation of the portable terminal device 200.

The user interface 220 may receive the user's instructions from the user and may display a variety of pieces of information corresponding to the user's instructions.

The user interface 220 may include input buttons 221a and 221b to which predetermined user's instructions are input, and a touch screen 223 that displays a variety of pieces of information according to the user's touch input.

The input buttons 221a and 221b may include a power button 221a that is disposed at a side 201b of the terminal device main body 201 and turns on/off power of the portable terminal device 200 or power of the touch screen 223, and a home button 221b that is disposed at a lower portion of a front surface 201a of the terminal device main body 201 and returns a screen displayed on the touch screen 223 to its initial screen.

A push switch that detects the user's pressurization, a membrane switch, or a touch switch that detects contact of a part of the user's body may be employed as the input buttons 221a and 221b.

The input buttons 221a and 221b are merely optional configurations of the portable terminal device 200, and the portable terminal device 200 need not necessarily include the input buttons 221a and 221b.

The touch screen 223 may be disposed in the center of the front surface 201a of the terminal device main body 201, may receive a touch input from the user, and may display information corresponding to the user's touch input.

The touch screen 223 may include a touch panel that detects touch input coordinates with which a part of the user's body comes into contact, and a display panel that displays a variety of pieces of information according to the user's touch input.

The touch panel may be disposed on a front surface of the display panel and may be configured of a transparent material through which an image displayed on the display panel may not be distorted. Also, the touch panel may detect whether a part of the user's body comes into contact with the touch input coordinates, and may also detect the touch input coordinates with which a part of the user's body comes into contact.

A capacitive touch panel that detects a change in capacitances due to the user's contact, or a resistive touch panel that detects pressure caused by the user's contact may be employed as the touch panel.

The display panel displays the user's instructions that may be input by the user and displays a variety of pieces of information according to the user's touch input. For example, the display panel may also display information regarding whether the refrigerator 100 operates, information regarding the operation of the refrigerator 100, such as the temperature of the storage compartment 102, and general information, such as weather or time.

An LCD panel, an LED panel, or an OLED panel may be employed as the display panel.

The sound acquisition unit 230 may include a microphone 231 that converts a sound into electrical signals. Also, the sound acquisition unit 230 may provide the electrical sound signals converted by the microphone to the terminal device controller 211.

The image acquisition unit 240 may include a camera module 241 that acquires an image and outputs electrical signals corresponding to the acquired image.

The camera module 241 may be installed in a rear surface of the terminal device main body 201 and may include a lens that focuses light diverged or reflected from the rear of the terminal device main body 201, and an image sensor that converts the focused light into electrical signals. Here, a CMOS) sensor or a CCD sensor may be employed as the image sensor.

The sound output unit 250 may include a speaker 251 that converts electrical signals into a sound. Here, the sound output unit 250 may receive electrical sound signals from the terminal device controller 210 and may output a sound corresponding to the received electrical sound signals.

The terminal device communication unit 280 may include a Bluetooth communication module 281 that communicates with a single external device one-to- one or communicates with a small number of external devices several-to-one, a WiFi communication module 283 that has access to a LAN using a wireless access point, a Zigbee communication module 285 that forms a local communication network between a plurality of electronic devices (mainly, home appliances), and a wide area communication module 287 that may communicate with an external device placed at a long distance using a relay device.

Also, the wide area communication module 287 may use a wide area wireless communication method, such as Time Division Multiple Access (TDMA), Code Division Multiple Access (CDMA), Wideband Code Division Multiple Access (WCDMA), Wireless Broadband (Wibro), Worldwide Interoperability for Microwave Access (WiMAX), or Long Term Evolution (LTE).

The terminal device controller 210 controls the overall operation of the portable terminal device 200.

The terminal device controller 210 may include an input/output interface 217 that mediates data input/output between various configuration devices included in the portable terminal device 200 and the terminal device controller 210, a memory 215 that stores a program and data, a graphic processor 213 that performs image processing, and a main processor 211 that performs an arithmetic operation on the program and data stored in the memory 215.

The terminal device controller 210 may include a system bus 219 that mediates data reception/transmission between the input/output interface 217, the memory 215, the graphic processor 213, and the main processor 211.

The input/output interface 217 receives user instruction data received by the user interface 220, sound data acquired by the sound acquisition unit 230, and image data acquired by the image acquisition unit 240, and transmits the received data to the main processor 211, the graphic processor 213, and the memory 215 using the system bus 219.

The memory 215 may temporarily store a control program or control data for controlling the operation of the portable terminal device 200, control instruction data output by the main processor 211, or image data output by the graphic processor 213.

The memory 215 may include a volatile memory, such as an SRAM or a DRAM, and a flash memory, or a nonvolatile memory, such as a ROM, an EPROM, or an EEPROM.

In detail, the nonvolatile memory may store the control program or control data for controlling the operation of the portable terminal device 200, and the volatile memory may read the control program and the control data from the nonvolatile memory and may temporarily store them, or may temporarily store the control instruction data output by the main processor 211 or the image data output by the graphic processor 213.

The graphic processor 213 may convert image data transmitted by the main processor 211, image data stored in the memory 215, or image data obtained by the image acquisition unit 240 into image data having a format in which the image data may be displayed on the touch screen 223, and may transmit the converted image data to the touch screen 223.

The main processor 211 processes data stored in the memory 215 according to the control program stored in the memory 215.

For example, the main processor 211 may process the user's instructions input through the user interface 220, sound data acquired by the sound acquisition unit 230, and communication data received from the terminal device communication unit 280. Also, the main processor 211 may generate the image data to be displayed on the touch screen 223 of the user interface 220 and the sound data to be output by the sound output unit 250.

The terminal device controller 210 may output the sound data received from the external device using the terminal device communication unit 280 using the sound output unit 250 and may transmit the sound data acquired by the sound acquisition unit 230 to the external device using the terminal device communication unit 280.

The terminal device controller 210 may acquire an image of the storage container B according to the user's instructions and may identify the food item stored in the storage container B based on the acquired image. Also, the terminal device controller 210 may control the terminal device communication unit 280 so as to transmit identification information about the food item together with a storage container accommodation message to the refrigerator 100.

Also, the terminal device controller 210 may display information of the storage container B accommodated in the refrigerator 100 according to the user's instructions and may control the terminal device communication unit 280 to transmit the identification information about the food item together with a storage container unloading message to the refrigerator 100.

In this manner, the terminal device controller 210 controls operations of various configurations included in the portable terminal device 200.

Also, the operations of the portable terminal device 200 that will be described below will be regarded as being performed by the control operation of the terminal device controller 210.

The portable terminal device 200 may optionally include a terminal device storing unit 290.

The terminal device storing unit 290 may store the control program and the control data for controlling the operation of the portable terminal device 200. Also, the terminal device storing unit 290 may operate as an auxiliary storing device of the memory 215 included in the terminal device controller 210.

In particular, the terminal device storing unit 290 may include a food item database 291 for identifying the food item stored in the refrigerator 100.

An image of the label attached to the outer surface of the storage container B of the food item that relates to the identification information about the food item may be stored in the food item database 291 of the terminal device storing unit 290.

As a result, the portable terminal device 200 may retrieve the identification information about the food item from the image of the label attached to the outer surface of the storage container B using the food item database 291. Here, the identification information about the food item refers to information for indentifying a food item from another food item, such as a name, a production area, a production year, and a manu-facturer of the food item.

Also, the food item database 291 may be updated by an external server (see 10 of FIG. 1) in every predetermined updating period. In detail, the portable terminal device 200 may request the external server (see 10 of FIG. 1) to update the food item database 291 in every predetermined updating period and may receive the updated food item database 291 from the external server (see 10 of FIG. 1).

However, the food item database 291 is not an essential configuration of the portable terminal device 200. In other words, if the food item may be identified by the food item database 291 of the external server (see 10 of FIG. 1), the portable terminal device 200 need not include the food item database 291.

Configurations of the refrigerator 100 and the portable terminal device 200 according to an embodiment of the present invention have been described above.

Hereinafter, operations of the refrigerator 100 and the portable terminal device 200 according to an embodiment of the present invention will be described.

The refrigerator 100 and the portable terminal device 200 may manage the food item stored in the refrigerator 100 according to the user's instructions.

First, an example of operations of the refrigerator 100 and the portable terminal device 200 when the user loads a new food item into the refrigerator 100, will be described.

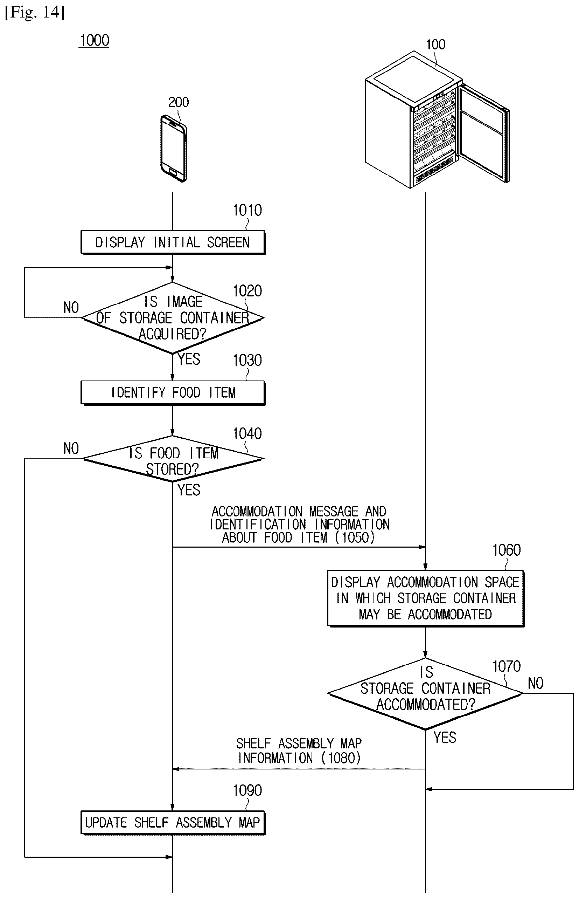

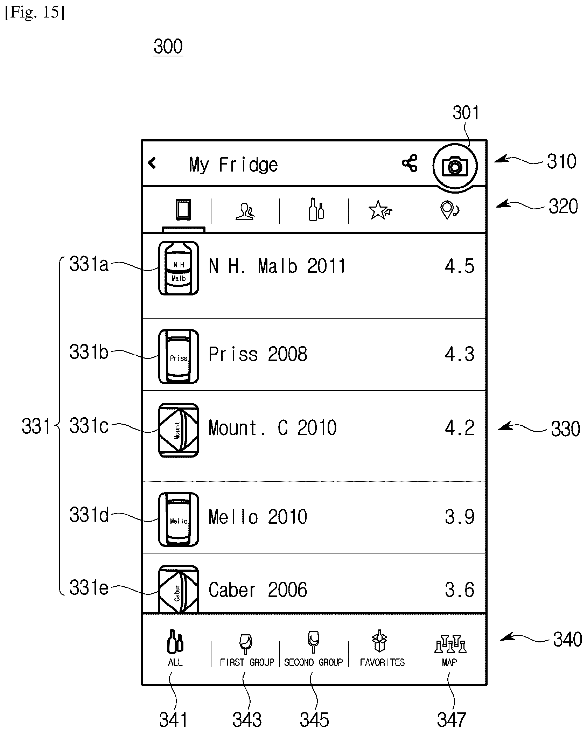

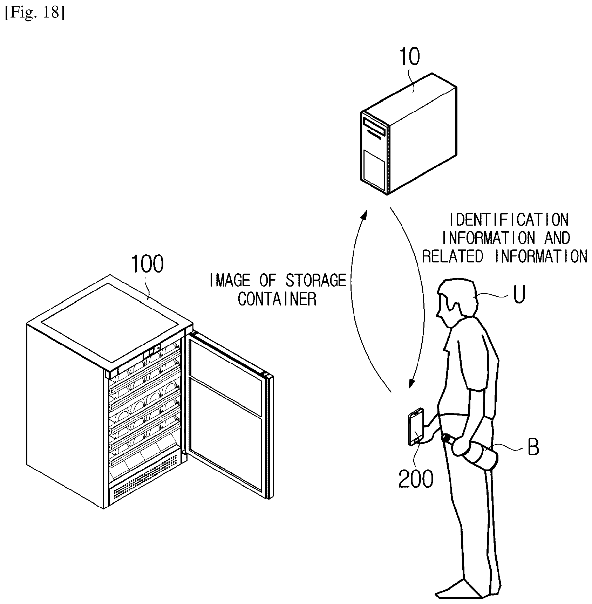

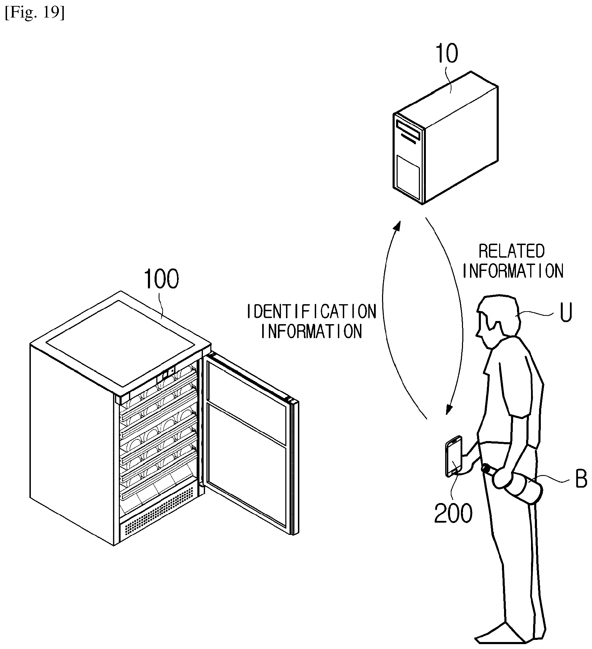

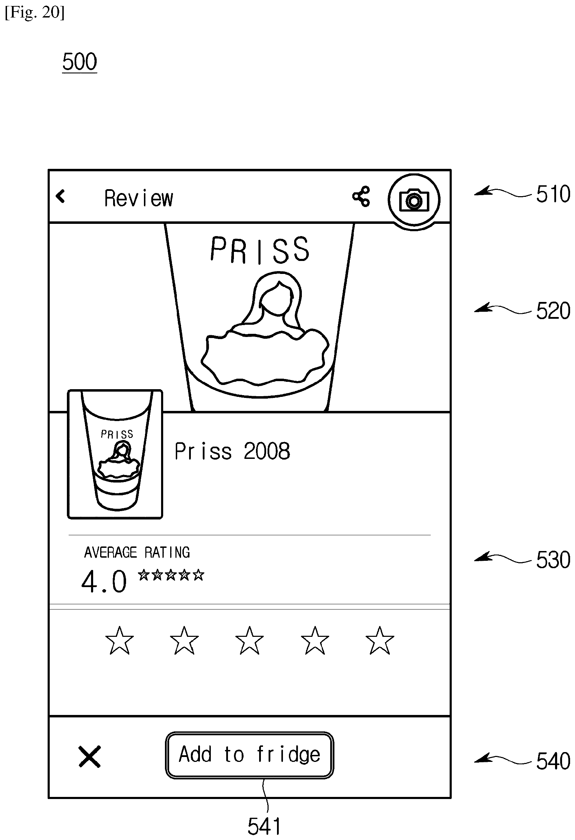

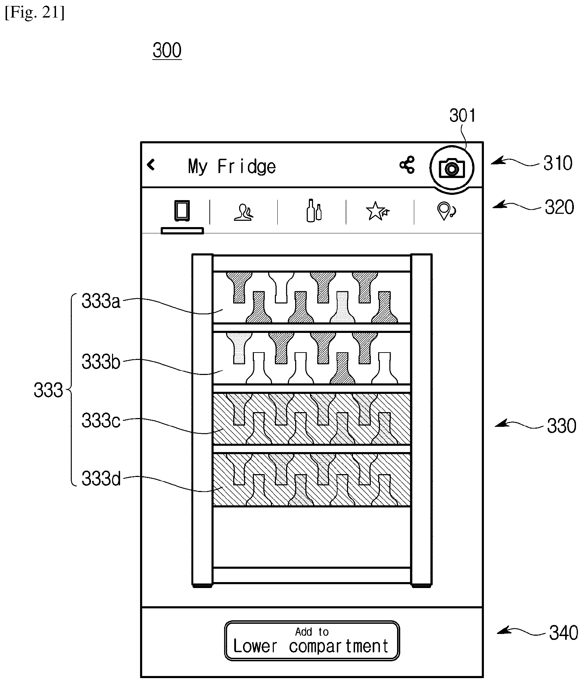

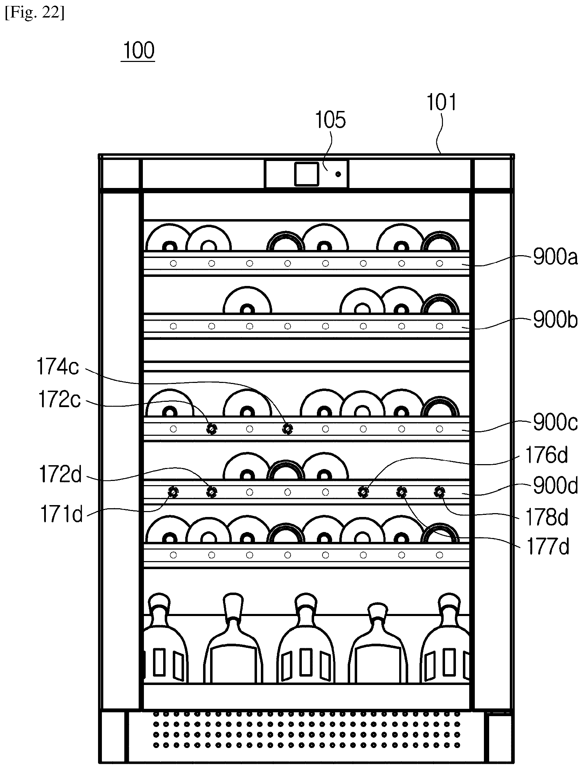

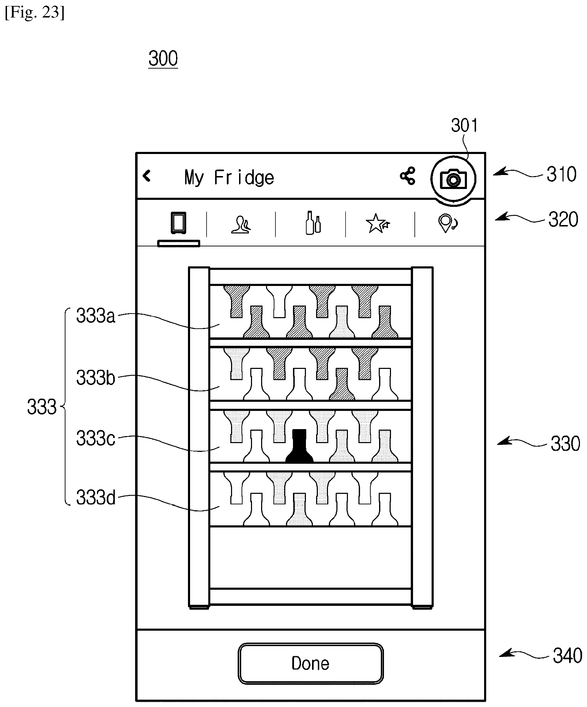

FIG. 14 is a view of an example of a storage container accommodating operation of the refrigerator and the portable terminal device according to an embodiment of the present invention. FIGS. 15 through 17 are views of an example of a screen displayed on the portable terminal device. FIGS. 18 and 19 are views of an example in which the portable terminal device identifies a food item. FIGS. 20 and 21 are views of another example of the screen displayed on the portable terminal device. FIG. 22 is a view of a case in which the refrigerator according to an embodiment of the present invention displays an accommodation space in which the storage container may be accommodated, and FIG. 23 is a view of an example of the screen displayed on the portable terminal device after a storage container is accommodated in the refrigerator according to an embodiment of the present invention.

A storage container accommodating operation 1000 of the refrigerator 100 and the portable terminal device 200 will be described with reference to FIGS. 14 through 23.

The portable terminal device 200 displays an initial screen 300 for managing the food item stored in the refrigerator 100 according to the user's instructions (1010).

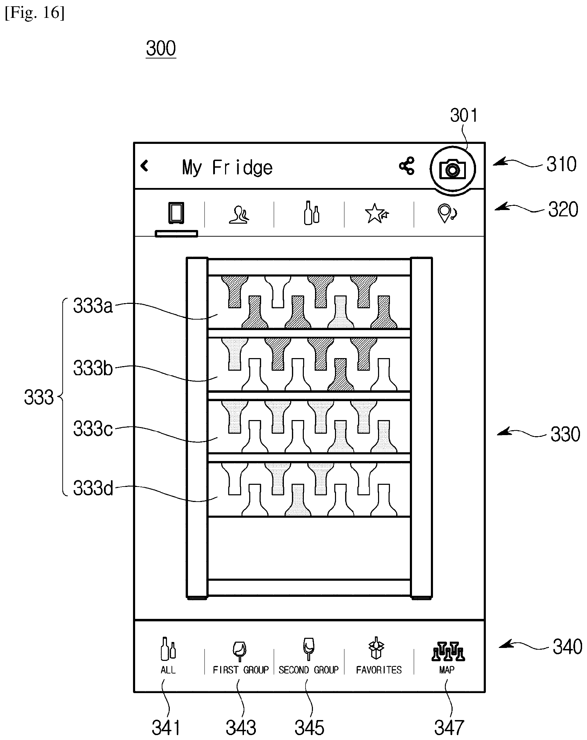

In detail, the portable terminal device 200 may execute a management application for managing the food item stored in the refrigerator 100 according to the user's instructions. If the management application is executed, the portable terminal device 200 may display the initial screen 300 illustrated in FIGS. 15 and 16.

For example, the initial screen 300 may be partitioned into a title area 310, a top menu area 320, a main display area 330, and a bottom menu area 340, as illustrated in FIGS. 15 and 16. Also, an image acquisition icon 301 for acquiring an image of the storage container B using the image acquisition unit 240 included in the portable terminal device 200 may be displayed at one side of the initial screen 300.

A title that represents information to be displayed in the main display area 330 may be displayed in the title area 310.

For example, when the information displayed in the main display area 330 is information about the food item stored in the refrigerator 100, a title "my refrigerator" may be displayed in the title area 310, as illustrated in FIG. 15.

Various menus may be displayed in the top menu area 320 according to information to be displayed in the main display area 330.

For example, various menus, such as a "refrigerator menu" for displaying the information about the food item stored in the refrigerator 100, a "food item menu" for acquiring information about various food items, and an "item evaluation menu" for evaluating the food item, may be displayed in the top menu area 320.

A method of setting and aligning information to be displayed in the main display area 330 may be displayed in the bottom menu area 340.

For example, an all display menu 341 that displays all food items stored in the refrigerator 100, a first group display menu 343 that displays a food item belonging to a first group, a second group display menu 345 that displays a food item belonging to a second group, and a map display menu 367 that displays the food items according to positions in which the food items are accommodated in the refrigerator 100, may be displayed in the bottom menu area 340.

A variety of pieces of information may be displayed in the main display area 330 according to the user's selection.

For example, if the user selects the all display menu 341 from the bottom menu area 340, information 331 about all food items stored in the refrigerator 100 may be displayed in the main display area 330, as illustrated in FIG. 15. In detail, information 331a about a first item, information 331b about a second item, information 331c about a third item, information 331d about a fourth item, and information 331e about a fifth item stored in the refrigerator 100 may be displayed in the main display area 330.

The user may confirm the food item stored in the refrigerator 100 based on the information 331 about the food items displayed in the main display area 330.

Also, if the user selects the map display menu 357 from the bottom menu area 340, a shelf assembly map 333 that displays the storage container B of the food item accommodated in the shelf assembly 900 of the refrigerator 100 may be displayed in the main display area 330, as illustrated in FIG. 16.

In detail, a first shelf assembly map 333a that displays food items stored in the first shelf assembly 900a, a second shelf assembly map 333b that displays food items stored in the second shelf assembly 900b, a third shelf assembly map 333c that displays food items stored in the third shelf assembly 900c, and a fourth shelf assembly map 333d that displays food items stored in the fourth shelf assembly 900d may be displayed in the main display area 330.

Each of the shelf assembly maps 333a through 333d displays positions of the food items stored in the first through fourth shelf assemblies 900a through 900d. In detail, the shelf assembly maps 333a through 333d display whether the storage container B is accommodated in each of the plurality of accommodation spaces 951a through 958a formed in the shelf assemblies 900a through 900d, respectively.

Also, the shelf assembly map 333 may display whether the storage container B is accommodated in each of the accommodation spaces 951a through 958a and may also display identification information about the food item accommodated in the storage container B.

With regard to the shelf assembly map 333, the portable terminal device 200 may receive shelf assembly map information from the refrigerator 100.

For example, the portable terminal device 200 may receive the shelf assembly map information from the refrigerator 100 at predetermined time intervals. In other words, the refrigerator 100 may generate the shelf assembly map information about all the shelf assemblies 900a through 900d based on the detection result of the container detection unit 150 at predetermined time intervals and may transmit the generated shelf assembly map information to the portable terminal device 200.

As another example, if a new storage container B is accommodated in each of the shelf assemblies 900a through 900d or the accommodated storage container B is unloaded from each of the shelf assemblies 900a through 900d, the refrigerator 100 may transmit the shelf assembly map information to the portable terminal device 200.

The user may confirm a position in which the storage container B of the food item is accommodated, based on the shelf assembly map 333 displayed in the main display area 330.

While the initial screen 300 is displayed, the portable terminal device 200 determines whether the image of the storage container B of the food item is acquired (1020).

When the user wants to additionally accommodate the storage container B of the food item in the refrigerator 100, the user may input photographing instructions for acquiring the image of the storage container B of the food item to the portable terminal device 200 using an image acquisition icon 301 disposed at one side of the initial screen 300 displayed on the portable terminal device 200.

If the photographing instructions are input, the portable terminal device 200 may display an image photographing screen 400 so as to acquire the image of the storage container B of the food item.

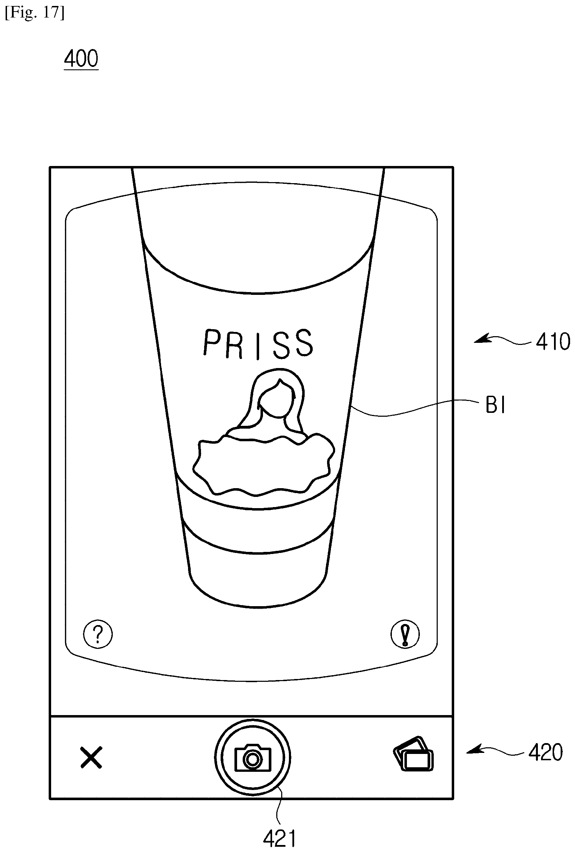

For example, the image photographing screen 400 may include an image display area 410 that occupies most of the screen and a bottom menu area 420 at a lower portion of the screen, as illustrated in FIG. 17.

The image display area 410 displays the image acquired by the image acquisition unit 240 of the portable terminal device 200 in real time.

In detail, the portable terminal device 200 may acquire the image of the storage container B using the camera module 241. Image processing, such as resolution change, may be performed on the acquired image using the graphic processor 213 of the terminal device controller 210. Subsequently, the image of the storage container B may be displayed on the touch screen 223 of the user interface 220 in real time.

For example, the portable terminal device 200 may display a storage container image BI illustrated in FIG. 17 on the touch screen 223.

A photographing button 421 for acquiring an image displayed on the touch screen 223 and storing the acquired image may be disposed in the bottom menu area 420.

If the user touches the photographing button 421, the portable terminal device 200 may store the image acquired when the user touches the photographing button 421, in the memory 215.

If the storage container image BI of the food item is acquired (YES of 1020), the portable terminal device 200 identifies the food item stored in the storage container B based on the image of the storage container B (1030).

In detail, the portable terminal device 200 may identify the food item stored in the storage container B by analyzing the label attached to the outer surface of the storage container B of the image.

Since the name or trademark of the food item stored in the storage container B is indicated on the label of the storage container B, the portable terminal device 200 may identify the food item based on the label.

For example, the portable terminal device 200 may identify the food item using the food item database stored in the external server 10.

As illustrated in FIG. 18, the portable terminal device 200 may transmit the storage container image BI to the external server 10 so as to identify the food item.

The external server 10 through which the storage container image BI is received from the portable terminal device 200, may identify the food item using the food item database and may generate identification information about the food item. In this case, the identification information about the food item may include the name of the food item, a group to which the food item belongs, a production area of the food item, and a production year of the food item.

For example, the external server 10 may extract feature points from the storage container image BI received from the portable terminal device 200, may compare the feature points with feature points of a storage container image stored in the food item database, and may identify the food item stored in the storage container B.

Also, the external server 10 may collect related information, such as the price of the food item, another user's evaluation of the food item, and an evaluation rating of the food item, from the food item database based on the identification information about the food item.

Subsequently, the external server 10 may transmit the identification information about the food item and related information of the food item to the portable terminal device 200, as illustrated in FIG. 18.

As another example, the portable terminal device 200 may identify the food item using the food item database 291 stored in the terminal device storing unit 290 and may generate identification information about the food item.

The portable terminal device 200 may extract feature points from the acquired storage container image BI, may compare the feature points with feature points of the storage container image stored in the food item database 291, and may identify the food item stored in the storage container B.

Subsequently, the portable terminal device 200 may transmit the identification information about the food item to the external server 10, as illustrated in FIG. 19. In this case, the identification information about the food item may include the name of the food item, a group to which the food item belongs, a production area of the food item, and a production year of the food item.

The external server 10 through which the identification information about the food item is received from the portable terminal device 200, may collect the related information, such as the price of the food item, another user's evaluation of the food item, and an evaluation rating of the food item, from the food item database based on the identification information about the food item.

The external server 10 that collects the related information may transmit the related information about the food item to the portable terminal device 200, as illustrated in FIG. 19.

As described above, the portable terminal device 200 acquires an image of the storage container B and uses the acquired image of the storage container B so as to identify the food item. However, embodiments of the present invention are not limited thereto.

For example, in order to identify the food item, the portable terminal device 200 may also use a bar code indicated on the storage container B so as to identify the food item.

Also, if the user says the name or trademark of the food item so as to identify the food item, the portable terminal device 200 may also recognize the user's voice and identify the food item based on the recognized user's voice.

After the food item stored in the storage container B is identified, the portable terminal device 200 may display the identification information about the food item and the related information thereof.

For example, the portable terminal device 200 may display a first item review screen 500 that displays the identification information about the food item and the related information thereof, as illustrated in FIG. 20.

The first item review screen 500 may include a title area 510 in which a title is displayed, a storage container display area 520 in which the image of the storage container B of the identified food item is displayed, an information display area 530 in which the related information of the identified food item is displayed, and a bottom menu area 540 in which a menu for inputting various instructions is displayed.

The identification information about the food item, such as the name of the identified food item or a group to which the food item belongs, and the related information, such as the price of the food item, another user's evaluation of the food item, and other users' evaluation ratings of the food item, may be displayed in the information display area 530.

Also, an accommodation space display icon 541 for displaying an empty accommodation space of the refrigerator 100 so as to store the identified food item in the refrigerator 100 is displayed in the bottom menu area 540.

Subsequently, the portable terminal device 200 determines whether the identified food item is to be stored in the refrigerator 100 (1040). In other words, the portable terminal device 200 determines whether the storage container B of the identified food item is to be accommodated in the refrigerator 100.

For example, when the user touches the accommodation space display icon 541 displayed on the above-described item review screen 500, the portable terminal device 200 may determine that the storage container B of the food item is to be accommodated in the refrigerator 100.

If it is determined that the food item is not to be stored in the refrigerator 100 (NO of 1040), the portable terminal device 200 terminates an operation being performed.

For example, if the user terminates an application without touching the accommodation space display icon 541 displayed on the item review screen 500, the portable terminal device 200 may terminate an operation relating to accommodation of the storage container B.

If it is determined that the food item is to be stored in the refrigerator 100 (YES of 1040), the portable terminal device 200 transmits an accommodation message and the identification information about the food item to the refrigerator 100 (1050).

In detail, if the user touches the accommodation space display icon 541 displayed on the first item review screen 500, the portable terminal device 200 may transmit the identification information about the food item to the refrigerator 100 using the terminal device communication unit 280.

In addition, the portable terminal device 200 may convert the screen displayed on the touch screen 233 into the initial screen 300 on which the shelf assembly map 333 is displayed. For example, the portable terminal device 200 may display the shelf assembly map 333 that displays the accommodation space in which the storage container B may be accommodated, as illustrated in FIG. 21.

Furthermore, the portable terminal device 200 may also display an accommodation space that is suitable for accommodating the storage container B of the food item according to the group to which the identified food item belongs.

For example, when the identified food item belongs to a second group, the portable terminal device 200 may display the third shelf assembly map 333c and the fourth shelf assembly map 333d that display a third shelf assembly 900c and a fourth shelf assembly 900d in which the food item of the second group is stored, respectively, to be distinguished from the first shelf assembly map 333a and the second shelf assembly map 333b.

In detail, the portable terminal device 200 may display the third shelf assembly map 333c and the fourth shelf assembly map 333d darker or may display the third shelf assembly map 333c and the fourth shelf assembly map 333d to flicker. Also, the portable terminal device 200 may display the first shelf assembly map 333a and the second shelf assembly map 333b with shading or may not display them.

The user may determine a shelf assembly in which the storage container B of the food item may be accommodated, based on the shelf assembly map 333 of the touch screen 223 of the portable terminal device 200.

The refrigerator 100 that receives the accommodation message and the identification information about the food item displays the accommodation space in which the storage container B may be accommodated (1060). In detail, the refrigerator 100 may display the accommodation space in which the storage container B may be accommodated, using the accommodation space display unit 170.

The refrigerator 100 may determine the empty accommodation space based on the detection result of the container detection unit 150 and may generate shelf assembly map information based on the position of the accommodation space in which the storage container B is accommodated, and the position of the empty accommodation space.

Also, the refrigerator 100 may determine a group to which the food item belongs, based on the received identification information about the food item.

The refrigerator 100 may determine the accommodation space in which the storage container B may be accommodated, based on the shelf assembly map information that indicates the position of the empty accommodation space and the group to which the food item belongs.

Also, the refrigerator 100 may display the accommodation space in which the storage container B may be accommodated, using the accommodation space display unit 170.

For example, as illustrated in FIG. 22, third and sixth accommodation spaces of the first shelf assembly 900a, first, second, fourth, and eighth accommodation spaces of the second shelf assembly 900b, second and fourth accommodation spaces of the third shelf assembly 900c, and first, second, sixth, seventh, and eighth accommodation spaces of the fourth shelf assembly 900d are empty.

In this case, if the food item belongs to the second group, the refrigerator 100 may display the empty accommodation spaces of the third shelf assembly 900c and the fourth shelf assembly 900d in which the food item of the second group may be stored.

In detail, the refrigerator 100 may control the accommodation space display unit 170 so that second and fourth light-emitting diode modules 172c and 174c of the third shelf assembly 900c and first, second, sixth, seventh, and eighth light-emitting diode modules 171d, 172d, 176d, 177d, and 178d of the fourth shelf assembly 900d may emit light, as illustrated in FIG. 22.

The user may determine the accommodation space in which the storage container B may be accommodated, using the shelf assembly map 333 displayed on the portable terminal device 200 or the accommodation space display unit 170 of the refrigerator 100.

The refrigerator 100 that displays the acceptable accommodation space determines whether the storage container B is accommodated in the accommodation space (1070).

The refrigerator 100 may determine whether the storage container B is additionally accommodated in the accommodation space, based on the detection result of the container detection unit 150.

For example, if the user accommodates the storage container B in the fourth accommodation space of the third shelf assembly 900c, the refrigerator 100 may determine that the storage container B is accommodated in the fourth accommodation space of the third shelf assembly 900c, using the fourth micro-switch module of the third shelf assembly 900c.

If it is determined that the storage container B is not accommodated in the accommodation space (NO of 1070), the refrigerator 100 terminates an operation relating to accommodation of the storage container B.

In detail, if accommodation of the storage container B is not detected within a predetermined time, the refrigerator 100 may control the accommodation space display unit 170 so as to stop displaying the acceptable accommodation space.

If it is determined that the storage container B is accommodated in the accommodation space (YES of 1070), the refrigerator 100 transmits the shelf assembly map information to the portable terminal device 200 (1080). Here, the shelf assembly map information transmitted to the portable terminal device 200 from the refrigerator 100 may include identification information about the accommodation space in which a new storage container B is accommodated.

In detail, the refrigerator 100 may transmit the identification information about the accommodation space in which the storage container B is accommodated, to the portable terminal device 200 using the refrigerator communication unit 180.

Also, the refrigerator 100 updates the shelf assembly map 333 based on the identification information about the food item and the identification information about the accommodation space in which the storage container B of the food item is accommodated. In other words, the refrigerator 100 may store the identification information about the food item in a region corresponding to the accommodation space in which the storage container B is accommodated, among the shelf assembly map 333.

The portable terminal device 200 that receives the identification information about the accommodation space updates the shelf assembly map 333 (1090).

The portable terminal device 200 updates the shelf assembly map 333 based on the shelf assembly map information received from the refrigerator 100.

For example, when the user accommodates the storage container B in a fourth accommodation space of the third shelf assembly 900c, the portable terminal device 200 may correct the third shelf assembly map 333c that displays the third shelf assembly 900c, as illustrated in FIG. 23. In other words, the portable terminal device 200 may correct the third shelf assembly map 333c in such a way that the fourth accommodation space of the third shelf assembly 900c is filled.

As described above, the user may determine the accommodation space of the refrigerator 100 that is suitable for storing the food item using the portable terminal device 200. Also, the refrigerator 100 may display the accommodation space in which the storage container B of the food item that the user wants to store, may be accommodated.

Hereinafter, an example of operations of the refrigerator 100 and the portable terminal device 200 when the user unloads the food item from the refrigerator 100, will be described.

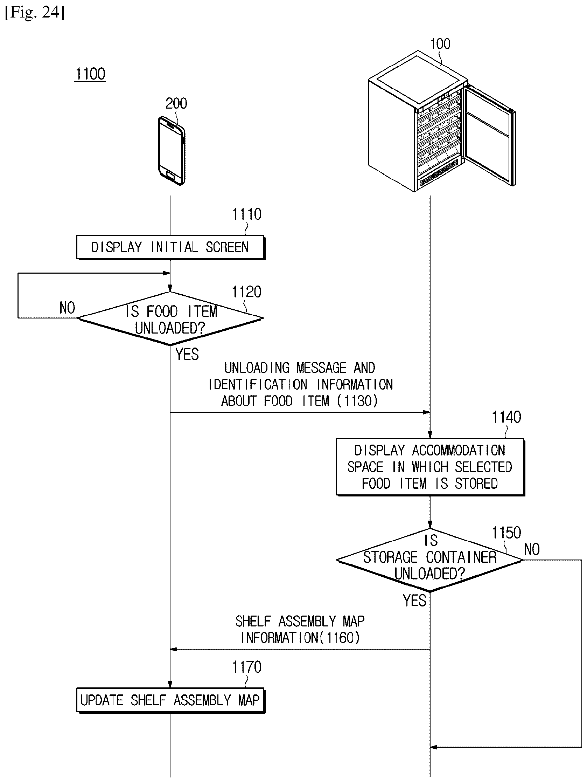

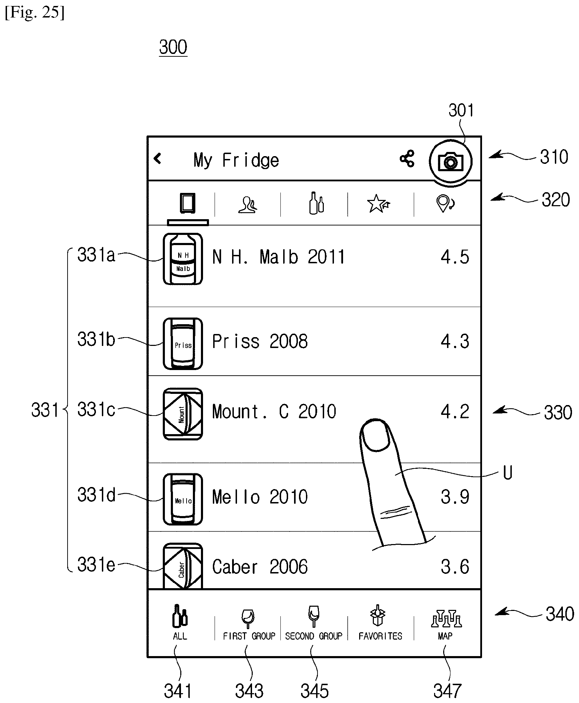

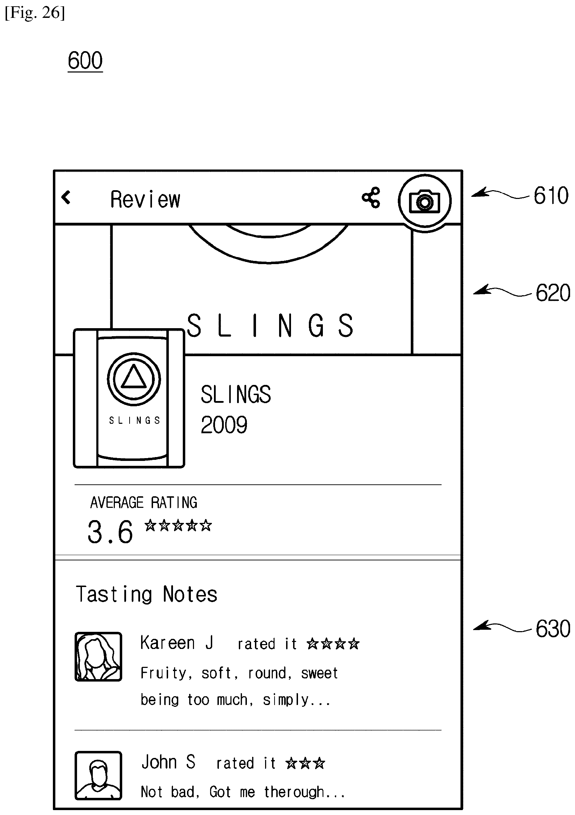

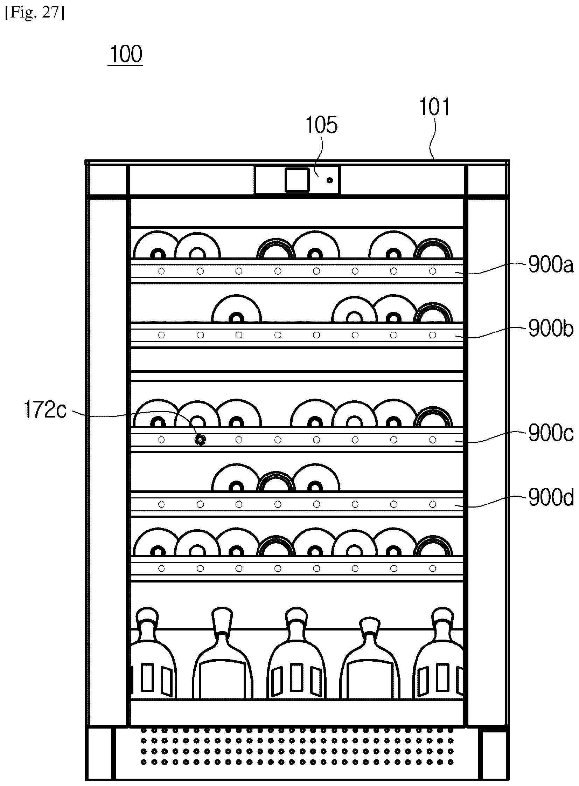

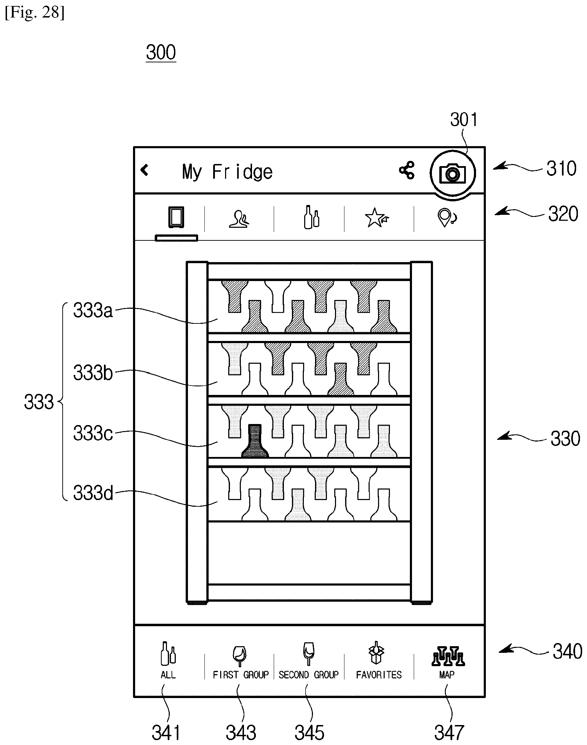

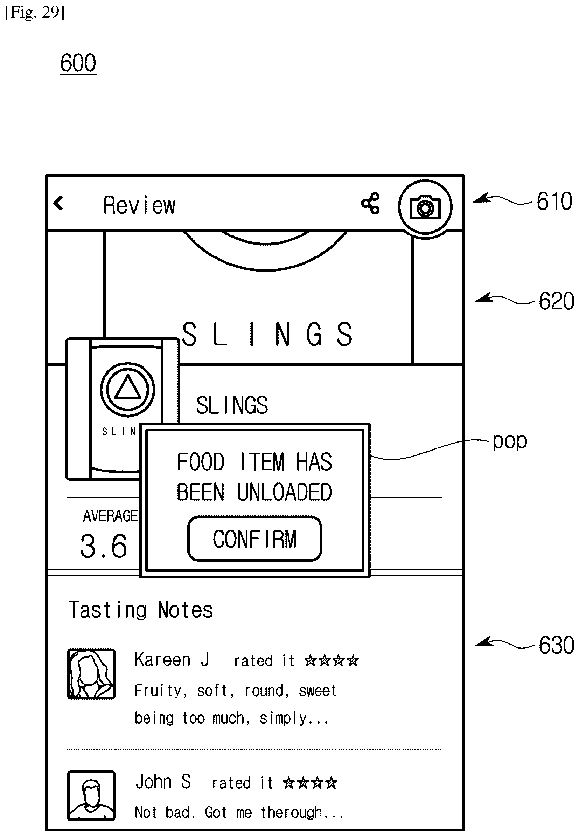

FIG. 24 is a view of an example of a storage container unloading operation of the refrigerator and the portable terminal device according to an embodiment of the present invention. FIGS. 25 and 26 are views of an example of the screen displayed on the portable terminal device so as to unload the storage container from the refrigerator according to an embodiment of the present invention, and FIG. 27 is a view of a case in which the refrigerator according to an embodiment of the present invention displays an accommodation space in which the storage container is to be unloaded from the refrigerator, and FIGS. 28 and 29 are views of an example of the screen displayed on the portable terminal device after the storage container is unloaded from the refrigerator according to an embodiment of the present invention.

The storage container unloading operation 1100 of the refrigerator 100 and the portable terminal device 200 will be described with reference to FIGS. 24 through 29.

The portable terminal device 200 displays the initial screen 300 for managing the food item stored in the refrigerator 100 according to the user's instructions (1110).

In detail, the portable terminal device 200 may execute a management application for managing the food item stored in the refrigerator 100 according to the user's instructions. If the management application is executed, the portable terminal device 200 may display the initial screen 300 illustrated in FIG. 24 on the touch screen 223.

For example, the initial screen 300 may be partitioned into a title area 310, a top menu area 320, a main display area 330, and a bottom menu area 340, as illustrated in FIG. 24.

The title area 310, the top menu area 320, the main display area 330, and the bottom menu area 340 have been already described with reference to FIGS. 15 and 16 and thus a description thereof will be omitted.

In particular, the user may recognize the food item accommodated in the refrigerator 100 based on the information 331 about the food item displayed in the main display area 330.

While the initial screen 300 is displayed, the portable terminal device 200 determines whether the food item stored in the refrigerator 100 is to be unloaded from the refrigerator (1120).

If the user wants to unload the storage container B of the food item accommodated in the refrigerator 100, the user may select one from the food item information 331a through 331e displayed in the main display area 330 of the initial screen 300.

For example, the user may touch a region corresponding to the food item to be unloaded, in the main display area 330 of the initial screen 300, as illustrated in FIG. 25.

If it is determined that the food item stored in the refrigerator 100 is unloaded from the refrigerator 100 (YES of 1120), the portable terminal device 200 transmits an unloading message and identification information about the food item to be unloaded to the refrigerator 100 (1130).

In detail, if the user selects one among the food item information 331a through 331e displayed in the main display area 330 of the initial screen 300, the portable terminal device 200 may transmit identification information about the selected food item to the refrigerator 100 using the terminal device communication unit 280.

In this way, the portable terminal device 200 may display related information about the selected food item.

For example, the portable terminal device 200 may display the second item review screen 600 that displays the related information of the food item, as illustrated in FIG. 26.

The second item review screen 600 may include a title area 610 in which a title is displayed, a storage container display area 620 in which an image of the storage container B of the selected food item is displayed, and an information display area 630 in which related information about the selected food item is displayed.

Evaluation ratings at which other users evaluate the food item, may be displayed in the information display area 630 together with information about the food item, such as the name of the identified food item and a group to which the food item belongs.

The refrigerator 100 that receives the unloading message and the identification information about the food item displays an accommodation space in which the food item is stored (1140). In detail, the refrigerator 100 may display the accommodation space in which the storage container B of the food item is accommodated, using the accommodation space display unit 170.

The refrigerator 100 determines the accommodation space in which the storage container B of the food item is accommodated, based on the shelf assembly map 333 and the received identification information about the food item.

If the accommodation space in which the storage container B of the food item is accommodated, is determined, the refrigerator 100 controls the accommodation space display unit 170 so that light-emitting diode modules corresponding to the accommodation space may emit light.

For example, if the storage container B of the food item selected by the user is accommodated in the second accommodation space of the third shelf assembly 900c, as illustrated in FIG. 27, the refrigerator 100 may control the accommodation space display unit 170 so that the second light-emitting diode module 172c of the third shelf assembly 900c may emit light.

Subsequently, the refrigerator 100 determines whether the storage container B is unloaded from the accommodation space (1150).

The refrigerator 100 may determine whether the storage container B is unloaded from the accommodation space based on the detection result of the container detection unit 150.

For example, if the user unloads the storage container B from the second accommodation space of the third shelf assembly 900c, the refrigerator 100 may detect that the storage container B is unloaded from the accommodation space using the second micro-switch module of the third shelf assembly 900c.

If it is determined that the storage container B is not unloaded from the accommodation space (NO of 1150), the refrigerator 100 terminates an operation relating to unloading of the storage container B.

In detail, if unloading of the storage container B is not detected within a predetermined time, the refrigerator 100 may control the accommodation space display unit 170 so as to stop displaying the accommodation space in which the unloaded storage container B is accommodated.

If it is determined that the storage container B is unloaded from the accommodation space (YES of 1150), the refrigerator 100 transmits the shelf assembly map information to the portable terminal device 200 (1160). Here, the shelf assembly map information transmitted to the portable terminal device 200 from the refrigerator 100 may include identification information about the accommodation space in which the storage container B is unloaded.

In detail, the refrigerator 100 may transmit the identification information about the accommodation space in which the storage container B is unloaded, to the portable terminal device 200 using the refrigerator communication unit 180.

Also, the refrigerator 100 updates the shelf assembly map 333 based on the identification information about the food item and the identification information about the accommodation space in which the storage container B of the food item is unloaded. In other words, the refrigerator 100 may delete the identification information about the food item among the shelf assembly map 333 from the region corresponding to the accommodation space in which the storage container B is unloaded.

The portable terminal device 200 that receives the identification information about the accommodation space updates the shelf assembly map 333 (1170).

The portable terminal device 200 corrects the shelf assembly map 333 based on the shelf assembly map information received from the refrigerator 100.

For example, when the user unloads the storage container B from the second accommodation space of the third shelf assembly 900c, the portable terminal device 200 may correct the third shelf assembly map 333c that displays the third shelf assembly 900c, as illustrated in FIG. 28. In other words, the portable terminal device 200 may correct that the second accommodation space is empty, among the third shelf assembly map 333c.

Also, the portable terminal device 200 may display a food item unloading message POP on the screen displayed on the touch screen 233, as illustrated in FIG. 29.

As described above, the user may determine the accommodation space of the refrigerator 100 in which the desired food item are stored, using the portable terminal device 200. Also, the refrigerator 100 may display the accommodation space in which the storage container B of the user's desired food item is accommodated.

Hereinafter, an example of operations of the refrigerator 100 and the portable terminal device 200 when the user arbitrarily unloads the food item from the refrigerator 100, will be described. In detail, an example of operations of the refrigerator 100 and the portable terminal device 200 when the user unloads the food item from the refrigerator 100 using the portable terminal device 200 without selecting a food item to be unloaded, will be described.

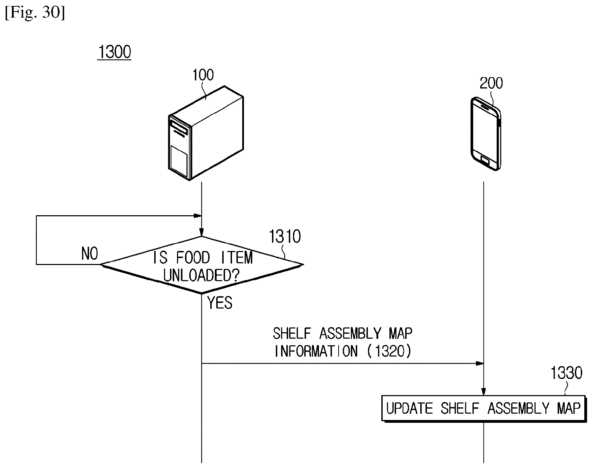

FIG. 30 is a view of another example of the storage container unloading operation of the refrigerator and the portable terminal device according to an embodiment of the present invention.

The storage container unloading operation 1300 of the refrigerator 100 and the portable terminal device 200 will be described with reference to FIG. 30.

The refrigerator 100 determines whether the food item is unloaded (1310).

In order to determine whether the food item is unloaded, the refrigerator 100 may determine whether the storage container B is unloaded from the accommodation space, based on the detection result of the container detection unit 150.

For example, if the user unloads the storage container B from the second accommodation space of the third shelf assembly 900c, a refrigerator 100' may determine that the storage container B is unloaded from the accommodation space using the second micro-switch module of the third shelf assembly 900c.

If it is determined that the storage container B is unloaded from the accommodation space (YES of 1310), the refrigerator 100' transmits shelf assembly map information to the portable terminal device 200 (1320).

Here, the shelf assembly map information transmitted to the portable terminal device 200 from the refrigerator 100 may include identification information about the accommodation space in which the storage container B is unloaded.

Alternatively, the shelf assembly map information may include the identification information about the unloaded food item. The refrigerator 100 may recognize the unloaded food item based on the shelf assembly map and the accommodation space in which the storage container B is unloaded, and may transmit the identification information about the unloaded food item to the portable terminal device 200.

Also, the refrigerator 100' updates the shelf assembly map based on the identification information about the food item and the identification information about the accommodation space in which the storage container B of the food item is unloaded. In other words, the refrigerator 100' may delete the identification information about the food item among the shelf assembly map from the region corresponding to the accommodation space from which the storage container B is unloaded.

The portable terminal device 200 that receives the shelf assembly map information updates the shelf assembly map based on the received identification information about the accommodation space (1320).

The portable terminal device 200 corrects the shelf assembly map based on the received shelf assembly map information.

For example, when the user unloads the storage container B from the second accommodation space of the third shelf assembly 900c, the refrigerator 100 may correct the third shelf assembly map in such a way that the second accommodation space is empty.

As described above, even when the user arbitrarily unloads the food item from the refrigerator 100, the refrigerator 100 may identify the unloaded food item.

Hereinafter, an example of operations of the refrigerator 100 and the portable terminal device 200 when the user reloads the unloaded food item into the refrigerator 100, will be described.

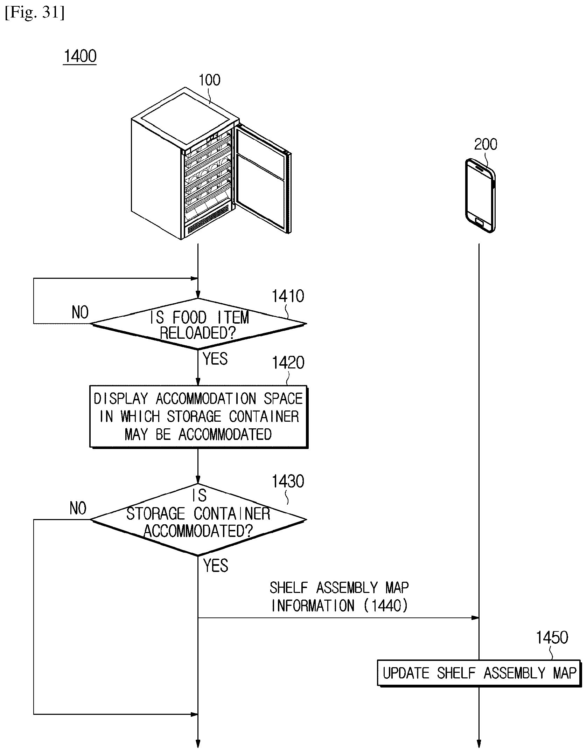

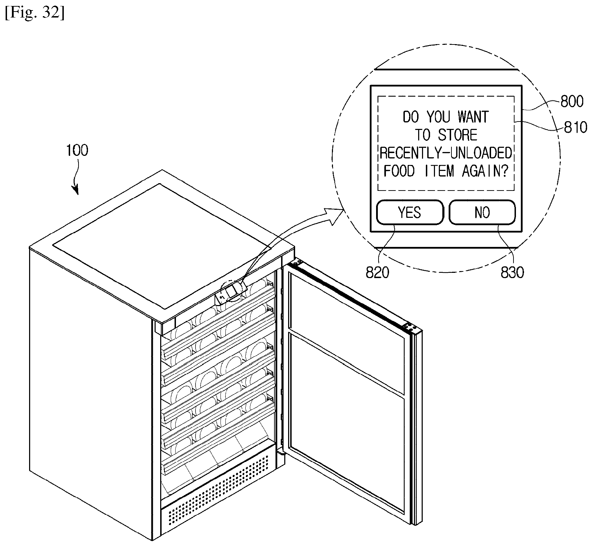

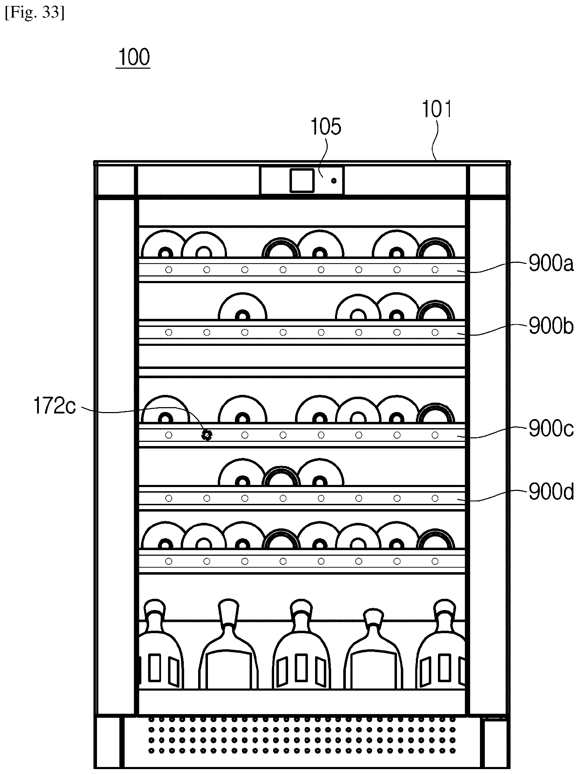

FIG. 31 is a view of an example of an item reloading operation of the refrigerator and the portable terminal device according to an embodiment of the present invention. Also, FIG. 32 is a view of the screen displayed on the refrigerator according to an embodiment of the present invention when the item is reloaded, and FIG. 33 is a view of a case in which the refrigerator according to an embodiment of the present invention displays the accommodation space in which the storage container may be accommodated, when the item is reloaded.

An item reloading operation 1400 of the refrigerator 100 and the portable terminal device 200 will be described with reference to FIGS. 31 through 33.

The refrigerator 100 determines whether the food item is reloaded (1410).

Here, reloading of the food item refers to reloading the food item that remains after the user consumes a part of the food item unloaded from the refrigerator 100, into the refrigerator 100. For example, the user may unload wine from the refrigerator 100 and may consume only a part of wine. In this case, the user may reload a storage container (wine bottle) of wine into the refrigerator 100 so as to keep the remaining wine.

In this way, when the user reloads the food item, the refrigerator 100 may reuse the previously-generated identification information about the food item without the need of re-identifying the food item. For example, when the user reloads the remaining wine into the refrigerator 100, the refrigerator 100 may not need to re-identify wine and may use the previously-generated identification information about wine.

The refrigerator 100 may determine whether the food item is reloaded using various methods.

For example, when the user loads the food item into the refrigerator 100 within a predetermined time after the food item has been unloaded, the refrigerator 100 may display a message inquiring whether to reload the food item.

When the user loads the food item into the refrigerator 100 after the food item has been unloaded for a long time, there is a large possibility that the loaded food item will be not the food item that has been previously unloaded from the refrigerator 100 but a new food item. In other words, if the predetermined time elapses since the food item has been unloaded, there is a large possibility that the whole of the unloaded food item will be consumed.

However, when the food item is unloaded, and the user immediately loads the food item into the refrigerator 100 again, there is a large possibility that the food item to be loaded will be the food item that has been previously unloaded from the refrigerator 100. In other words, if the predetermined time does not elapse since the food item has been unloaded, there is a large possibility that the user consumes a part of the unloaded food item and the other part of the unloaded food item will remain.

When the user loads the food item into the refrigerator 100 within the predetermined time since the food item has been unloaded, based on this point, the refrigerator 100 may display the message inquiring whether to reload the food item.

In detail, when the user opens the door 103 of the refrigerator 100 within the predetermined time since the food item has been unloaded, the refrigerator 100 may display a reloading inquiring message 800 illustrated in FIG. 32 on the touch screen 121.

The reloading inquiring message 800 may include a message display area 810 in which a message inquiring whether to reload the food item is displayed, a confirmation area 820 in which the user confirms whether to reload the food item, and a cancellation area 830 in which the user confirms that the food item is not reloaded.

As another example, the refrigerator 100 may include an additional reloading button (not shown) for confirming whether to reload the food item. In other words, if the user opens the door 103 after pressing a reloading button, the refrigerator 100 may determine that the previously-unloaded food item is reloaded.

If it is determined that the food item is reloaded (YES of 1410), the refrigerator 100 displays the accommodation space in which the storage container B of the food item to be loaded may be accommodated (1420).

In detail, the refrigerator 100 may display the accommodation space in which the food item unloaded within the predetermined time is stored, using the accommodation space display unit 170.

The refrigerator 100 may determine the accommodation space in which the food item unloaded within the predetermined time is stored, using the shelf assembly map and may display the accommodation space in which the food item to be reloaded will be stored, using the accommodation space display unit 170.

For example, if the storage container B in which the food item is accommodated, is unloaded from the second accommodation space of the third shelf assembly 900c within the predetermined time from the present, the refrigerator 100 may control the accommodation space display unit 170 so that the second light-emitting diode module 172c of the third shelf assembly 900c may emit light, as illustrated in FIG. 33.

Subsequently, the refrigerator 100 determines whether the storage container B of the food item is accommodated in the accommodation space (1430).

The refrigerator 100 may determine whether the storage container B is additionally accommodated in the accommodation space, based on the detection result of the container detection unit 150.

For example, if the user accommodates the storage container B in the second accommodation space of the third shelf assembly 900c, the refrigerator 100 may determine that the storage container B is accommodated in the second accommodation space of the third shelf assembly 900c, using the second micro-switch module of the third shelf assembly 900c.

If it is determined that the storage container B is not accommodated in the accommodation space (NO of 1430), the refrigerator 100 terminates an operation relating to reloading of the food item.

In detail, if accommodation of the storage container B is not detected within the predetermined time, the refrigerator 100 may control the accommodation space display unit 170 so as to stop displaying the acceptable accommodation space.

If it is determined that the storage container B is accommodated in the accommodation space (YES of 1430), the refrigerator 100 transmits map information about the shelf assembly to the portable terminal device 200 (1440). Here, the shelf assembly map information transmitted to the portable terminal device 200 from the refrigerator 100 may include identification information about the accommodation space in which the loaded storage container B is accommodated, and identification information about the loaded food item.

If the storage container B is reloaded into the accommodation space in which the storage container B is unloaded, within the predetermined time, the refrigerator 100 may determine that the unloaded food item is reloaded within the predetermined time. As a result, the refrigerator 100 may transmit the identification information about the accommodation space in which the reloaded storage container B is accommodated, and the identification information about the reloaded food item to the portable terminal device 200.

Also, if the storage container B is accommodated in the accommodation space in which the storage container B is not unloaded, the refrigerator 100 may determine that a new food item is loaded. As a result, the refrigerator 100 may transmit the identification information about the accommodation space in which the storage container B is accommodated, to the portable terminal device 200.

The portable terminal device 200 that receives the shelf assembly map information updates the shelf assembly map (1450).

The portable terminal device 200 may update the shelf assembly map 333 based on the shelf assembly map information received from the refrigerator 100.

In detail, if the identification information about the accommodation space and the identification information about the food item are received from the refrigerator 100, the portable terminal device 200 may update the shelf assembly map in such a way that the food item corresponding to the received identification information is stored in the accommodation space corresponding to the received identification information.

Also, if the identification information about the accommodation space is received from the refrigerator 100, the portable terminal device 200 may update the shelf assembly map in such a way that the unidentified food item is stored in the accommodation space corresponding to the received identification information.

As described above, if the user reloads the food item, the refrigerator 100 may display the accommodation space in which the reloaded food item is stored.

A method, whereby the refrigerator 100 identifies and manages the food item in cooperation with the portable terminal device 200, has been described above.

Hereinafter, a method, whereby the refrigerator 100 identifies a food item and manages the stored food item, will be described.

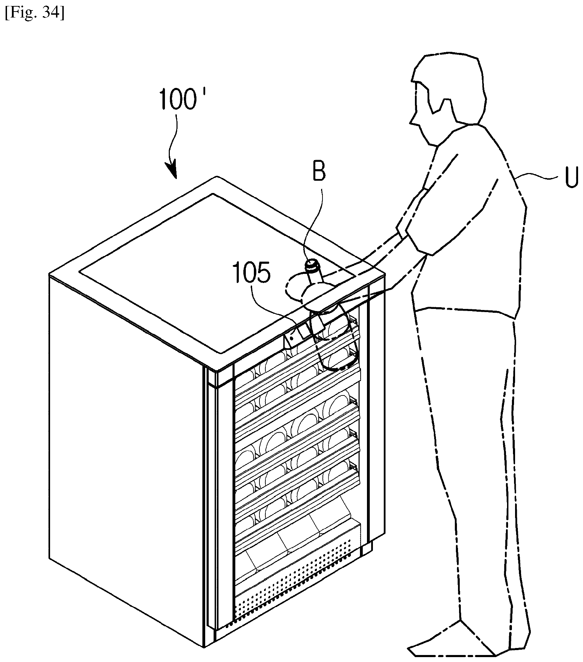

FIG. 34 is a view of an example of an operation of a refrigerator according to another embodiment of the present invention.

Referring to FIG. 34, the refrigerator 100 may manage a food item to be stored in the refrigerator 100.

In detail, the refrigerator 100 may acquire an image of the storage container B in which the food item is stored, and may identify the food item based on the acquire image. In this case, the refrigerator 100 may use a food item database stored in the refrigerator 100 so as to identify the food item.

Also, the refrigerator 100 may display related information of the identified food item based on the image of the storage container B. The refrigerator 100 may use the food item database stored in the external server 10 or the food item database stored in the refrigerator 100 so as to display the related information of the food item.

If the food item is identified, the refrigerator 100 determines whether the food item is loaded into the accommodation space. In other words, the refrigerator 100 determines whether the storage container B of the food item is loaded into the storage compartment. If the food item is loaded into the accommodation space, the refrigerator 100 may record that the food item is kept in the accommodation space and store the related information of the food item.

Subsequently, if the user selects a food item so as to unload the food item, the refrigerator 100 may display the accommodation space in which the food item selected by the user is stored.

Hereinafter, after the configuration of the refrigerator 100 will be first described, a detailed operation of the refrigerator 100 will be described.

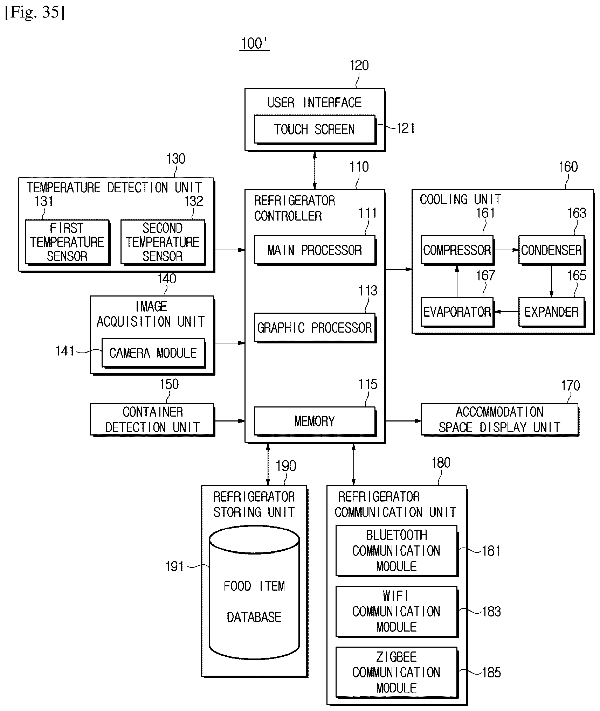

FIG. 35 is a view of a control configuration of the refrigerator according to another embodiment of the present invention.

The refrigerator 100 may include the refrigerator main body 101, the storage compartment 102, the door 103, and the shelf assembly 900, as described in FIGS. 2 through 6.

Also, as illustrated in FIG. 35, the refrigerator 100 may include a user interface 120 that interacts with the user, a temperature detection unit 130 that detects the temperature of an inside of the storage compartment 102, an image acquisition unit 140 that acquires an image of the storage container B, a container detection unit 150 that detects the storage container B stored in the storage compartment 102, a cooling unit 160 that supplies cold air to the storage compartment 102, an accommodation space display unit 170 that displays the accommodation spaces 951a through 958a of the storage compartment 102, a refrigerator communication unit 180 that performs communication with an external device, a refrigerator storing unit 190 that stores a program and data relating to an operation of the refrigerator 100, and a refrigerator controller 110 that overall controls the operation of the refrigerator 100.

A description of the user interface 120, the temperature detection unit 130, the image acquisition unit 140, the container detection unit 150, the cooling unit 160, the accommodation space display unit 170, the refrigerator communication unit 180, and the refrigerator controller 110 are the same as that of FIG. 7 and thus, the description thereof will be omitted.

The refrigerator storing unit 190 may store a control program and control data for controlling the operation of the refrigerator 100. Also, the refrigerator storing unit 190 may operate as an auxiliary memory device of the memory 115 that will be described below.

In particular, the refrigerator storing unit 190 may include a food item database 191 for identifying the food item stored in the refrigerator 100.

An image of the label attached to the outer surface of the storage container B of the food item that relates to the identification information about the food item may be stored in the food item database 191 of the refrigerator storing unit 190.

As a result, the refrigerator 100 may retrieve the identification information about the food item from the image of the label attached to the outer surface of the storage container B using the food item database 191. Here, the identification information about the food item refers to information for indentifying a food item from another food item, such as a name, a production area, a production year, and a manufacturer of the food item.

Also, the food item database 191 may be updated by an external server (see 10 of FIG. 1) in every predetermined updating period. In detail, the refrigerator 100 may request the external server (see 10 of FIG. 1) to update the food item database 191 in every predetermined updating period and may receive the updated food item database 191 from the external server (see 10 of FIG. 1).

As described above, the refrigerator 100' according to another embodiment may further include a refrigerator storing unit 190 compared to the refrigerator 100 according to an embodiment previously described with reference to FIG. 7, and the refrigerator storing unit 190 may store the food item database 191.

Hereinafter, another example of the operation of the refrigerator 100' when the user accommodates a new storage container B in the refrigerator 100', will be described.

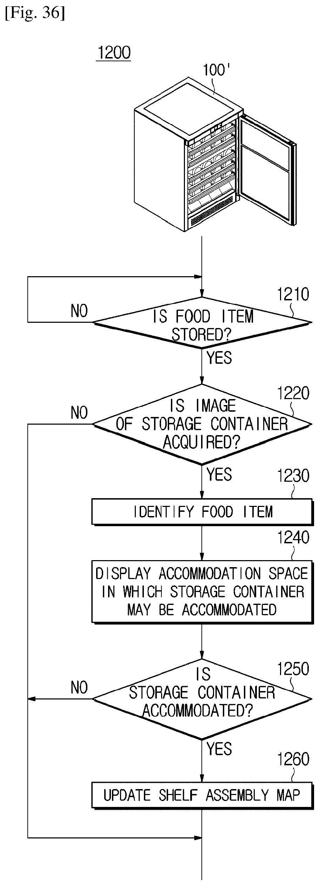

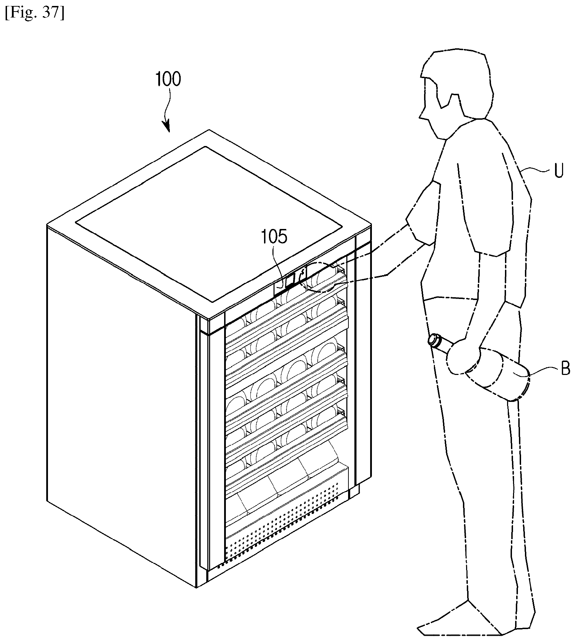

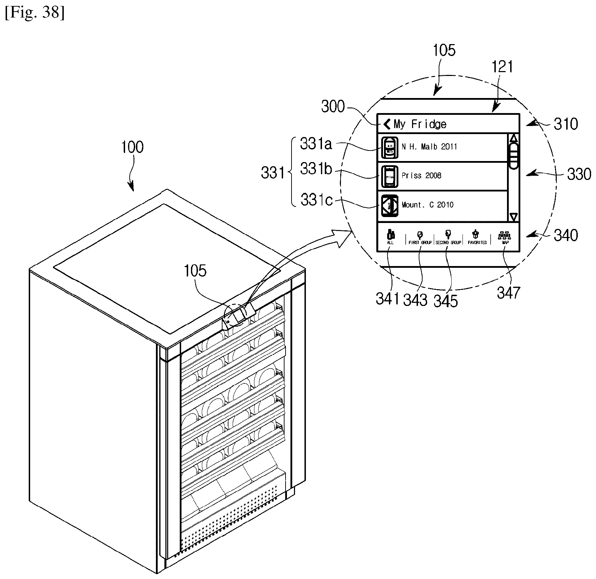

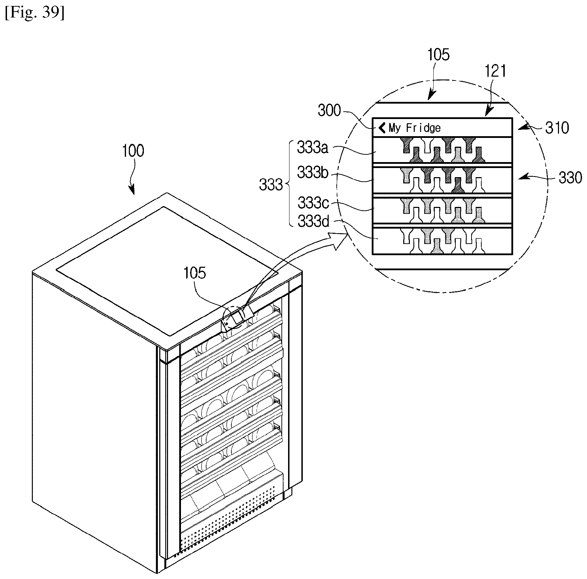

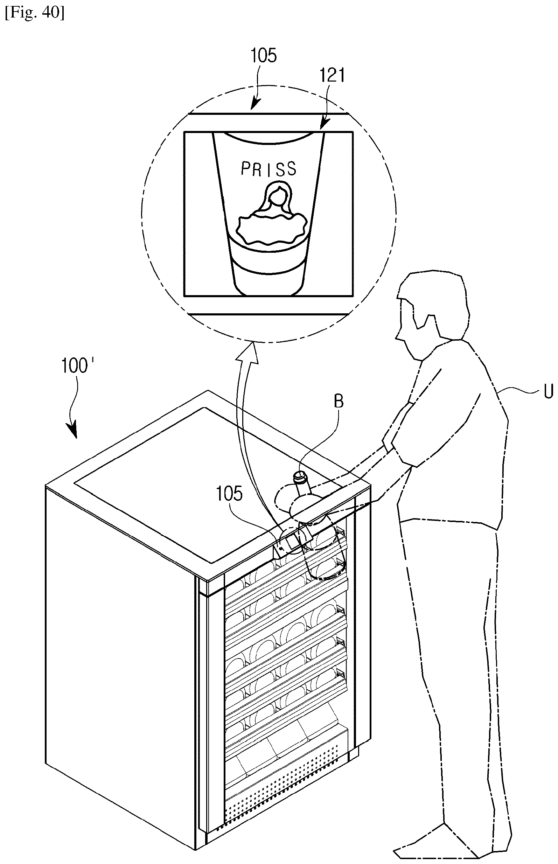

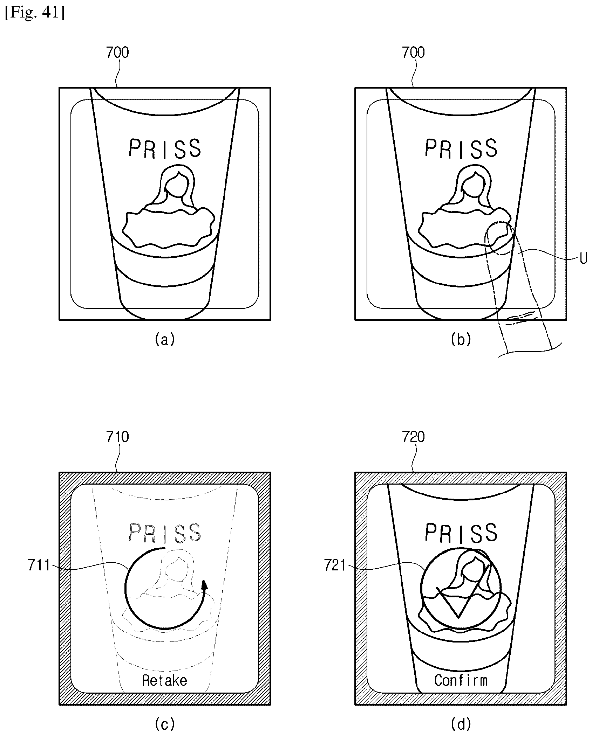

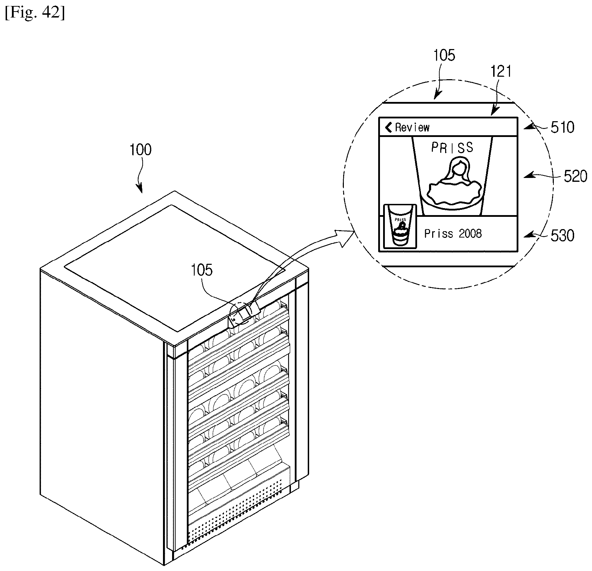

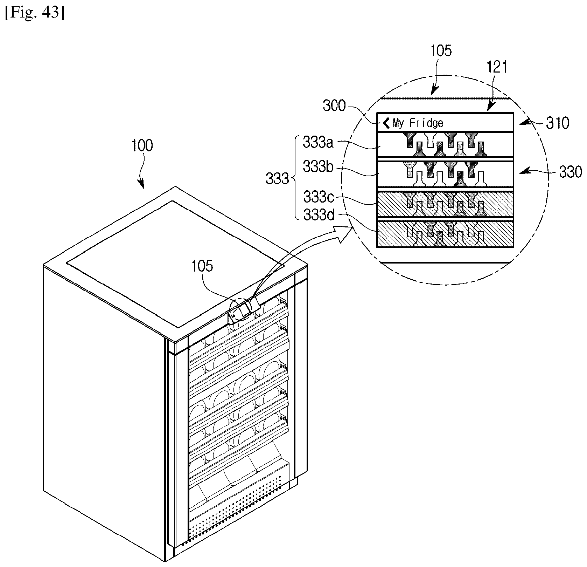

FIG. 36 is a view of an example of a storage container accommodating operation of the refrigerator according to another embodiment of the present invention, and FIG. 37 is a view of a case in which image acquisition instructions for acquiring an image of a storage container are input using the refrigerator according to another embodiment of the present invention. Also, FIGS. 38 and 39 are views of an example of a screen displayed on the refrigerator according to another embodiment of the present invention. Also, FIG. 40 is a view of an example in which the refrigerator according to another embodiment of the present invention acquires an image of the storage container and displays the image. Also, FIG. 41 is a view of an example in which the refrigerator according to another embodiment of the present invention acquires the image of the storage container. Also, FIGS. 42 and 43 are views of another example of the screen displayed on the refrigerator according to another embodiment of the present invention.

A storage container accommodating operation 1200 of the refrigerator 100' and the portable terminal device 200 will be described with reference to FIGS. 36 through 43.

The refrigerator 100' determines whether a food item is to be stored (1210).

When the user wants to additionally store the food item in the refrigerator 100', the user may input instructions for acquiring the image of the storage container B to the refrigerator 100'.

For example, the user may push a panel member (see 106 of FIGS. 9A and 9B) of a control panel 105 disposed on a front surface of the refrigerator main body 101, as illustrated in FIG. 37.

The panel member (see 106 of FIGS. 9A and 9B) may protrude forward according to the user's push operation, as illustrated in FIGS. 9A and 9B. Also, when the panel member (see 106 of FIGS. 9A and 9B) protrudes forward, a photographing direction of the camera module 141 installed in the front surface 106a of the panel member (see 106 of FIGS. 9A and 9B) is a second photographing direction (see SD2 of FIGS. 9A and 9B).

Also, when the user pushes the panel member (see 106 of FIGS. 9A and 9B) of the control panel 105, a touch screen 121 of the refrigerator 100' may display an initial screen 300.

The initial screen 300 may be partitioned into a title area 310, a main display area 330, and a bottom menu area 340, as illustrated in FIGS. 38 and 39.

A title that displays information displayed in the main display area 330, may be displayed in the title area 310.

Various menus for setting and aligning the information displayed in the main display area 330 may be displayed in the bottom menu area 340.

For example, an all display menu 341 that displays all food items stored in the refrigerator 100', a first group display menu 343 that displays a food item belonging to a first group, a second group display menu 345 that displays a food item belonging to a second group, and a map display menu 367 that displays the food items according to positions in which the food items are accommodated in the refrigerator 100', may be displayed in the bottom menu area 340.

A variety of pieces of information may be displayed in the main display area 330 according to the user's selection.

For example, if the user selects the all display menu 341 from the bottom menu area 340, information 331 about all the food items stored in the refrigerator 100' may be displayed in the main display area 330, as illustrated in FIG. 38.

In detail, information 331a about a first item stored in the refrigerator 100', information 331b about a second item stored in the refrigerator 100', information 331c about a third item stored in the refrigerator 100', information 331d about a fourth item stored in the refrigerator 100', and information 331e about a fifth item stored in the refrigerator 100' may be displayed in the main display area 330.

The user may confirm the food items accommodated in the refrigerator 100' based on the information 331 about the food items displayed in the main display area 330.

Also, if the user selects a map display menu 357 from the bottom menu area 340, a shelf assembly map 333 that displays the storage container B of the food item accommodated in the shelf assembly 900 of the refrigerator 100' is displayed in the main display area 330, as illustrated in FIG. 39.

In detail, a first shelf assembly map 333a, a second shelf assembly map 333b, a third shelf assembly map 333c, and a fourth shelf assembly map 333d may be displayed in the main display area 330.

Each of the shelf assembly maps 333a through 333d displays the position of the storage container B accommodated in each of the shelf assemblies 900a through 900d included in the refrigerator 100'. In detail, the shelf assembly maps 333a through 333d display whether the storage container B is accommodated in each of the plurality of accommodation spaces 951a through 958a formed in the shelf assemblies 900a through 900d, respectively.

Also, the shelf assembly map 333 may display whether the storage container B is accommodated in each of the accommodation spaces 951a through 958a and may also display identification information about the food item accommodated in the storage container B.

The refrigerator 100' may update the shelf assembly map based on the detection result of the container detection unit 150.

Also, the user may confirm the position in which the storage container B of the food item is accommodated, based on the shelf assembly map 333 displayed in the main display area 330.

While the initial screen 300 is displayed, the refrigerator 100' determines whether the image of the storage container B is acquired (1220).

If the user pushes the panel member (see 106 of FIGS. 9A and 9B), as illustrated in FIG. 40, the panel member (see 106 of FIGS. 9A and 9B) in which the camera module 141 is installed, protrudes forward. Also, if the panel member (see 106 of FIGS. 9A and 9B) protrudes forward, the camera module 141 of the refrigerator 100' acquires an image, and the touch screen 121 of the refrigerator 100' displays the image acquired by the camera module 141 in real time.

If the user allows the storage container B to be close to the control panel 105, as illustrated in FIG. 40, the refrigerator 100' may acquire the image of the storage container B using the camera module 141.

Also, the refrigerator 100' may display the image of the storage container B on the touch screen 121 in real time. The user may determine whether the exterior of the storage container B is clearly photographed, using the image of the storage container B displayed on the touch screen 121.

While the image of the storage container B is displayed using the touch screen 121, the user may input photographing instructions to the refrigerator 100'.

For example, the touch screen 121 of the refrigerator 100' may display a photographing screen 700 including the image of the storage container B acquired by the camera module 141, as illustrated in (a) of FIG. 41.

If the label of the storage container B is clearly displayed on the touch screen 121, the user may input image acquisition instructions by touching the touch screen 121, as illustrated in (b) of FIG. 41.

If the touch screen 121 is touched, the refrigerator 100' may store the image acquired when the user touches the touch screen 121, in the memory 115.

In this case, if the acquired image is not clear, the touch screen 121 of the refrigerator 100' may include a retake screen 710 including an icon 711 that displays a retake, as illustrated in (c) of FIG. 41.

Also, if an appropriate image is acquired, the touch screen 121 of the refrigerator 100' may include a photographing confirmation screen 720 including an icon 721 that displays photographing confirmation, as illustrated in (d) of FIG. 41.

If the image of the storage container B of the food item is acquired (YES of 1220), the refrigerator 100' identifies the food item stored in the storage container B based on the image of the storage container B.

In detail, the refrigerator 100' may identify the food item stored in the storage container B by analyzing the label attached to the outer surface of the storage container B of the photographed image.

Since the name or trademark of the food item stored in the storage container B is indicated on the label of the storage container B, the refrigerator 100' may identify the food item based on the name or trademark of the food item indicated on the label.

For example, the refrigerator 100' may identify the food item using the food item database 191 stored in the refrigerator storing unit 190 and may generate identification information about the food item. The refrigerator 100' may extract feature points from the acquired storage container image BI, may compare the feature points with feature points of the storage container image stored in the food item database 191, and may identify the food item stored in the storage container B.

In other words, the refrigerator 100 including the food item database 191 may self-identify the food item without the external device's assistance.

As another example, the refrigerator 100' may identify the food item using the food item database stored in the external server 10.

The refrigerator 100' may transmit the storage container image BI to the external server 10 so as to identify the food item.

The external server 10 that receives the storage container image BI from the refrigerator 100' may identify the food item using the food item database and may generate identification information about the food item. The external server 10 may extract feature points from the storage container image BI received from the refrigerator 200, may compare the feature points with feature points of the storage container image stored in the food item database, and may identify the food item stored in the storage container B.

The external server 10 that identifies the food item may transmit the identification information about the food item to the refrigerator 100'.

As another example, the refrigerator 100' may identify the food item using the food item database 291 stored in the portable terminal device 200.

The refrigerator 100' may transmit the storage container image BI to the portable terminal device 200 so as to identify the food item.

The portable terminal device 200 that receives the storage container image BI from the refrigerator 100' may identify the food item using the food item database 291 and may generate identification information about the food item. The portable terminal device 200 may extract feature points from the storage container image BI received from the refrigerator 100', may compare the feature points with feature points of the storage container image stored in the food item database 291, and may identify the food item stored in the storage container B.

The portable terminal device 200 that identifies the food item may transmit the identification information about the food item to the refrigerator 100'.

As described above, in order to identify the food item, the refrigerator 100' acquires the image of the storage container B and uses the acquired image of the storage container B. However, embodiments of the present invention are not limited thereto.

For example, in order to identify the food item, the refrigerator 100' may also use a bar code indicated in the storage container B so as to identify the food item.

Also, if the user says the name or trademark of the food item so as to identify the food item, the refrigerator 100' may also identify the food item by recognizing the user's voice.

After the food item is identified, the refrigerator 100' may display the identification information about the food item.

For example, the refrigerator 100' may display a first item review screen 500 that displays the identification information about the food item, as illustrated in FIG. 42.

The first item review screen 500 may include a title area 510 in which a title is displayed, a storage container display area 520 in which the image of the storage container B of the identified food item is displayed, and an information display area 530 in which the identification information about the identified food item is displayed.

The identification information about the food item, such as the name of the identified food item and a group to which the food item belongs, may be displayed in the information display area 530.

Subsequently, the refrigerator 100' displays an accommodation space in which the storage container B may be accommodated (1240). In detail, the refrigerator 100' may display the accommodation space in which the storage container B may be accommodated, using the user interface 120 and the accommodation space display unit 170.

The refrigerator 100' may determine an empty accommodation space based on the detection result of the container detection unit 150 and may generate shelf assembly map information based on the position of the accommodation space in which the storage container B is accommodated, and the position of the empty accommodation space.

Also, the refrigerator 100' may determine a group to which the food item belongs, based on the identification information about the food item and may determine the accommodation space in which the storage container B may be accommodated, based on the shelf assembly map information that indicates the position of the empty accommodation space and the group to which the food item belongs.

Subsequently, the refrigerator 100' may display the accommodation space in which the storage container B may be accommodated, using the user interface 120. For example, the refrigerator 100' may display the shelf assembly map 333 that displays the accommodation space in which the storage container B may be accommodated, as illustrated in FIG. 42.

In addition, the refrigerator 100' may display the accommodation space that is suitable for accommodating the storage container B of the food item according to the group to which the identified food item belongs, as illustrated in FIG. 43.

For example, when the identified food item belongs to a second group, the portable terminal device 200 may display the third shelf assembly map 333c and the fourth shelf assembly map 333d that display the third shelf assembly 900c and the fourth shelf assembly 900d in which the food item of the second group is stored, respectively, to be distinguished from the first shelf assembly map 333a and the second shelf assembly map 333b.

In detail, the refrigerator 100' may display the third shelf assembly map 333c and the fourth shelf assembly map 333d darker or may display the third shelf assembly map 333c and the fourth shelf assembly map 333d to flicker. Also, the refrigerator 100' may display the first shelf assembly map 333a and the second shelf assembly map 333b with shading or may not display them.

Also, the refrigerator 100' may display the accommodation space in which the storage container B may be accommodated, using the accommodation space display unit 170.

For example, when the food item belongs to the second group, the refrigerator 100' may control the accommodation space display unit 170 in such a way that light-emitting diode modules corresponding to the empty accommodation space of the third shelf assembly 900c and the fourth shelf assembly 900d may emit light.

The user may determine the accommodation space in which the storage container B may be accommodated, using the shelf assembly map 333 displayed in the user interface 120 or the accommodation space display unit 170.

The refrigerator 100' that displays the acceptable accommodation space determines whether the storage container B is accommodated in the accommodation space (1250).

The refrigerator 100' may determine whether the storage container B is additionally accommodated in the accommodation space, based on the detection result of the container detection unit 150.

For example, when the user accommodates the storage container B in a fourth accommodation space of the third shelf assembly 900c, the refrigerator 100' may determine that the storage container B is accommodated in the accommodation space, using the fourth micro-switch module of the third shelf assembly 900c.

If it is determined that the storage container B is not accommodated in the accommodation space (NO of 1250), the refrigerator 100' terminates an operation relating to accommodation of the storage container B.

In detail, if accommodation of the storage container B is not detected within the predetermined time, the refrigerator 100' may control the accommodation space display unit 170 so as to stop displaying the acceptable accommodation space.

If it is determined that the storage container B is accommodated in the accommodation space (YES of 1250), the refrigerator 100' updates the shelf assembly map (1260).

The refrigerator 100' updates the shelf assembly map based on the identification information about the food item and the identification information about the accommodation space in which the storage container B of the food item is accommodated. In other words, the refrigerator 100' may store the identification information about the food item among the shelf assembly map in the region corresponding to the accommodation space in which the storage container B is accommodated.

For example, when the user accommodates the storage container B in the fourth accommodation space of the third shelf assembly 900c, the refrigerator 100 may correct the third shelf assembly map in such a way that the fourth accommodation space is filled.

As described above, the user may determine the accommodation space of the refrigerator 100' that is suitable for storing the food item. Also, the refrigerator 100' may display the accommodation space in which the storage container B of the food item to be stored by the user may be accommodated.

Hereinafter, another example of an operation of the refrigerator 100' when the user unloads the storage container B from the refrigerator 100', will be described.

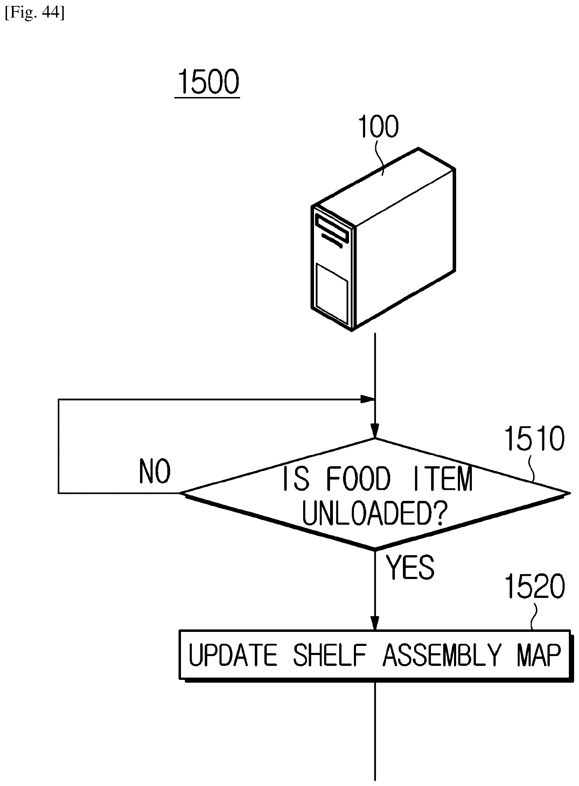

FIG. 44 is a view of an example of a storage container unloading operation of the refrigerator according to another embodiment of the present invention.

A storage container unloading operation 1300 of the refrigerator 100' will be described with reference to FIG. 44.

The refrigerator 100' determines whether the food item is unloaded (1510).

In order to determine whether the food item is unloaded, the refrigerator 100' may determine whether the storage container B is unloaded from the accommodation space, based on the detection result of the container detection unit 150.

For example, if the user unloads the storage container B from the second accommodation space of the third shelf assembly 900c, the refrigerator 100' may determine that the storage container B is unloaded from the accommodation space, using the second micro-switch module of the third shelf assembly 900c.

If it is determined that the storage container B is unloaded from the accommodation space (YES of 1510), the refrigerator 100' updates the shelf assembly map (1520).

The refrigerator 100' updates the shelf assembly map based on the identification information about the food item and the identification information about the accommodation space from which the storage container B of the food item is unloaded. In other words, the refrigerator 100' may delete the identification information about the food item among the shelf assembly map in the region corresponding to the accommodation space from which the storage container B is unloaded.

For example, when the user unloads the storage container B from the second accommodation space of the third shelf assembly 900c, the refrigerator 100 may correct the third shelf assembly map in such a way that the second accommodation space is empty.

As described above, the refrigerator 100' may determine the accommodation space in which the user accommodates the food item.

Hereinafter, an example of an operation of the refrigerator 100 when the user reloads the unloaded food item into the refrigerator 100, will be described.

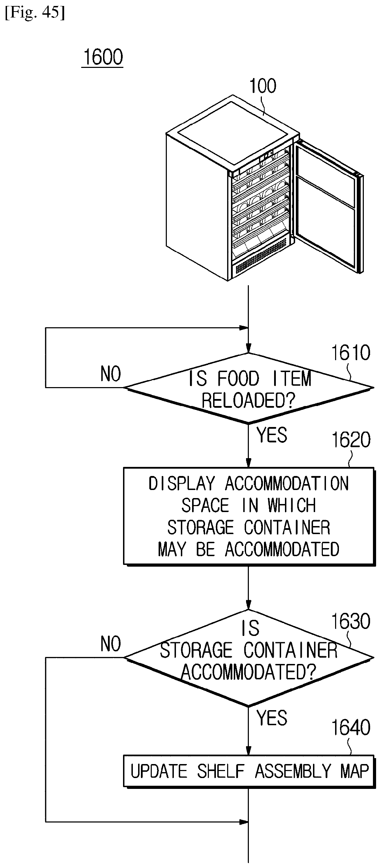

FIG. 45 is a view of an example of an item reloading operation of the refrigerator according to another embodiment of the present invention.

An item reloading operation 1600 of the refrigerator 100 will be described with reference to FIG. 45.

The refrigerator 100 determines whether the food item is reloaded (1610).

Here, reloading of the food item refers to reloading the food item that remains after the user consumes a part of the food item unloaded from the refrigerator 100, into the refrigerator 100. For example, the user may unload wine from the refrigerator 100 and may consume only a part of wine. In this case, the user may reload a storage container (wine bottle) of wine into the refrigerator 100 so as to keep the remaining wine.

The refrigerator 100 may determine whether the food item is reloaded, using various methods.

For example, when the user loads the food item into the refrigerator 100 within a predetermined time after the food item has been unloaded, the refrigerator 100 may display a message inquiring whether to reload the food item.

As another example, the refrigerator 100 may include a separate reloading button (not shown) for confirming reloading of the food item. In other words, when the user opens the door 103 after pressing the reloading button, the refrigerator 100 may determine that the previously-unloaded food item is to be reloaded.

If it is determined that the food item is reloaded (YES of 1610), the refrigerator 100 displays the accommodation space in which the storage container B of the loaded food item may be accommodated (1620).

In detail, the refrigerator 100 may display the accommodation space in which the food item unloaded within the predetermined time is stored, using the accommodation space display unit 170.

The refrigerator 100 may determine the accommodation space in which the food item unloaded within the predetermined time is stored, using the shelf assembly map, and may display an accommodation space in which a food item to be reloaded is to be stored, using the accommodation space display unit 170.

For example, if the storage container B in which the food item is stored, is unloaded from the second accommodation space of the third shelf assembly 900c within the predetermined time from the present, the refrigerator 100 may control the accommodation space display unit 170 so that the second light-emitting diode module 172c of the third shelf assembly 900c may emit light, as illustrated in FIG. 33.

Subsequently, the refrigerator 100 determines whether the storage container B of the food item is accommodated in the accommodation space (1630).

The refrigerator 100 may determine whether the storage container B is additionally accommodated in the accommodation space, based on the detection result of the container detection unit 150.

For example, if the user accommodates the storage container B in the second accommodation space of the third shelf assembly 900c, the refrigerator 100 may determine that the storage container B is accommodated in the second accommodation space of the third shelf assembly 900c, using the second micro-switch module of the third shelf assembly 900c.

If it is determined that the storage container B is not accommodated in the accommodation space (NO of 1630), the refrigerator 100 terminates an operation relating to reloading of the food item.

If it is determined that the storage container B is accommodated in the accommodation space (YES of 1630), the refrigerator 100 updates the shelf assembly map (1640).

If the storage container B is re-accommodated in the accommodation space from which the storage container B is unloaded, within the predetermined time, the refrigerator 100 may determine that the unloaded food item is reloaded within the predetermined time. As a result, the refrigerator 100 may update the shelf assembly map based on the identification information about the accommodation space in which the reloaded storage container B is accommodated, and identification information about the reloaded food item.

Also, if the storage container B is accommodated in the accommodation space from which the storage container B is not unloaded, the refrigerator 100 may determine that new food item is loaded. As a result, the refrigerator 100 may update the shelf assembly map in such a way that an unidentified food item is stored in the accommodation space in which the storage container B is accommodated.

As described above, if the user reloads the food item, the refrigerator 100 may display the accommodation space in which the food item is stored.

Hereinafter, a configuration of a refrigerator according to still another embodiment of the present invention will be described.

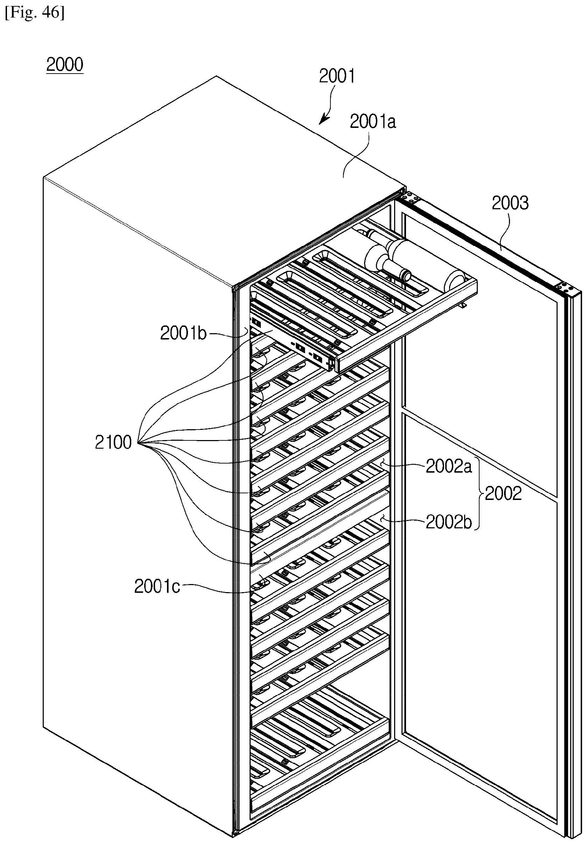

FIG. 46 is a view of an exterior of a refrigerator according to still another embodiment of the present invention. An exterior and an internal structure of a refrigerator 2000 will be described with reference to FIG. 46.

The refrigerator 2000 may include a refrigerator main body 2001 in which a storage compartment 2002 having an open front side is formed, and a door 2003 that shields the storage compartment 2002.

The refrigerator main body 2001 may include an inner case 2001a that forms the storage compartment 2002, an outer case 2001b that is coupled to an outside of the inner case 2001a and forms an exterior of the refrigerator 2000, and an insulating material that is disposed between the inner case 2001a and the outer case 2001b and insulates the storage compartment 2002. The refrigerator main body 2001 may form the exterior of the refrigerator 2000 and may accommodate various components that constitute the refrigerator 2000.

Also, the refrigerator main body 2001 has an opening formed in the front side of the refrigerator main body 2001, and the storage compartment 2002 is disposed in the opening. Also, the door 2003 that shields the storage compartment 2002 from the outside may be disposed on the front side of the refrigerator main body 2001.

The door 2003 is rotatably coupled to the refrigerator main body 2001 using a hinge. Also, a gasket that seals in the cold air of the storage compartment 102 by sealing the door 2003 and the refrigerator main body 2001 when the door 2003 is closed, may be disposed at an edge of a rear side of the door 2003.

In addition, a micro-switch may be disposed at one side of the refrigerator main body 2001 so as to detect whether the door 2003 is open or closed. For example, when the door 2003 is closed, the micro-switch may output a door closing signal, and when the door 2003 is open, the micro-switch may output a door open signal.

The storage container B in which a food item is stored, may be accommodated in the storage compartment 2002. The storage compartment 2002 may be partitioned into a first storage compartment 2002a and a second storage compartment 2002b using a partition wall 2001c.

The first storage compartment 2002a and the second storage compartment 2002b may be maintained at different temperatures. For example, an inside of the first storage compartment 2002a may be maintained at the temperature of about 16°C, and an inside of the second storage compartment 2002b may be maintained at the temperature of about 10°C.

In this way, the refrigerator 2000 is partitioned into the first storage compartment 2002a and the second storage compartment 2002b, and the first storage compartment 2002a and the second storage compartment 2002b are maintained at different temperatures to store various food items. In detail, the first storage compartment 2002a may store red wine, and the second storage compartment 2002b may store white wine.

As described above, the storage compartment 2002 is partitioned into the first storage compartment 2002a and the second storage compartment 2002b. However, embodiments of the present invention are not limited thereto, and the storage compartment 2002 may be formed as a single body or may be partitioned into three or more storage compartments.

One or more shelf assemblies 2100 for accommodating storage containers in which food items are stored, may be disposed in the first storage compartment 2002a and the second storage compartment 2002b. For example, as illustrated in FIG. 46, eight shelf assemblies 2100 may be disposed in the first storage compartment 2002a, and four shelf assemblies 2100 may be disposed in the second storage compartment 2002b. However, the number of shelf assemblies 2100 is not limited by the drawings.

The shelf assembly 2100 may protrude toward the front of the refrigerator main body 2001, as illustrated in FIG. 1. In this way, the shelf assembly 2100 is disposed to protrude forward so that the user may easily accommodate the storage container B in which the food item is stored, in the shelf assembly 2100. Also, when the user unloads the storage container B in which a particular food item is stored, the user may check a label attached to an outer surface of the storage container B after the shelf assembly 2100 protrudes forward, and may easily unload the storage container B in which a desired food item is stored.

Hereinafter, the shelf assembly 2100 will be described.

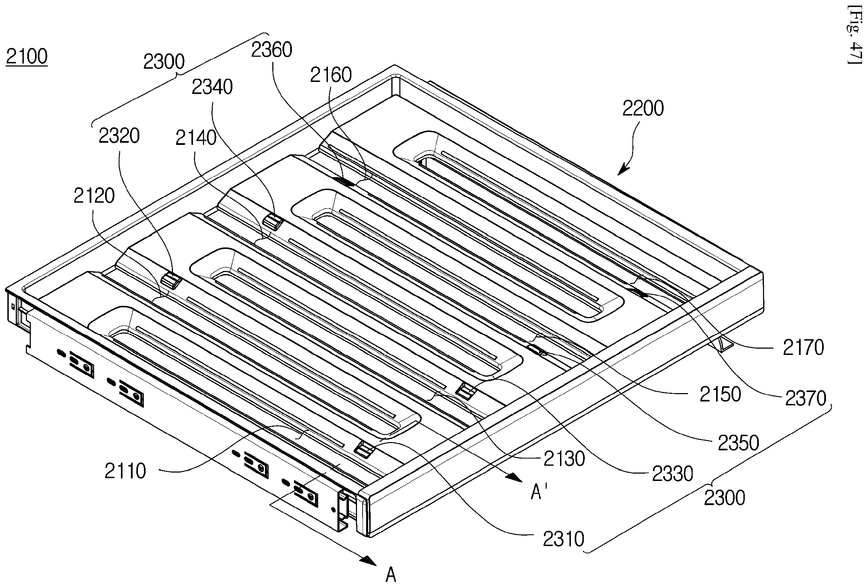

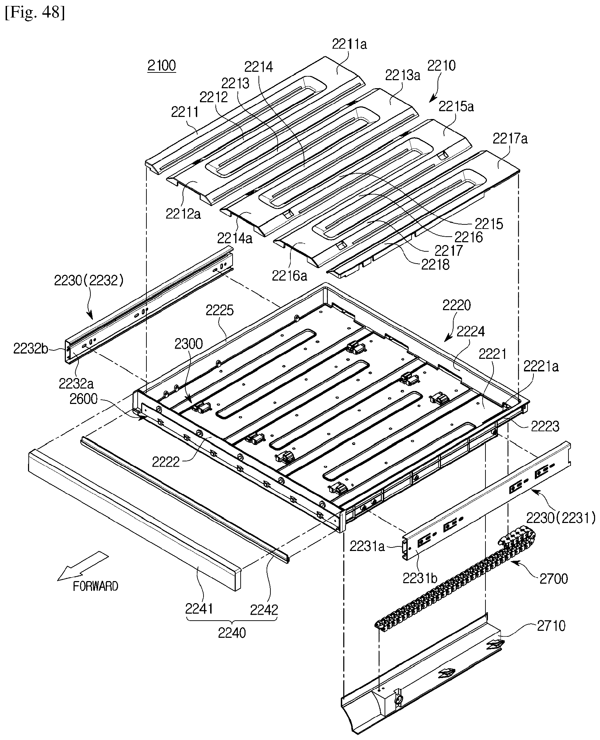

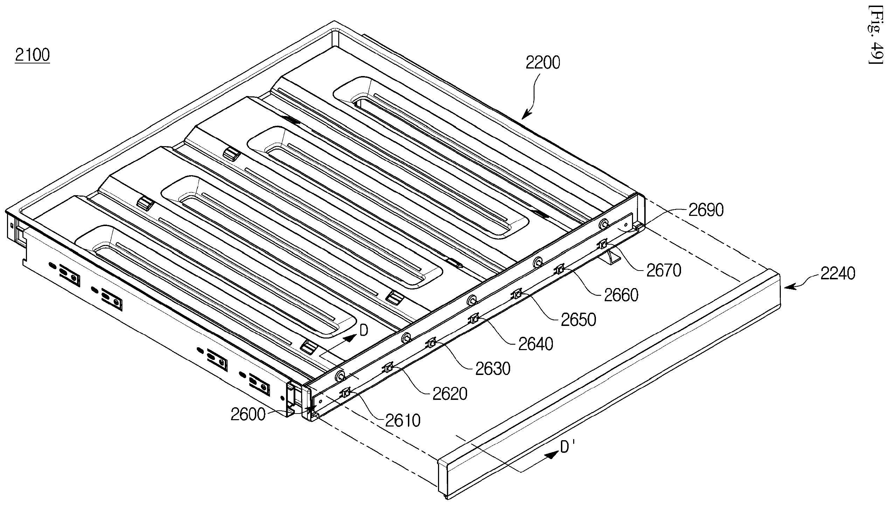

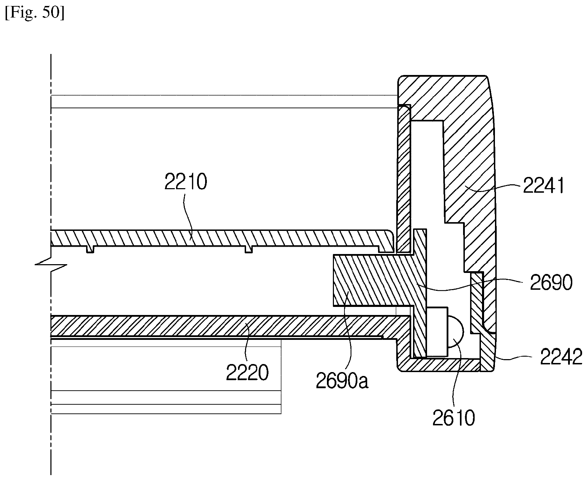

FIG. 47 is a view of a shelf assembly included in a refrigerator according to yet another embodiment of the present invention, and FIG. 48 is an exploded view of the shelf assembly illustrated in FIG. 47. Also, FIG. 49 is a view of a display unit included in the shelf assembly illustrated in FIG. 47, and FIG. 50 is a cross-sectional view taken along line D-D' illustrated in FIG. 49.

As illustrated in FIGS. 47 and 48, the shelf assembly 2100 may include a shelf assembly main body 2200 that forms accommodation spaces 2110 through 2170 in which the storage container B is accommodated, a storage container detection unit 2300 that detects whether the storage container B is accommodated in each of the accommodation spaces 2110 through 2170 and displays accommodation information indicating that the storage container B is accommodated in each of the accommodation spaces 2110 through 2170, and a chain cable 2700 that connects the shelf assembly 2100 and the refrigerator main body 2001.

The shelf assembly main body 2200 may include an upper plate 2210, a lower plate 2220, a slide rail 2230, and a front cover 2240, as illustrated in FIG. 48.

The upper plate 2210 has alphabetical character "S"-shapes and forms one or more accommodation spaces 2110 through 2170.

For example, the upper plate 2210 may include a plurality of partitioning parts 2211 through 2218 disposed in parallel to each other, and a plurality of connection parts 2211a through 2217a that connect the plurality of partitioning parts 2211 through 2218.

The plurality of partitioning parts 2211 through 2218 may include a first partitioning part 2211, a second partitioning part 2212, a third partitioning part 2213, a fourth partitioning part 2214, a fifth partitioning part 2215, a sixth partitioning part 2216, a seventh partitioning part 2217, and an eighth partitioning part 2218.

Also, a first accommodation space 2110 may be formed by the first partitioning part 2211 and the second partitioning part 2212, and a second accommodation space 2120 may be formed by the second partitioning part 2212 and the third partitioning part 2213, and a third accommodation space 2130 may be formed by the third partitioning part 2213 and the fourth partitioning part 2214. Also, a fourth accommodation space 2140 may be formed by the fourth partitioning part 2214 and the fifth partitioning part 2215, and a fifth accommodation space 2150 may be formed by the fifth partitioning part 2215 and the sixth partitioning part 2216, and a sixth accommodation space 2160 may be formed by the sixth partitioning part 2216 and the seventh partitioning part 2217, and a seventh accommodation space 2170 may be formed by the seventh partitioning part 2217 and the eighth partitioning part 2218.

An inclined plane may be formed at a side of each of the partitioning parts 2211 through 2218 so as to accommodate the storage container B. In detail, each of the partitioning parts 2211 through 2218 may have a polyprism shape, a cross-section of which is a trapezoid.

Also, the plurality of connection parts 2211a through 2217a may include a first connection part 2211a that connects the first partitioning part 2211 and the second partitioning part 2212, a second connection part 2212a that connects the second partitioning part 2212 and the third partitioning part 2213, a third connection part 2213a that connects the third partitioning part 2213 and the fourth partitioning part 2214, a fourth connection part 2214a that connects the fourth partitioning part 2214 and the fifth partitioning part 2215, a fifth connection part 2215a that connects the fifth partitioning part 2215 and the sixth partitioning part 2216, a sixth connection part 2216a that connects the sixth partitioning part 2216 and the seventh partitioning part 2217, and a seventh connection part 2217a that connects the seventh partitioning part 2217 and the eighth partitioning part 2218.

In addition, adjacent connection parts 2211a and 2212a, 2212a and 2213a, 2213a and 2214a, 2214a and 2215a, 2215a and 2216a, and 2216a and 2217a may be positioned on opposite sides of the partitioning parts 2211 through 2218. As a result, the upper plate 2210 may have the alphabetical character "S"-shapes including the plurality of partitioning parts 2211 through 2218 and the plurality of connection parts 2211a through 2217a.

In addition, the upper plate 2210 may be formed as a single body or may be formed by assembling the plurality of partitioning parts 2211 through 2218 and the plurality of connection parts 2211a through 2217a. In other words, the plurality of partitioning parts 2211 through 2218 and the plurality of connection parts 2211a through 2217a may be integrated with each other to form the upper plate 2210, or the plurality of partitioning parts 2211 through 2218 and the plurality of connection parts 2211a through 2217a may be assembled with each other, thereby forming the upper plate 2210.

The lower plate 2220 may include a lower base 2221 coupled to the upper plate 2210, a front wall 2222 disposed at the front of the lower base 2221, a right wall 2223 disposed on a right side of the lower base 2221, a rear wall 2224 disposed at the rear of the lower base 2221, and a left wall 2225 disposed on a left side of the lower base 2221.

The lower base 2221 may be coupled to the upper plate 2210 and may have the alphabetical character "S"-shapes, similar to the upper plate 2210. As a result, a ventilation hole through which cold air may flow, is formed in a lower portion of each of the accommodation spaces 2110 through 2170 in which the storage container B is accommodated, so that the storage container B may be more effectively cooled.

A mounting space is formed between the lower base 2221 and the upper plate 2210. The storage container detection unit 2300, an electric wire that extends from the storage container detection unit 2300 to the refrigerator main body 2001, and an electric wire that extends from the display unit 2600 to the refrigerator main body 2001 may be mounted in the mounting space.

Also, an electric wire through hole 2221a through which the electric wires that extend from the storage container detection unit 2300 and the display unit 2600 to the refrigerator main body 2001 may pass, is formed in one side of the lower base 2221, and the electric wires may pass through the electric wire through hole 2221a and may be extended to the chain cable 2700.

The front wall 2222, the right wall 2223, the rear wall 2224, and the left wall 2225 prevent a shape of the lower base 2221 from being deformed.

The lower base 2221, the front wall 2222, the right wall 2223, the rear wall 2224, and the left wall 2225 may be formed as a single body and may form the lower plate 2220, or the front wall 2222, the right wall 2223, the rear wall 2224, and the left wall 2225 are assembled with the lower base 2221 and may form the lower plate 2220.

The slide rail 2230 may include a right slide rail 2231 disposed between the right wall 2223 of the lower plate 2220 and an inner wall of the storage compartment 2002, and a left slide rail 2232 disposed between the left wall 2225 of the lower plate 2220 and the inner wall of the storage compartment 2002.

The right slide rail 2231 includes an inner member 2231a that is fixed to the right wall 2223 of the lower plate 2220 and makes a rectilinear motion together with the shelf assembly 2100, and an outer member 2231b that is fixed to the inner wall of the storage compartment 2002 and movably supports the inner member 2231a.

The left slide rail 2232 includes an inner member 2232a that is fixed to the left wall 2225 of the lower plate 2220 and makes a rectilinear motion together with the shelf assembly 2100, and an outer member 2232b that is fixed to the inner wall of the storage compartment 2002 and movably supports the inner member 2232a.

By using the right slide rail 2231 and the left slide rail 2232, the shelf assembly 2100 may be moved to protrude from the storage compartment 2002 or may be moved to be inserted into the storage compartment 2002.

The front cover 2240 is disposed on the front wall 2222 of the lower plate 2220 and protects the display unit 2600 installed on a front surface of the shelf assembly 2100. In detail, a mounting space may be formed between the front wall 2222 of the lower plate 2220 and the front cover 2240.

The front cover 2240 includes a first front cover 2241 formed of an opaque material and a second front cover 2242 formed of a transparent or semi-transparent material. The first front cover 2241 allows the display unit 2600 not to be exposed directly to the user for an aesthetically appealing effect, and the second front cover 2242 allows light emitted from the display unit 2600 to be recognized by the user.

For example, as illustrated in FIG. 48, when the display unit 2600 is disposed on a lower portion of the front wall 2222, the opaque first front cover 2241 may be installed on an upper portion of the front wall 2222, and the transparent or semi-transparent second front cover 2242 may be installed on the lower portion of the front wall 2222. As a result, the light emitted from the display unit 2600 may pass through the second front cover 2242 and may be recognized by the user.

The display unit 2600 displays whether the storage container B is accommodated in each of the accommodation spaces 2110 through 2170. For example, when the user unloads the storage container B, the display unit 2600 may display an empty accommodation space, and when the user stores the storage container B, the display unit 2600 may display any one of the accommodation spaces 2110 through 2170 in which the storage container B is accommodated.

The display unit 2600 may include one or more light-emitting devices 2610 through 2670 installed to correspond to one or more accommodation spaces 2110 through 2170 and a printed circuit board (PCB) 2690 on which the light-emitting devices 2610 through 2670 are fixed.

The one or more light-emitting devices 2610 through 2670 may be disposed to correspond to the accommodation spaces 2110 through 2170. For example, the one or more light-emitting devices 2610 through 2670 may include a first light-emitting device 2610 that corresponds to the first accommodation space 2110, a second light-emitting device 2620 that corresponds to the second accommodation space 2120, a third light-emitting device 2630 that corresponds to the third accommodation space 2130, a fourth light-emitting device 2640 that corresponds to the fourth accommodation space 2140, a fifth light-emitting device 2650 that corresponds to the fifth accommodation space 2150, a sixth light-emitting device 2660 that corresponds to the sixth accommodation space 2160, and a seventh light-emitting device 2670 that corresponds to the seventh accommodation space 2170.

In addition, each of the light-emitting devices 2610 through 2670 may display accommodation information (information indicating whether the storage container B is accommodated) of each of the accommodation spaces 2110 through 2170. For example, the first light-emitting device 2610 may display whether the storage container B is accommodated in the first accommodation space 2110, and the second light-emitting device 2620 may display whether the storage container B is accommodated in the second accommodation space 2120, and the third light-emitting device 2630 may display whether the storage container B is accommodated in the third accommodation space 2130. In addition, each of the fourth through seventh light-emitting devices 2640 through 2670 may display whether the storage container B is accommodated in each of the fourth through seventh accommodation spaces 2140 through 2170.

Devices that are turned on or off according to electrical signals, such as light-emitting diodes (LEDs), may be used as the light-emitting devices 2610 through 2670.

The light-emitting devices 2610 through 2670 are fixed on the PCB 2690, and the PCB 2690 transmits electrical signals for turning on or off the light-emitting element in each of the light-emitting devices 2610 through 2670. In addition, the PCB 2690 includes a connector 2690a for receiving the electrical signals, and the connector 2690a of the PCB 2690 is disposed in the mounting space between the upper plate 2210 and the lower plate 2220.

The above-described light-emitting devices 2610 through 2670 receive the electrical signals corresponding to the accommodation information regarding the storage container B from a control processor (not shown) disposed in the refrigerator main body 2001.

In addition, an electric wire that transmits the electrical signals to each of the light-receiving devices 2610 through 2670 extends from the connector 2690a of the PCB 2690 and is connected to the refrigerator main body 2001 through the mounting space between the upper plate 2210 and the lower plate 2220 and the chain cable 2700. In other words, each of the light-emitting devices 2610 through 2670 may receive the electrical signals from the control processor (not shown) of the refrigerator main body 2001 through the chain cable 2700 and the PCB 2690.

The storage container detection unit 2300 detects whether the storage container B is accommodated in each of the accommodation spaces 2110 through 2170. For example, when the user loads the storage container B, the storage container detection unit 2300 may detect each of the accommodation spaces 2110 through 2170 in which the storage container B is loaded.

The storage container detection unit 2300 may include one or more container detection sensors 2310 through 2370 installed in one or more accommodation spaces 2110 through 2170. For example, the storage container detection unit 2300 may include a first container detection sensor 2310 installed in the first accommodation space 2110, a second container detection sensor 2320 installed in the second accommodation space 2120, a third container detection sensor 2330 installed in the third accommodation space 2130, a fourth container detection sensor 2340 installed in the fourth accommodation space 2140, a fifth container detection sensor 2350 installed in the fifth accommodation space 2150, a sixth container detection sensor 2360 installed in the sixth accommodation space 2160, and a seventh container detection sensor 2370 installed in the seventh accommodation space 2170.

In addition, each of the container detection sensors 2310 through 2370 may detect whether the storage container B is accommodated in each of the accommodation spaces 2110 through 2170. For example, the first container detection sensor 2310 may detect whether the storage container B is accommodated in the first accommodation space 2110, and the second container detection sensor 2320 may detect whether the storage container B is accommodated in the second accommodation space 2120, and the third container detection sensor 2330 may detect whether the storage container B is accommodated in the third accommodation space 2130. In addition, the fourth through seventh container detection sensors 2340 through 2370 may detect whether the storage container B is accommodated in each of the fourth through seventh accommodation spaces 2140 through 2170.

Each of the container detection sensors 2310 through 2370 transmits the electrical signals indicating the result of detecting whether the storage container B is accommodated, to the control processor (not shown) disposed in the refrigerator main body 2001.

In addition, the electric wire that transmits the electrical signals extends from each of the container detection sensors 2310 through 2370 and is connected to the refrigerator main body 2001 through the mounting space between the upper plate 2210 and the lower plate 2220 and the chain cable 2700. In other words, each of the container detection sensors 2310 through 2370 may transmit the electrical signals to the control processor (not shown) of the refrigerator main body 2001 through the chain cable 2700.

Various sensors, such as reed switches, micro-switches, and infrared sensors, may be used as the container detection sensors 2310 through 2370.

A detailed embodiment of the container detection sensors 2310 through 2370 will be described in detail below.

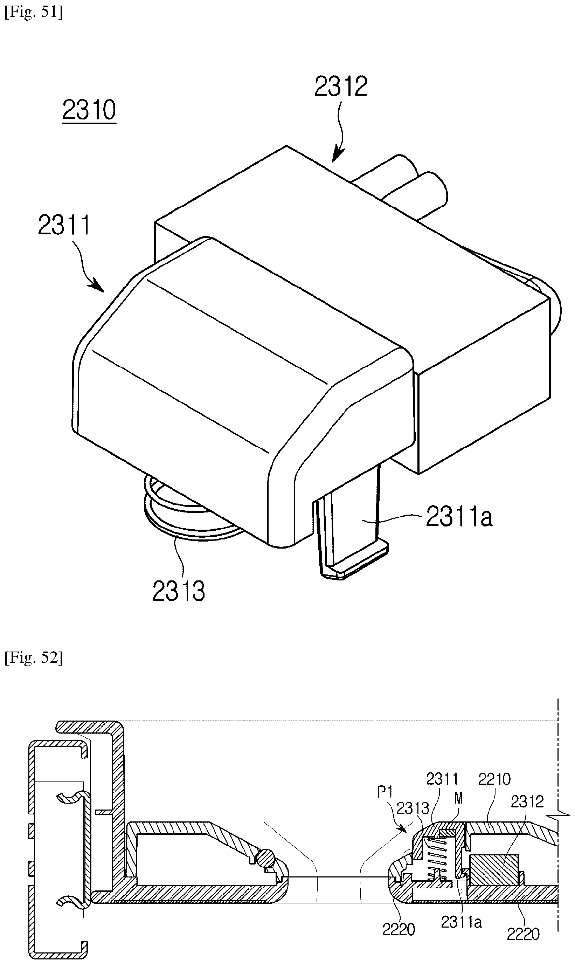

FIG. 51 is a view of an example of a storage container detection unit included in the shelf assembly illustrated in FIG. 47, and FIGS. 52 and 53 are cross-sectional views taken along line A-A' illustrated in FIG. 47.

Each of the container detection sensors 2310 through 2370 (see FIG. 47) may include a reed switch, as illustrated in FIG. 51. Since the container detection sensors 2310 through 2370 (see FIG. 47) have the same shape, a configuration of the first container detection sensor 2310 will now be described, and a description of the second through seventh container detection sensors 2320 through 2370 (see FIG. 47) will be omitted.

The container detection sensor 2310 may include a moving member 2311 that is movable depending on whether the storage container B is accommodated, a fixed member 2312 fixed to the shelf assembly main body 2200, and an elastic member 2313 that restores the moving member 2311.

The moving member 2311 is movable in a vertical direction depending on whether the storage container B is accommodated in the accommodation space 2110 (the first accommodation space, because this description is a description of the first container detection sensor) in which the container detection sensor 2310 is installed.

For example, when the storage container B is not accommodated in the accommodation space 2110, the moving member 2311 is disposed at a first position PI, as illustrated in FIG. 52.

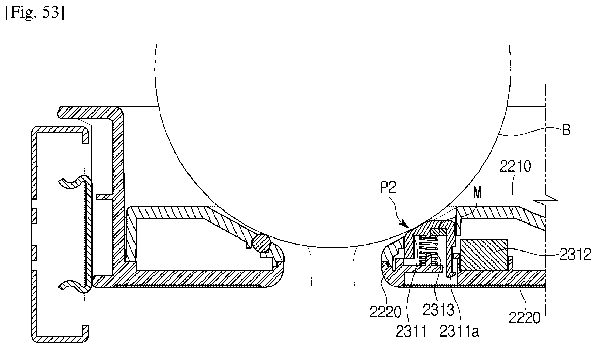

In this case, when the storage container B is accommodated in the accommodation space 2110, as illustrated in FIG. 53, the moving member 2311 is moved downward by the weight of the storage container B and is stopped at a second position P2 by stoppers 2311a and 2311b formed in the moving member 2311. That is, when the storage container B is accommodated in the accommodation space 2110, the moving member 2311 moves from the first position P1 to the second position P2.

In addition, when the storage container B is removed from the accommodation space 2110, the moving member 2311 is moved upward by an elastic force of the elastic member 2313 and is stopped at the first position P1 by the stoppers 2311a and 2311b formed in the moving member 2311. That is, when the storage container B is removed from the accommodation space 2110, the moving member 2311 returns to the first position P1.

The moving member 2311 includes a permanent magnet M that generates a magnetic field in the moving member 2311, and a position at which the magnetic field is generated, varies according to movement of the moving member 2311.

The fixed member 2312 detects the magnetic field generated by the moving member 2311 and outputs electrical signals indicating whether the magnetic field is detected. For example, the fixed member 2312 may include a switch (not shown) that is turned on or off according to presence of the magnetic field.

When the moving member 2311 is disposed at the first position PI, as illustrated in FIG. 52, the fixed member 2312 does not detect the magnetic field generated by the permanent magnet M included in the moving member 2311.

On the other hand, when the moving member 2311 is disposed at the second position P2, as illustrated in FIG. 53, the fixed member 2312 may detect the magnetic field generated by the permanent magnet M included in the moving member 2311.

In addition, the fixed member 2312 may output container detection signals indicating that the storage container B is accommodated, or container non-detection signals indicating that the storage container B is not accommodated, depending on whether the magnetic field is detected.

For example, when the magnetic field generated by the moving member 2311 is detected, the fixed member 2312 may output the container detection signals, and when the magnetic field generated by the moving member 2311 is not detected, the fixed member 2312 may output the container non-detection signals.

As described above, when the container detection sensors 2310 through 2370 (see FIG. 47) includes reed switches, the container detection sensors 2310 through 2370 (see FIG. 47) may detect whether the storage container B is accommodated, using a physical pressure generated by the storage container B.

In addition, as above, the container detection sensors 2310 through 2370 (see FIG. 47) including reed switches have been described. However, the container detection sensors 2310 through 2370 are not limited to the reed switches.

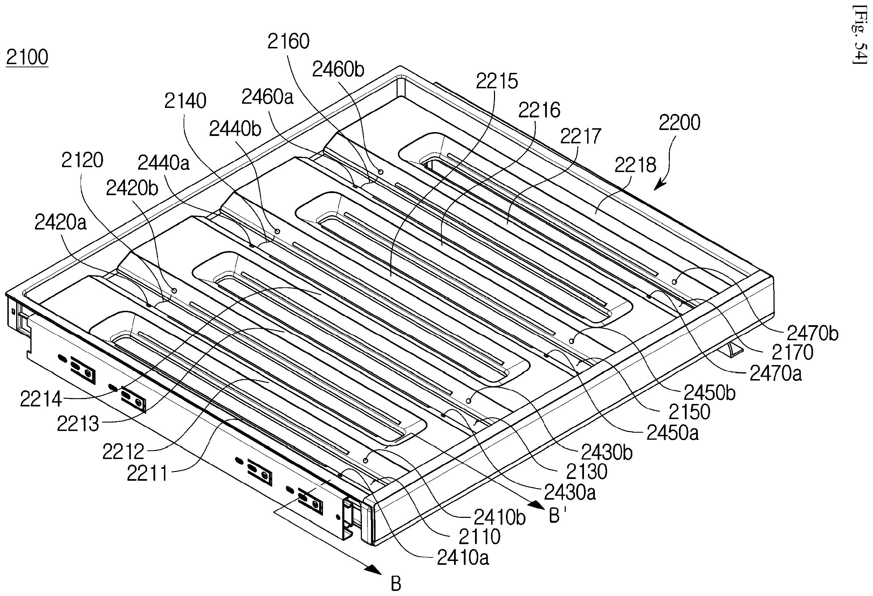

FIG. 54 is a view of another example of a storage container detection unit included in the shelf assembly illustrated in FIG. 47, and FIGS. 55 and 56 are cross-sectional views taken along line B-B' illustrated in FIG. 54.

As illustrated in FIGS. 54, 55, and 56, the container detection sensors 2310 through 2370 (see FIG. 47) may include infrared sensor modules 2410a, 2410b ... 2470a, and 2470b. In addition, each of the infrared sensor modules 2410a, 2410b ... 2470a, and 2470b may include infrared radiating devices 2410a through 2470a that radiate infrared light, and infrared detectors 2410b through 2470b that detect infrared light.

The infrared radiating devices 2410a through 2470a and the infrared detectors 2410b through 2470b may be installed to face each other on both sides of each of the accommodation spaces 2110 through 2170, as illustrated in FIG. 54. In detail, the infrared radiating devices 2410a through 2470a and the infrared detectors 2410b through 2470b may be installed to face each other in a direction perpendicular to a longitudinal axis of the storage container B.

For example, a first infrared radiating device 2410a may be installed in the first partitioning part 2211 toward the second partitioning part 2212 and a first infrared detector 2410b may be installed in the second partitioning part 2212 toward the first partitioning part 2211 so that the first infrared radiating device 2410a and a first infrared detector 2410b may face each other on both sides of the first accommodation space 2110.

In addition, a second infrared radiating device 2420a may be installed in the second partitioning part 2212 toward the third partitioning part 2213 and a second infrared detector 2420b may be installed in the third partitioning part 2213 toward the second partitioning part 2212 so that the second infrared radiating device 2420a and the second infrared detector 2420b may face each other on both sides of the second accommodation space 2120.

In addition, a third infrared radiating device 2430a may be installed in the third partitioning part 2213 toward the fourth partitioning part 2214 and a third infrared detector 2430b may be installed in the fourth partitioning part 2214 toward the third portioning part 2213 so that the third infrared radiating device 2430a and the third infrared detector 2430b may face each other on both sides of the third accommodation space 2130.

In addition, each of the fourth through seventh infrared radiating devices 2440a through 2470a and each of the fourth through seventh infrared detectors 2440b through 2470b may be installed to face each other on both sides of each of the fourth through seventh accommodation spaces 2140 through 2170.

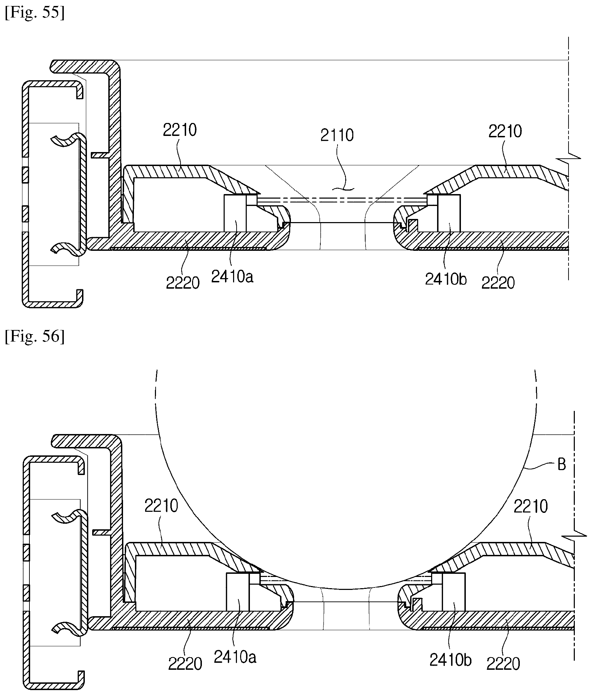

As a result, when the storage container B is not accommodated in each of the accommodation spaces 2110 through 2170, as illustrated in FIG. 55, the infrared detectors 2410b through 2470b may detect infrared light radiated by the infrared radiating devices 2410a through 2470a.

On the other hand, when the storage container B is accommodated in each of the accommodation spaces 2110 through 2170, as illustrated in FIG. 56, the infrared detectors 2410b through 2470b may not detect infrared light radiated by the infrared radiating devices 2410a through 2470a.

In addition, the infrared detectors 2410b through 2470b may output container detection signals indicating that the storage container B is accommodated, or container non-detection signals indicating that the storage container B is not accommodated, depending on whether the infrared light is detected.

For example, when the infrared light radiated by the infrared radiating devices 2410a through 2470a is detected, the infrared detectors 2410b through 2470b may output container detection signals, and when the infrared light radiated by the infrared radiating devices 2410a through 2470a is not detected, the infrared detectors 2410b through 2470b may output container non-detection signals.

As described above, the container detection sensors 2310 through 2370 (see FIG. 47) may include infrared sensor modules 2410a, 2410b ... 2470a, and 2470b. The container detection sensors 2310 through 2370 (see FIG. 47) may detect whether the storage container B is accommodated, depending on whether the infrared light is detected.

However, a medium for detecting the storage container B using the container detection sensors 2310 through 2370 (see FIG. 47) is not limited to the infrared light, and various detection media, such as visible light, a laser beam, and ultrasonic waves, may be used.

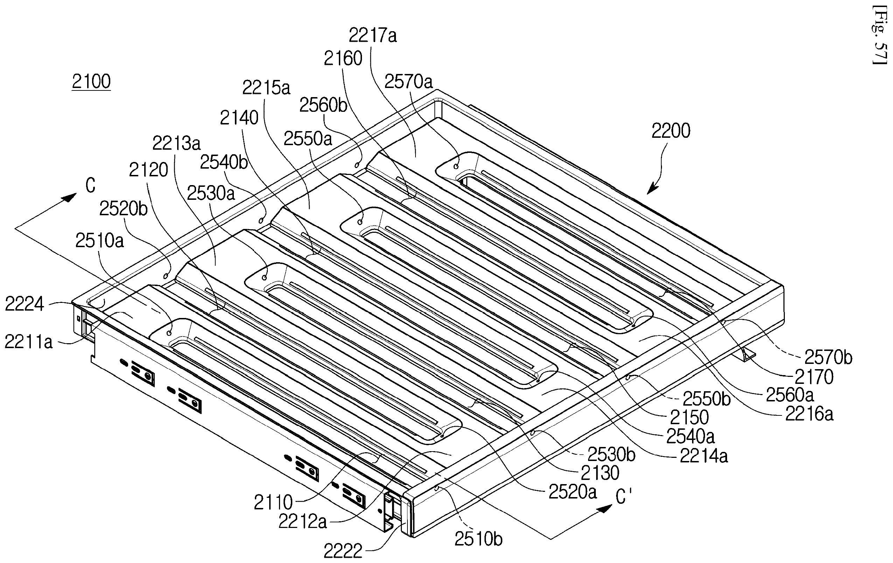

FIG. 57 is a view of still another example of a storage container detection unit included in the shelf assembly illustrated in FIG. 47, and FIGS. 58 and 59 are cross-sectional views taken along line C-C' illustrated in FIG. 57.

As illustrated in FIGS. 57, 58, and 59, the container detection sensors 2310 through 2370 (see FIG. 47) may include infrared sensor modules 2510a, 2510b ... 2570a, and 2570b. In addition, the infrared sensor modules 2510a, 2510b ... 2570a, and 2570b may include infrared radiating devices 2510a through 2570a that radiate infrared light, and infrared detectors 2510b through 2570b that detect the infrared light.

The infrared radiating devices 2510a through 2570a and the infrared detectors 2510b and 2570b may be installed to face each other on both sides of each of the accommodation spaces 2110 through 2170, as illustrated in FIG. 57. In detail, the infrared radiating devices 2510a through 2570a and the infrared detectors 2510b through 2570b may be installed to face each other in the same direction as a direction of the longitudinal axis of the storage container B.

For example, a first infrared radiating device 2510a may be installed in the first connection part 2211a toward the front wall 2222 and a first infrared detector 2510b may be installed in the front wall 2222 toward the first connection part 2211a so that the first infrared radiating device 2510a and the first infrared detector 2510b may face each other on both sides of the first accommodation space 2110.

In addition, a second infrared radiating device 2520a may be installed in the second connection part 2212a toward the rear wall 2224 and a second infrared detector 2520b may be installed in the rear wall 2224 toward the second connection part 2212a so that the second infrared radiating device 2520a and the second infrared detector 2520b may face each other on both sides of the second accommodation space 2120.

In addition, a third infrared radiating device 2530a may be installed in the third connection part 2213a toward the front wall 2222 and a third infrared detector 2530b may be installed in the front wall 2222 toward the third connection part 2213a so that the third infrared radiating device 2530a and the third infrared detector 2530b may face each other on both sides of the third accommodation space 2130.

In addition, a fourth infrared radiating device 2540a may be installed in the fourth connection part 2214a toward the rear wall 2224 and a fourth infrared detector 2540b may be installed in the rear wall 2224 toward the fourth connection part 2214a so that the fourth infrared radiating device 2540a and the fourth infrared detector 2540b may face each other on both sides of the fourth accommodation space 2140.

In addition, each of the fifth through seventh infrared radiating devices 2550a through 2570a and each of the fifth through seventh infrared detectors 2550b through 2570b may be installed to face each other on both sides of each of the fifth through seventh accommodation spaces 2150 through 2170.

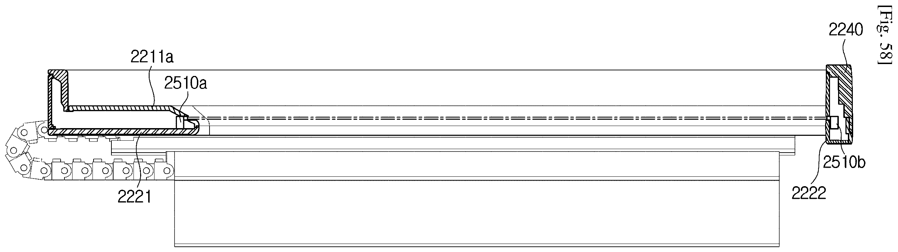

As a result, when the storage container B is not accommodated in the accommodation spaces 2110 through 2170, as illustrated in FIG. 58, the infrared detectors 2510b through 2570b may detect the infrared light radiated by the infrared radiating devices 2510a through 2570a.

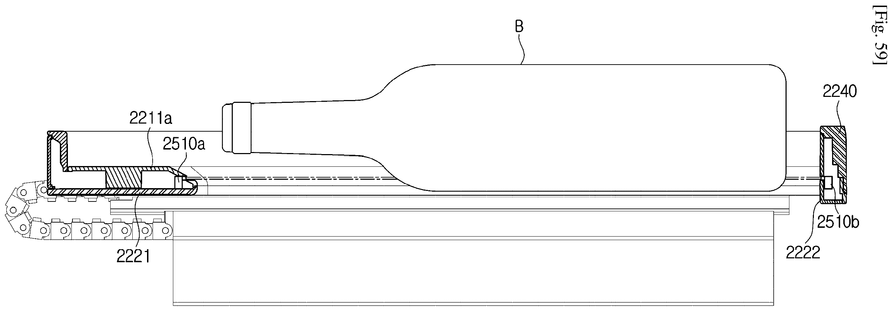

On the other hand, when the storage container B is accommodated in each of the accommodation spaces 2110 through 2170, as illustrated in FIG. 59, the infrared detectors 2410b through 2570b may not detect the infrared light radiated by the infrared radiating devices 2510a through 2470a.

In addition, the infrared detectors 2510b through 2570b may output container detection signals indicating that the storage container B is accommodated, or container non-detection signals that the storage container B is not accommodated, depending on whether the infrared light is detected.

For example, when the infrared light radiated by the infrared radiating devices 2510a through 2570a is detected, the infrared detectors 2510b through 2570b may output container detection signals, and when the infrared light radiated by the infrared radiating devices 2510a through 2570a is not detected, the infrared detectors 2510b through 2570b may output container non-detection signals.

As described above, the container detection sensors 2310 through 2370 (see FIG. 47) may include infrared sensor modules 2510a, 2510b ... 2570a, and 2570b. The container detection sensors 2310 through 2370 (see FIG. 47) may detect whether the storage container B is accommodated, depending on whether the infrared light is detected.

However, a medium for detecting the storage container B using the container detection sensors 2310 through 2370 (see FIG. 47) is not limited to the infrared light, and various detection media, such as visible light, a laser beam, and ultrasonic waves, may be used.

As above, the storage container detection unit 2300 has been described.

Hereinafter, the chain cable 2700 (see FIG. 47) that connects the shelf assembly 2100 and the refrigerator main body 2001 will be described.

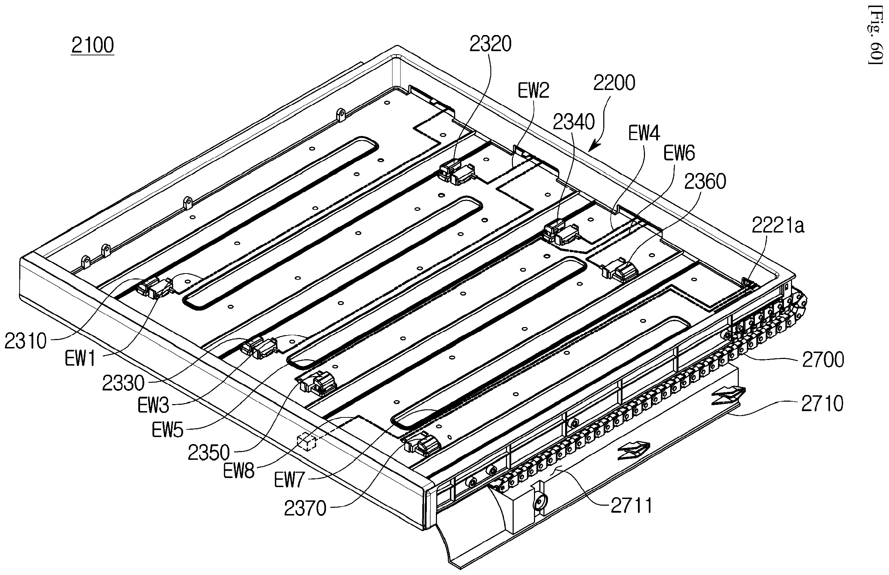

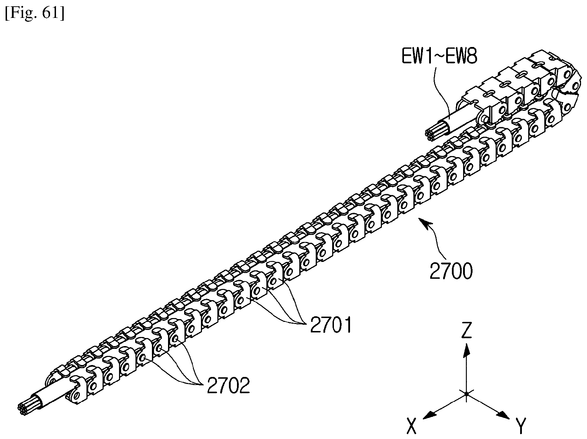

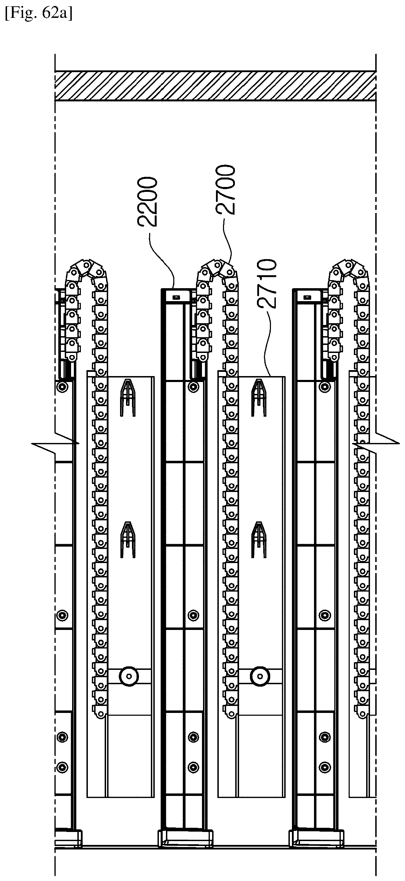

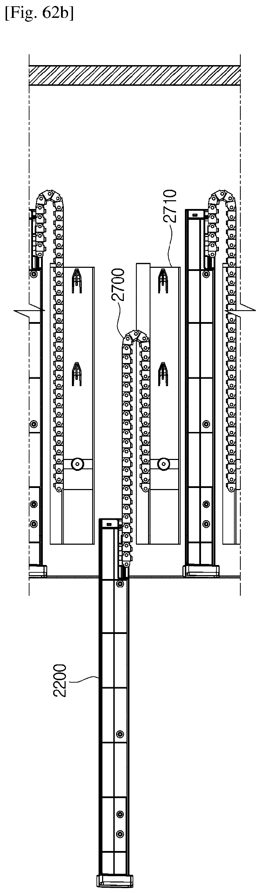

FIG. 60 is a view of the arrangement of electric wires of the shelf assembly illustrated in FIG. 47, and FIG. 61 is a view of a chain cable included in the shelf assembly illustrated in FIG. 47, and FIGS. 62A and 62B are views of the protruding shelf assembly illustrated in FIG. 47.

The container detection sensors 2310 through 2370 of the storage container detection unit 2300 include electric wires EW1 through EW7 for transmitting electrical signals to the control processor (not shown) disposed in the refrigerator main body 2001. In addition, the display unit 2600 includes an electric wire EW8 for receiving the electrical signals from the control processor (not shown) disposed in the refrigerator main body 2001.

A plurality of electric wires EW1 through EW8 for transmitting/receiving the electrical signals are disposed in the mounting space between the upper plate 2210 and the lower plate 2220 of the shelf assembly main body 2200, as illustrated in FIG. 60.

Also, the plurality of electric wires EW1 through EW8 are inserted into the chain cable 2700 through the electric wire through hole 2221a of the lower plate 2220.

The chain cable 2700 is formed by connecting a plurality of chain structures 2701 continuously, and joints 2702 are formed between the plurality of chain structures 2701, as illustrated in FIG. 61. The chain structures 2701 are connected to each other to be pivoted about one axis using the joints 2702. As a result, the chain cable 2700 may be freely moved on an x-z plane illustrated in FIG. 61, but movement of the chain cable 2700 in a y-axis direction is limited. In other words, the chain cable 2700 may be freely moved in a direction in which the shelf assembly 2100 protrudes from or is inserted into the storage compartment 2002. As a result, the chain cable 2700 is expanded in a protruding direction of the shelf assembly 2100 as the shelf assembly 2100 protrudes from the storage compartment 2002, and the chain cable 2700 is contracted in an insertion direction of the shelf assembly 2100 as the shelf assembly 2100 is inserted into the storage compartment 2002. In addition, movement of the chain cable 2700 in a direction perpendicular to the direction in which the shelf assembly 2100 protrudes from or is inserted into the storage compartment 2002, is limited.

In addition, a hollow portion 2701a is formed in each of the plurality of chain structures 2701. The hollow portion 2701a in each of the plurality of chain structures 2701 forms a hollow portion 2700a that passes through the entire chain cable 2700. In addition, the above-described plurality of electric wires EW1 through EW8 are inserted into the hollow portion 2700a of the chain cable 2700. As a result, the plurality of electric wires EW1 through EW8 may be protected from the outside by the chain cable 2700.

In detail, the plurality of electric wires EW1 through EW8 may not become entangled with each other due to the chain cable 2700. Since the plurality of electric wires EW1 through EW8 form a bundle using the chain cable 2700, the plurality of electric wires EW1 through EW8 are prevented from being entangled with each other.

In addition, although the shelf assembly 2100 is moved, the plurality of electric wires EW1 through EW8 are not caught on the shelf assembly main body 2200 or a structure in the storage compartment 2002. As described above, the movement of the plurality of electric wires EW1 through EW8 is limited by the chain cable 2700. Thus, the plurality of electric wires EW1 through EW8 are prevented from being located on a movement path of the shelf assembly 2100. In addition, a part of the electric wires EW1 through EW8 is prevented from being caught on the structure in the storage compartment 2002 while the shelf assembly 2100 is moved.

For example, when the shelf assembly 2100 is inserted into the storage compartment 2002, the chain cable 2700 is disposed under the shelf assembly main body 2200, as illustrated in FIG. 62A. As a result, the plurality of electric wires EW1 through EW8 are also disposed under the shelf assembly main body 2200 and do not interfere with the movement of the shelf assembly main body 2200.

In addition, when the shelf assembly 2100 protrudes from the storage compartment 2002, the chain cable 2700 is disposed behind the shelf assembly main body 2200, as illustrated in FIG. 62B. As a result, the plurality of electric wires EW1 through EW8 are also disposed under the shelf assembly main body 2200 and do not interfere with the movement of the shelf assembly main body 2200.

In addition, since the plurality of electric wires EW1 through EW8 are connected to the refrigerator main body 2001 through sidewalls of the storage compartment 2002, the space of the storage compartment 2002 may be effectively used.

A chain cable cover 2710 is disposed in the vicinity of the chain cable 2700 so as to fix the chain cable 2700 and to protect the chain cable 2700. A chain seating space 2711 may be formed in the chain cable cover 2710, and the chain cable 2700 may be accommodated in the chain seating space 2711 of the chain cable cover 2710.

In detail, one end of the chain cable 2700 is fixed to the shelf assembly main body 2200, and the other end of the chain cable 2700 is fixed to the chain cable cover 2710. In other words, the chain cable cover 2710 fixes the chain cable 2700 when the shelf assembly main body 2100 is loaded/unloaded into/from the storage compartment 2002.

In addition, the chain cable cover 2710 prevents the chain cable 2700 from being exposed to the outside and prevents the chain cable 2700 from sagging downward due to gravity.

In particular, the chain cable cover 2710 may limit the movement of the chain cable 2700 so that the chain cable 2700 may be disposed in a predetermined range when the shelf assembly main body 2100 is loaded/unloaded into/from the storage compartment 2002.

For example, when the shelf assembly 2100 protrudes from the storage compartment 2002, as illustrated in FIG. 62B, at least a part of the chain cable 2700 is seated in the chain seating space 2711 of the chain cable cover 2710, and a part of the remaining portion of the chain cable 2700 is disposed at an upper side of the chain seating space 2711.

In this case, when the shelf assembly 2100 is inserted into the storage compartment 2002, the chain cable 2700 are sequentially seated in the chain seating space 2710. In addition, when the shelf assembly 2100 is fully inserted into the storage compartment 2002, as illustrated in FIG. 62A, the chain cable 2700 is seated in the chain seating space 2711 of the chain cable cover 2710.

As described above, the movement of the chain cable 2700 is limited by the chain cable cover 2710, and the range of movement of the plurality of electric wires EW1 through EW8 is limited by the chain cable 2700.

By using the chain cable 2700, the plurality of electric wires EW1 through EW8 are prevented from being freely moved, and the movement of the shelf assembly 2100 is prevented from being interfered with by the plurality of electric wires EW1 through EW8. In addition, by using the chain cable 2700, the plurality of electric wires EW1 through EW8 are prevented from being disconnected.

While the invention has been shown and described with reference to certain exemplary embodiments thereof, it will be understood by those skilled in the art that various changes in form and details may be made therein without departing from the scope of the invention as defined by the appended claims.

## Claims

1. A refrigerator comprising:
a storage compartment (102, 2002) including a shelf assembly (900a to 900d, 2100) withdrawably disposed in the storage compartment (102, 2002), a plurality of accommodation spaces (951a to 958a, 2110 to 2170) being formed on the shelf assembly (900a to 900d, 2100);
a plurality of detectors (151a to 158a, 2310 to 2370), each of which is disposed on one of the plurality of accommodation spaces (951a to 958a, 2110 to 2170) to detect whether the one of the plurality of accommodation spaces (951a to 958a, 2110 to 2170) is occupied;
a plurality of indicators (171a to 178a, 2610 to 2670), each of which is disposed on a front plate (2222) of the shelf assembly (900a to 900d, 2100) to display whether the one of the plurality of accommodation spaces (951a to 958a, 2110 to 2170) is occupied; and
a controller (110) configured to turn on at least one indicator (171a to 178a, 2610 to 2670) corresponding to at least one accommodation space (951a to 958a, 2110 to 2170), based on a result of detection of the plurality of detectors (151a to 158a, 2310 to 2370),
wherein, in response to a user input for unloading a storage container from a first accommodation space among the plurality of accommodation spaces (951a to 958a, 2110 to 2170), the controller (110) is configured to turn on a first indicator among the plurality of indicators (171a to 178a, 2610 to 2670),
**characterized in that**:
in response to a user input for reloading the storage container which is unloaded from the first accommodation space, the controller (110) is configured to turn on the first indicator of the first accommodation space.

2. The refrigerator of claim 1, further comprising a communication unit (180) that communicates with an external device (200),
wherein the controller (110) is configured to turn on at least one indicator (171a to 178a, 2610 to 2670) representing at least one accommodation space (951a to 958a, 2110 to 2170), in which a new storage container is capable of being accommodated, based on information about the food item received from the external device (200).

3. The refrigerator of claim 2, wherein the plurality of indicators (171a to 178a, 2610 to 2670) comprises a plurality of light-emitting diodes (171a to 178a, 2610 to 2670) installed in positions corresponding to the plurality of accommodation spaces (951a to 958a, 2110 to 2170) on the front plate (2222) of the shelf assembly (900a to 900d, 2100), and
the controller (110) is configured to turn on a light-emitting diode (171a to 178a, 2610 to 2670) installed in a position corresponding to the accommodation space (951a to 958a, 2110 to 2170) in which the new storage container is capable of being accommodated.

4. The refrigerator of claim 2, wherein, when the new storage container is accommodated, the controller (110) is configured to transmit information regarding the accommodation space (951a to 958a, 2110 to 2170) in which the new storage container is accommodated, to the external device (200).

5. The refrigerator of claim 1, further comprising a communication unit (180) that communicates with an external device (200),
wherein the controller (110) is configured to turn on at least one indicator (171a to 178a, 2610 to 2670) representing at least one accommodation space (951a to 958a, 2110 to 2170) in which a selected storage container, is accommodated, based on information about the food item received from the external device (200).

6. The refrigerator of claim 5, wherein the plurality of indicators (171a to 178a, 2610 to 2670) comprises a plurality of light-emitting diodes (171a to 178a, 2610 to 2670) installed in positions corresponding to the plurality of accommodation spaces (951a to 958a, 2110 to 2170) on the front plate (2222) of the shelf assembly (900a to 900d, 2100), and
the controller (110) is configured to turn on a light-emitting diode (171a to 178a, 2610 to 2670) installed in a position corresponding to the accommodation space, in which the selected storage container is accommodated.

7. The refrigerator of claim 5, wherein, when the selected storage container accommodated in the accommodation space (951a to 958a, 2110 to 2170) is unloaded, the controller (110) is configured to transmit information regarding the accommodation space from which the selected storage container is unloaded, to the external device (200).

8. The refrigerator of claim 1, wherein the plurality of detectors (151a to 158a, 2310 to 2370) comprises a plurality of micro-switches (151a to 158a), each of which is installed in one of the plurality of accommodation spaces (951a to 958a, 2110 to 2170).

9. The refrigerator of claim 1, wherein the plurality of detectors (151a to 158a, 2310 to 2370) comprises a plurality of infrared sensors (2410a, 2410b to 2470a, 2470b) each of which is installed in one of the plurality of accommodation spaces (951a to 958a, 2110 to 2170).

10. The refrigerator of claim 1, further comprising an image acquisition unit (140) that acquires an image,
wherein, when an image of the storage container is acquired by the image acquisition unit, the controller (110) identifies the food item stored in the storage container based on the acquired image.

11. A method of controlling a refrigerator comprising a storage compartment (102, 2002) including a shelf assembly (900a to 900d, 2100) withdrawably disposed in the storage compartment (102, 2002), a plurality of accommodation spaces (951a to 958a, 2110 to 2170) being formed on shelf assembly (900a to 900d, 2100), the method comprising:
identifying a food item stored in a storage container based on a label of the storage container;
detecting, by a plurality of detectors (151a to 158a, 2310 to 2370) each of which is disposed on one of the plurality of accommodation spaces (951a to 958a, 2110 to 2170), whether the one of the plurality of accommodation spaces (951a to 958a, 2110 to 2170) is occupied;
displaying, by a plurality of indicators (171a to 178a, 2610 to 2670), each of which is disposed on a front plate (2222) of the shelf assembly (900a to 900d, 2100), whether the one of the plurality of accommodation spaces (951a to 958a, 2110 to 2170) is occupied; and
turning on, by a controller (110), at least one indicator (171a to 178a, 2610 to 2670) corresponding to at least one accommodation space (951a to 958a, 2110 to 2170), based on the detection of the plurality of detectors (151a to 158a, 2310 to 2370),
wherein the turning on the at least one indicator (171a to 178a, 2610 to 2670) comprises:
in response to a user input for unloading a storage container from a first accommodation space among the plurality of accommodation spaces (951a to 958a, 2110 to 2170), turning on a first indicator among the plurality of indicators (171a to 178a, 2610 to 2670), and
**characterized by**, in response to a user input for reloading the storage container which is unloaded from the first accommodation space, turning on the first indicator of first accommodation space.

12. The method of claim 11, wherein the plurality of detectors (151a to 158a, 2310 to 2370) comprises a plurality of micro-switches (151a to 158a), each of which is installed on one of the plurality of accommodation spaces (951a to 958a, 2110 to 2170).

13. The method of claim 11, wherein the plurality of indicators (171a to 178a, 2610 to 2670) comprises a plurality of light-emitting diodes (171a to 178a, 2610 to 2670), each of which is installed on one of the plurality of accommodation spaces (951a to 958a, 2110 to 2170).

14. The method of claim 11, wherein the identifying of the food item stored in the storage container comprises:
transmitting an image of the storage container to an external device (200); and
receiving identification information about the food item from the external device (200).

## Patentansprüche

1. Kühlschrank, der Folgendes umfasst:
ein Aufbewahrungsfach (102, 2002), umfassend eine Regalanordnung (900a bis 900d, 2100), die ausziehbar in dem Aufbewahrungsfach (102, 2002) angeordnet ist, wobei eine Vielzahl von Aufnahmeplätzen (951a bis 958a, 2110 bis 2170) auf der Regalanordnung (900a bis 900d, 2100) gebildet ist;
eine Vielzahl von Detektoren (151a bis 158a, 2310 bis 2370), die jeweils auf einem der Vielzahl von Aufnahmeplätzen (951a bis 958a, 2110 bis 2170) angeordnet sind, um zu erfassen, ob der eine der Vielzahl von Aufnahmeplätzen (951a bis 958a, 2110 bis 2170) besetzt ist;
eine Vielzahl von Anzeigen (171a bis 178a, 2610 bis 2670), die jeweils auf einer Frontplatte (2222) der Regalanordnung (900a bis 900d, 2100) angeordnet sind, um anzuzeigen, ob der eine der Vielzahl von Aufnahmeplätzen (951a bis 958a, 2110 bis 2170) besetzt ist; und
eine Steuerung (110), die dazu konfiguriert ist, mindestens eine Anzeige (171a bis 178a, 2610 bis 2670), die mindestens einem Aufnahmeplatz (951a bis 958a, 2110 bis 2170) entspricht, basierend auf einem Resultat des Erfassens der Vielzahl von Detektoren (151a bis 158a, 2310 bis 2370) einzuschalten,
wobei, als Reaktion auf eine Benutzereingabe zum Entnehmen eines Aufbewahrungsbehälters aus einem ersten Aufnahmeplatz unter der Vielzahl von Aufnahmeplätzen (951a bis 958a, 2110 bis 2170), die Steuerung (110) dazu konfiguriert ist, eine erste Anzeige unter der Vielzahl von Anzeigen (171a bis 178a, 2610 bis 2670) einzuschalten,
**dadurch gekennzeichnet, dass**:
als Reaktion auf eine Benutzereingabe zum erneuten Einlegen des Aufbewahrungsbehälters, der aus dem ersten Aufnahmeplatz entnommen ist, die Steuerung (110) dazu konfiguriert ist, die erste Anzeige des ersten Aufnahmeplatzes einzuschalten.

2. Kühlschrank nach Anspruch 1, ferner umfassend eine Kommunikationseinheit (180), die mit einer externen Vorrichtung (200) kommuniziert,
wobei die Steuerung (110) dazu konfiguriert ist, basierend auf von der externen Vorrichtung (200) her empfangenen Informationen über den Nahrungsmittelartikel mindestens eine Anzeige (171a bis 178a, 2610 bis 2670) einzuschalten, die mindestens einen Aufnahmeplatz (951a bis 958a, 2110 bis 2170) repräsentiert, in dem ein neuer Aufbewahrungsbehälter aufgenommen werden kann.

3. Kühlschrank nach Anspruch 2, wobei die Vielzahl von Anzeigen (171a bis 178a, 2610 bis 2670) eine Vielzahl von Leuchtdioden (171a bis 178a, 2610 bis 2670) umfasst, die in Positionen auf der Frontplatte (2222) der Regalanordnung (900a bis 900d, 2100) installiert sind, die der Vielzahl von Aufnahmeplätzen (951a bis 958a, 2110 bis 2170) entsprechen, und
die Steuerung (110) dazu konfiguriert ist, eine Leuchtdiode (171a bis 178a, 2610 bis 2670) einzuschalten, die in einer Position installiert ist, die dem Aufnahmeplatz (951a bis 958a, 2110 bis 2170) entspricht, in dem der neue Aufbewahrungsbehälter aufgenommen werden kann.

4. Kühlschrank nach Anspruch 2, wobei, wenn der neue Aufbewahrungsbehälter aufgenommen wird, die Steuerung (110) dazu konfiguriert ist, Informationen zu der externen Vorrichtung (200) zu übertragen, die den Aufnahmeplatz (951a bis 958a, 2110 bis 2170) betreffen, in dem der neue Aufbewahrungsbehälter aufgenommen wird.

5. Kühlschrank nach Anspruch 1, ferner umfassend eine Kommunikationseinheit (180), die mit einer externen Vorrichtung (200) kommuniziert,
wobei die Steuerung (110) dazu konfiguriert ist, basierend auf von der externen Vorrichtung (200) her empfangenen Informationen über den Nahrungsmittelartikel mindestens eine Anzeige (171a bis 178a, 2610 bis 2670) einzuschalten, die mindestens einen Aufnahmeplatz (951a bis 958a, 2110 bis 2170) repräsentiert, in dem ein ausgewählter Aufbewahrungsbehälter aufgenommen ist.

6. Kühlschrank nach Anspruch 5, wobei die Vielzahl von Anzeigen (171a bis 178a, 2610 bis 2670) eine Vielzahl von Leuchtdioden (171a bis 178a, 2610 bis 2670) umfasst, die in Positionen auf der Frontplatte (2222) der Regalanordnung (900a bis 900d, 2100) installiert sind, die der Vielzahl von Aufnahmeplätzen (951a bis 958a, 2110 bis 2170) entsprechen, und
die Steuerung (110) dazu konfiguriert ist, eine Leuchtdiode (171a bis 178a, 2610 bis 2670) einzuschalten, die in einer Position installiert ist, die dem Aufnahmeplatz entspricht, in dem der ausgewählte Aufbewahrungsbehälter aufgenommen ist.

7. Kühlschrank nach Anspruch 5, wobei, wenn der in dem Aufnahmeplatz (951a bis 958a, 2110 bis 2170) aufgenommene ausgewählte Aufbewahrungsbehälter entnommen wird, die Steuerung (110) dazu konfiguriert ist, Informationen zu der externen Vorrichtung (200) zu übertragen, die den Aufnahmeplatz betreffen, aus dem der ausgewählte Aufbewahrungsbehälter entnommen wird.

8. Kühlschrank nach Anspruch 1, wobei die Vielzahl von Detektoren (151a bis 158a, 2310 bis 2370) eine Vielzahl von Mikroschaltern (151a bis 158a) umfasst, die jeweils in einem der Vielzahl von Aufnahmeplätzen (951a bis 958a, 2110 bis 2170) installiert sind.

9. Kühlschrank nach Anspruch 1, wobei die Vielzahl von Detektoren (151a bis 158a, 2310 bis 2370) eine Vielzahl von Infrarotsensoren (2410a, 2410b bis 2470a, 2470b) umfasst, die jeweils in einem der Vielzahl von Aufnahmeplätzen (951a bis 958a, 2110 bis 2170) installiert sind.

10. Kühlschrank nach Anspruch 1, ferner umfassend eine Bilderfassungseinheit (140), die ein Bild erfasst,
wobei, wenn ein Bild des Aufbewahrungsbehälters von der Bilderfassungseinheit erfasst wird, die Steuerung (110) den in dem Aufbewahrungsbehälter aufbewahrten Nahrungsmittelartikel basierend auf dem erfassten Bild identifiziert.

11. Verfahren zum Steuern eines Kühlschranks, der ein Aufbewahrungsfach (102, 2002) umfasst, das eine Regalanordnung (900a bis 900d, 2100) umfasst, die ausziehbar in dem Aufbewahrungsfach (102, 2002) angeordnet ist, wobei eine Vielzahl von Aufnahmeplätzen (951a bis 958a, 2110 bis 2170) auf der Regalanordnung (900a bis 900d, 2100) gebildet ist, wobei das Verfahren Folgendes umfasst:
Identifizieren eines in einem Aufbewahrungsbehälter aufbewahrten Nahrungsmittelartikels basierend auf einem Etikett des Aufbewahrungsbehälters;
Erfassen, durch eine Vielzahl von Detektoren (151a bis 158a, 2310 bis 2370), die jeweils auf einem der Vielzahl von Aufnahmeplätzen (951a bis 958a, 2110 bis 2170) angeordnet sind, ob der eine der Vielzahl von Aufnahmeplätzen (951a bis 958a, 2110 bis 2170) besetzt ist;
Anzeigen, durch eine Vielzahl von Anzeigen (171a bis 178a, 2610 bis 2670), die jeweils auf einer Frontplatte (2222) der Regalanordnung (900a bis 900d, 2100) angeordnet sind, ob der eine der Vielzahl von Aufnahmeplätzen (951a bis 958a, 2110 bis 2170) besetzt ist; und
Einschalten, durch eine Steuerung (110), mindestens einer Anzeige (171a bis 178a, 2610 bis 2670), die mindestens einem Aufnahmeplatz (951a bis 958a, 2110 bis 2170) entspricht, basierend auf dem Erfassen der Vielzahl von Detektoren (151a bis 158a, 2310 bis 2370),
wobei das Einschalten der mindestens einen Anzeige (171a bis 178a, 2610 bis 2670) Folgendes umfasst:
als Reaktion auf eine Benutzereingabe zum Entnehmen eines Aufbewahrungsbehälters aus einem ersten Aufnahmeplatz unter der Vielzahl von Aufnahmeplätzen (951a bis 958a, 2110 bis 2170), Einschalten einer ersten Anzeige unter der Vielzahl von Anzeigen (171a bis 178a, 2610 bis 2670), und
**gekennzeichnet durch**, als Reaktion auf eine Benutzereingabe zum erneuten Einlegen des Aufbewahrungsbehälters, der aus dem ersten Aufnahmeplatz entnommen ist, Einschalten der ersten Anzeige des ersten Aufnahmeplatzes.

12. Verfahren nach Anspruch 11, wobei die Vielzahl von Detektoren (151a bis 158a, 2310 bis 2370) eine Vielzahl von Mikroschaltern (151a bis 158a) umfasst, die jeweils an einem der Vielzahl von Aufnahmeplätzen (951a bis 958a, 2110 bis 2170) installiert sind.

13. Verfahren nach Anspruch 11, wobei die Vielzahl von Anzeigen (171a bis 178a, 2610 bis 2670) eine Vielzahl von Leuchtdioden (171a bis 178a, 2610 bis 2670) umfasst, die jeweils an einem der Vielzahl von Aufnahmeplätzen (951a bis 958a, 2110 bis 2170) installiert sind.

14. Verfahren nach Anspruch 11, wobei das Identifizieren des in dem Aufbewahrungsbehälter aufbewahrten Nahrungsmittelartikels Folgendes umfasst:
Übertragen eines Bilds des Aufbewahrungsbehälters zu einer externen Vorrichtung (200); und
Empfangen von Identifizierungsinformationen über den Nahrungsmittelartikel von der externen Vorrichtung (200).

## Revendications

1. Réfrigérateur comportant :
un compartiment de stockage (102, 2002) comprenant un ensemble formant étagère (900a à 900d, 2100) disposé avec possibilité de retrait dans le compartiment de stockage (102, 2002), une pluralité d'espaces de réception (951a à 958a, 2110 à 2170) étant formés sur l'ensemble formant étagère (900a à 900d, 2100) ;
une pluralité de détecteurs (151a à 158a, 2310 à 2370), chacun d'entre eux étant disposé sur un espace de la pluralité d'espaces de réception (951a à 958a, 2110 à 2170) pour détecter si ledit un espace de la pluralité d'espaces de réception (951a à 958a, 2110 à 2170) est occupé ;
une pluralité d'indicateurs (171a à 178a, 2610 à 2670), chacun d'entre eux étant disposé sur une plaque avant (2222) de l'ensemble formant étagère (900a à 900d, 2100) pour afficher si ledit un espace de la pluralité d'espaces de réception (951a à 958a, 2110 à 2170) est occupé ; et
un dispositif de commande (110) configuré pour allumer au moins un indicateur (171a à 178a, 2610 à 2670) correspondant à au moins un espace de réception (951a à 958a, 2110 à 2170), en fonction d'un résultat de détection de la pluralité de détecteurs (151a à 158a, 2310 à 2370),
dans lequel, en réponse à une entrée d'utilisateur servant à des fins de déchargement d'un contenant de stockage en provenance d'un premier espace de réception parmi la pluralité d'espaces de réception (951a à 958a, 2110 à 2170), le dispositif de commande (110) est configuré pour allumer un premier indicateur parmi la pluralité d'indicateurs (171a à 178a, 2610 à 2670),
**caractérisé en ce que** :
en réponse à une entrée d'utilisateur servant à des fins de rechargement du contenant de stockage qui est déchargé en provenance du premier espace de réception, le dispositif de commande (110) est configuré pour allumer le premier indicateur du premier espace de réception.

2. Réfrigérateur selon la revendication 1, comportant par ailleurs une unité de communication (180) qui communique avec un dispositif externe (200),
dans lequel le dispositif de commande (110) est configuré pour allumer au moins un indicateur (171a à 178a, 2610 à 2670) représentant au moins un espace de réception (951a à 958a, 2110 à 2170), dans lequel un nouveau contenant de stockage est en mesure d'être reçu, en fonction d'informations se rapportant au produit alimentaire reçues en provenance du dispositif externe (200).

3. Réfrigérateur selon la revendication 2, dans lequel la pluralité d'indicateurs (171a à 178a, 2610 à 2670) comporte une pluralité de diodes électroluminescentes (171a à 178a, 2610 à 2670) installées dans des positions correspondant à la pluralité d'espaces de réception (951a à 958a, 2110 à 2170) sur la plaque avant (2222) de l'ensemble formant étagère (900a à 900d, 2100), et
le dispositif de commande (110) est configuré pour allumer une diode électroluminescente (171a à 178a, 2610 à 2670) installée dans une position correspondant à l'espace de réception (951a à 958a, 2110 à 2170) dans lequel le nouveau contenant de stockage est en mesure d'être reçu.

4. Réfrigérateur selon la revendication 2, dans lequel, quand le nouveau contenant de stockage est reçu, le dispositif de commande (110) est configuré pour transmettre des informations se rapportant à l'espace de réception (951a à 958a, 2110 à 2170) dans lequel le nouveau contenant de stockage est reçu, au dispositif externe (200).

5. Réfrigérateur selon la revendication 1, comportant par ailleurs une unité de communication (180) qui communique avec un dispositif externe (200),
dans lequel le dispositif de commande (110) est configuré pour allumer au moins un indicateur (171a à 178a, 2610 à 2670) représentant au moins un espace de réception (951a à 958a, 2110 à 2170) dans lequel un contenant de stockage sélectionné est reçu, en fonction d'informations se rapportant au produit alimentaire reçues en provenance du dispositif externe (200).

6. Réfrigérateur selon la revendication 5, dans lequel la pluralité d'indicateurs (171a à 178a, 2610 à 2670) comporte une pluralité de diodes électroluminescentes (171a à 178a, 2610 à 2670) installées dans des positions correspondant à la pluralité d'espaces de réception (951a à 958a, 2110 à 2170) sur la plaque avant (2222) de l'ensemble formant étagère (900a à 900d, 2100), et
le dispositif de commande (110) est configuré pour allumer une diode électroluminescente (171a à 178a, 2610 à 2670) installée dans une position correspondant à l'espace de réception, dans lequel le contenant de stockage sélectionné est reçu.

7. Réfrigérateur selon la revendication 5, dans lequel, quand le contenant de stockage sélectionné reçu dans l'espace de réception (951a à 958a, 2110 à 2170) est déchargé, le dispositif de commande (110) est configuré pour transmettre des informations se rapportant à l'espace de réception en provenance duquel le contenant de stockage sélectionné est déchargé, au dispositif externe (200).

8. Réfrigérateur selon la revendication 1, dans lequel la pluralité de détecteurs (151a à 158a, 2310 à 2370) comporte une pluralité de microrupteurs (151a à 158a), chacun d'entre eux étant installé dans un espace de la pluralité d'espaces de réception (951a à 958a, 2110 à 2170).

9. Réfrigérateur selon la revendication 1, dans lequel la pluralité de détecteurs (151a à 158a, 2310 à 2370) comporte une pluralité de capteurs infra-rouges (2410a, 2410b à 2470a, 2470b), chacun d'entre eux étant installé dans un espace de la pluralité d'espaces de réception (951a à 958a, 2110 à 2170).

10. Réfrigérateur selon la revendication 1, comportant par ailleurs une unité d'acquisition d'image (140) qui acquiert une image,
dans lequel, quand une image du contenant de stockage est acquise par l'unité d'acquisition d'image, le dispositif de commande (110) identifie le produit alimentaire stocké dans le contenant de stockage en fonction de l'image acquise.

11. Procédé de commande d'un réfrigérateur comportant un compartiment de stockage (102, 2002) comprenant un ensemble formant étagère (900a à 900d, 2100) disposé avec possibilité de retrait dans le compartiment de stockage (102, 2002), une pluralité d'espaces de réception (951a à 958a, 2110 à 2170) étant formés sur l'ensemble formant étagère (900a à 900d, 2100), le procédé comportant les étapes consistant à :
identifier un produit alimentaire stocké dans un contenant de stockage en fonction d'une étiquette du contenant de stockage ;
détecter, par une pluralité de détecteurs (151a à 158a, 2310 à 2370), chacun d'entre eux étant disposé sur un espace de la pluralité d'espaces de réception (951a à 958a, 2110 à 2170), si ledit un espace de la pluralité d'espaces de réception (951a à 958a, 2110 à 2170) est occupé ;
afficher, par une pluralité d'indicateurs (171a à 178a, 2610 à 2670), chacun d'entre eux étant disposé sur une plaque avant (2222) de l'ensemble formant étagère (900a à 900d, 2100), si ledit un espace de la pluralité d'espaces de réception (951a à 958a, 2110 à 2170) est occupé ; et
allumer, par un dispositif de commande (110), au moins un indicateur (171a à 178a, 2610 à 2670) correspondant à au moins un espace de réception (951a à 958a, 2110 à 2170), en fonction de la détection de la pluralité de détecteurs (151a à 158a, 2310 à 2370),
dans lequel l'étape consistant à allumer ledit au moins un indicateur (171a à 178a, 2610 à 2670) comporte :
en réponse à une entrée d'utilisateur servant à des fins de déchargement d'un contenant de stockage en provenance d'un premier espace de réception parmi la pluralité d'espaces de réception (951a à 958a, 2110 à 2170), l'étape consistant à allumer un premier indicateur parmi la pluralité d'indicateurs (171a à 178a, 2610 à 2670), et
**caractérisé par**, en réponse à une entrée d'utilisateur servant à des fins de rechargement du contenant de stockage qui est déchargé en provenance du premier espace de réception, l'étape consistant à allumer le premier indicateur du premier espace de réception.

12. Procédé selon la revendication 11, dans lequel la pluralité de détecteurs (151a à 158a, 2310 à 2370) comporte une pluralité de microrupteurs (151a à 158a), chacun d'entre eux étant installé sur un espace de la pluralité d'espaces de réception (951a à 958a, 2110 à 2170).

13. Procédé selon la revendication 11, dans lequel la pluralité d'indicateurs (171a à 178a, 2610 à 2670) comporte une pluralité de diodes électroluminescentes (171a à 178a, 2610 à 2670), chacune étant installée sur un espace de la pluralité d'espaces de réception (951a à 958a, 2110 à 2170).

14. Procédé selon la revendication 11, dans lequel l'étape consistant à identifier le produit alimentaire stocké dans le contenant de stockage comporte les étapes consistant à :
transmettre une image du contenant de stockage à un dispositif externe (200) ; et
recevoir des informations d'identification se rapportant au produit alimentaire en provenance du dispositif externe (200).
